# EUROPEAN PATENT APPLICATION

(11) **EP 4 761 366 A1**
(43) Date of publication of application: **17.06.2026**
(21) Application number: 24867504.3
(22) Date of filing: 19.09.2024
(51) Int. Cl.: H04W 36/14

(54) **COMMUNICATION METHOD, SYSTEM AND APPARATUS**

(30) Priority: 20.09.2023 CN 202311225980
(71) Applicant: HUAWEI TECHNOLOGIES CO., LTD., Shenzhen 518129 (CN)
(72) Inventor: CHEN, Zehao, Shenzhen, Guangdong 518129 (CN); LI, Yongcui, Shenzhen, Guangdong 518129 (CN)
(74) Representative: Isarpatent
(86) International application number: PCT/CN2024/119741
(87) International publication number: WO 2025/061098

(57) **Abstract**

A communication method, a system, and an apparatus are provided. In technical solutions provided in this application, a first access network device sends a handover request message about a terminal to a second access network device based on first handover time information, where the first handover time information includes corresponding time for serving the terminal by at least one access network device; and after receiving the handover request message, the second access network device communicates with a user plane function network element based on the handover request message and core network tunnel information that is of the terminal and that has been stored in the second access network device. In this way, signaling exchange related to the core network tunnel information between the second access network device and a core network device is reduced, and handover efficiency of performing a handover procedure by the terminal is improved.

## Description

This application claims priority to Chinese Patent Application No. 202311225980.0, filed with the China National Intellectual Property Administration on September 20, 2023 and entitled "COMMUNICATION METHOD, SYSTEM, AND APPARATUS", which is incorporated herein by reference in its entirety.

### TECHNICAL FIELD

This application relates to the field of wireless communication technologies, and in particular, to a communication method, a system, and an apparatus.

### BACKGROUND

In a scenario in which a satellite communication mode is a regenerative transmission mode, a base station or some base station functions are deployed on a satellite, and signaling exchange and user data transmission between base stations may be completed between satellites.

Generally, even if a user equipment (user equipment, UE) does not move, with flight of the satellite, a coverage area (or signal strength or the like) of a radio signal provided by a radio access network (radio access network, RAN) deployed on the satellite changes, and a handover procedure of the UE is triggered. In other words, the UE is handed over from accessing a source access network device to accessing a target access network device. However, a core network serves a large quantity of UEs, a low earth orbit satellite moves at a high speed, and each UE is frequently handed over to different target access network devices. As a result, information about the UE is frequently transmitted between an access network device and a core network device. How to improve handover efficiency becomes an urgent problem to be resolved in this scenario.

### SUMMARY

This application provides a communication method, a system, and an apparatus, to improve handover efficiency of a handover procedure frequently triggered by a terminal.

According to a first aspect, this application provides a communication method. The method is applied to a second access network device, and the method includes: receiving a handover request message from a first access network device, where the handover request message is used to request to hand over a terminal to the second access network device; and communicating with a user plane function network element based on the handover request message and core network tunnel information that is of the terminal and that has been stored by the second access network device.

In this embodiment of this application, after receiving the handover request message for the terminal, the second access network device communicates with the UPF based on the core network tunnel information that is of the terminal and that has been stored by the second access network device, to reduce signaling exchange about the core network tunnel information between the second access network device and a core network device. For example, a procedure in which the second access network device requests and waits for the UPF to allocate core network tunnel information to the terminal in a handover procedure is omitted, thereby improving handover efficiency of frequently performing the handover procedure by the terminal.

In a possible implementation, before the receiving the handover request message from the first access network device, the method further includes: receiving the core network tunnel information of the terminal, and storing the core network tunnel information.

In a possible implementation, the receiving the core network tunnel information of the terminal includes: receiving the core network tunnel information of the terminal from the first access network device, where the core network tunnel information of the terminal is core network tunnel information allocated to the terminal by the user plane function network element that is requested by the first access network device, the core network tunnel information is used to establish a tunnel between the second access network device and the user plane function network element, and the tunnel is used to carry data of the terminal. Alternatively, the receiving the core network tunnel information of the terminal includes: receiving the core network tunnel information of the terminal from a session management function network element, where the core network tunnel information of the terminal is allocated by the user plane function network element for establishment of a tunnel for the terminal between the second access network device and the user plane function network element when the terminal previously accesses the second access network device.

In a possible implementation, after the receiving the handover request message from the first access network device, the method further includes: sending a path switch message to an access and mobility management function network element if the second access network device does not store the core network tunnel information of the terminal or the second access network device does not allocate access network tunnel information to the terminal, where the path switch message is used to switch a path corresponding to the terminal.

For example, switching the path corresponding to the terminal may be switching a tunnel of a GPRS user plane part (user plane part of GTP, GTP-U) of a session of the terminal from a tunnel that is from the first access network device to a user plane function network element (UPF) to a tunnel that is from the second access network device to a UPF. The UPF corresponding to the first access network device may be the same as or different from the UPF corresponding to the second access network device. This is not limited in this specification.

Specifically, the path switch message may be used to trigger the access and mobility management function network element (AMF) to request, through the session management network element (SMF), the UPF to allocate the core network tunnel information to the terminal. The core network tunnel information is used to establish the tunnel used to carry the data of the terminal between the second access network device and the user plane function network element. In some other possible implementations, the path switch message carries a terminal identifier allocated by the second access network device to the terminal, the path switch message is further used to trigger the AMF to update a second identifier of the terminal, and the second identifier is a private terminal identifier that is stored in the AMF, allocated by an access network device currently accessed by the terminal to the terminal, and used to identify the terminal between the AMF and the access network device.

In a possible implementation, after the receiving the handover request message from the first access network device, the method further includes: skipping sending a path switch message to an access and mobility management function network element if the second access network device has stored the core network tunnel information of the terminal and the second access network device has allocated access network tunnel information to the terminal, where the path switch message is used to switch a path corresponding to the terminal.

In a possible implementation, the method further includes: allocating the access network tunnel information to the terminal; and sending the access network tunnel information to the access and mobility management function network element.

In this embodiment of this application, when the second access network device is in a connected mode or an idle mode with the terminal, the second access network device may send, to the AMF, the access network tunnel information allocated by the second access network device to the terminal. That the second access network device is in the connected mode with the terminal means that the terminal accesses the second access network device, and that the second access network device is in the idle mode with the terminal means that the terminal does not access the terminal.

In a possible implementation, before the receiving the handover request message from the first access network device, the method further includes: receiving a first request, where the first request is used to request to allocate access network tunnel information to the terminal; allocating the access network tunnel information to the terminal based on the first request; and sending a first response, where the first response carries the access network tunnel information.

In a possible implementation, the first response further carries an identifier of the second access network device.

In a possible implementation, the first request includes identification information of a first session of the terminal, and the first request is specifically used to request to allocate the access network tunnel information to the first session.

In a possible implementation, the first request is from the first access network device, and the sending the first response includes: sending the first response to the first access network device, where the first response includes the access network tunnel information and first indication information, and the first indication information indicates the first access network device to send the access network tunnel information to the access and mobility management function network element.

In a possible implementation, the first request is from the access and mobility management function network element, and the sending the first response includes: sending the first response to the access and mobility management function network element.

In a possible implementation, the core network tunnel information corresponds to the first session of the terminal.

In a possible implementation, before the receiving the handover request message from the first access network device, the method further includes: receiving a second request from the first access network device, where the second request is used to request the second access network device to allocate a terminal identifier to the terminal; allocating the terminal identifier to the terminal based on the second request; and sending a second response to the first access network device, where the second response carries the terminal identifier.

In a possible implementation, the second response further carries second indication information, and the second indication information indicates the first access network device to send the terminal identifier to the access and mobility management function network element.

In a possible implementation, the terminal is a stationary terminal. For example, it may be determined, according to expected UE behavior in subscription information of the terminal, that the UE is stationary or mobile. Alternatively, whether the UE is a stationary terminal may be determined based on location information of the UE in a period of time. In a possible implementation, after receiving the handover request message, the second access network device determines whether the terminal is a stationary terminal, and when determining that the terminal is a stationary terminal, communicates with the UPF based on the core network tunnel information that has been stored in the second access network device.

In a possible implementation, after the receiving the handover request message from the first access network device, the method further includes: receiving first access network tunnel information from a session management network element, where the first access network tunnel information is allocated by the session management network element for establishment of a tunnel for the terminal between the second access network device and the UPF.

According to a second aspect, this application provides a communication method. The method is applied to a first access network device, and the method includes: determining, based on first handover time information of a terminal, to hand over the terminal to a second access network device, where the first handover time information includes time for serving the terminal by at least one access network device, and the at least one access network device includes the second access network device; and sending a handover request message to the second access network device, where the handover request message is used to request to hand over the terminal to the second access network device.

In this embodiment of this application, both the first handover time information stored in the first access network device and second handover time information stored in an AMF include time for serving the terminal by the access network device, and the first handover time information and the second handover time information correspond to each other within a specific error range.

According to the communication method provided in this application, the first access network device initiates a handover request to the second access network device based on the first handover time information, and correspondingly the AMF hands over the terminal to the second access network device based on the second handover time information. In other words, air interface handover of the terminal between the first access network device and the second access network device and update of tunnel information of the terminal on a core network side are synchronized based on the handover time information, and the first access network device or the second access network device does not need to send, to the AMF, a synchronization message (for example, a path switch message) for handing over the terminal to the second access network device, thereby reducing signaling exchange of terminal information between the access network device and the core network device, and improving handover efficiency while ensuring consistency and integrity of a terminal handover procedure.

In a possible implementation, the method further includes: determining the first handover time information based on access time for separately accessing the at least one access network device by the terminal in a satellite operation period; or determining the first handover time information based on a location of the terminal and ephemeris information; or receiving the first handover time information from an access and mobility management function network element.

In a possible implementation, a satellite corresponding to the at least one access network device and a satellite corresponding to the first access network device belong to a same constellation; or a satellite corresponding to the at least one access network device and a satellite corresponding to the first access network device have a direct inter-satellite link connection and/or an indirect inter-satellite link connection; or a coverage area of each of the at least one access network device includes the location of the terminal.

A coverage area of each of the at least one access network device may be all areas covered by a signal of each access network device when the access network device moves along an operation track. Correspondingly, that the coverage area of each of the at least one access network device includes the location of the terminal may mean that all the areas covered by the signal of each access network device include the location of the terminal.

In a possible implementation, before the sending the handover request message to the second access network device, the method further includes: requesting the second access network device to allocate access network tunnel information to the terminal; receiving the access network tunnel information from the second access network device; and sending the access network tunnel information to the access and mobility management function network element.

In this embodiment of this application, the first access network device may forward, to the AMF, access network tunnel information allocated by another access network device (the another access network device includes the second access network device) to the terminal. For example, the another access network device may be all or some access network devices that can serve the terminal and that are other than the first access network device. This is equivalent to that signaling exchange of sending access network tunnel information by all the access network devices (or the some access network devices) to the AMF is combined into a same message for sending. When the terminal accesses a corresponding access network device for the first time or subsequently, the terminal may not send, to the AMF through an NG interface, a path switch message that carries the access network tunnel information, so that communication pressure on the NG interface is relieved, and handover efficiency is further improved.

In a possible implementation, the requesting the second access network device to allocate the access network tunnel information to the terminal includes: requesting the second access network device to allocate the access network tunnel information to a first session of the terminal.

In a possible implementation, the requesting the second access network device to allocate the access network tunnel information to the first session of the terminal includes: in a process in which the terminal establishes the first session through the first access network device, requesting the second access network device to allocate the access network tunnel information to the first session.

In a possible implementation, before the sending the handover request message to the second access network device, the method further includes: requesting another access network device to allocate a terminal identifier to the terminal, where the another access network device includes one or more access network devices other than the first access network device in the at least one access network device; receiving the terminal identifier allocated by the another access network device to the terminal; and sending, to the access and mobility management function network element, the terminal identifier allocated by the another access network device to the terminal.

In a possible implementation, the requesting the at least one access network device to allocate the terminal identifier to the terminal includes: in an establishment process in which the terminal establishes a first session through the first access network device, requesting the at least one access network device to allocate the terminal identifier to the terminal.

In this embodiment of this application, the first access network device may forward, to the AMF, a terminal identifier allocated by another access network device (the another access network device includes the second access network device) to the terminal. For example, the another access network device is all or some access network devices that can serve the terminal and that are other than the first access network device. This is equivalent to that signaling exchange of sending terminal identifiers by all the access network devices (or the some access network devices) to the AMF is combined into a same message for sending. When the terminal accesses a corresponding access network device for the first time or subsequently, the terminal may not send, to the AMF through an NG interface, a path switch message that carries the terminal identifier, so that communication pressure on the NG interface is further relieved, and handover efficiency is improved.

In a possible implementation, before the sending the handover request message to the second access network device, the method further includes: requesting the user plane function network element to allocate core network tunnel information to the terminal; receiving first core network tunnel information from the user plane function network element, where the first core network tunnel information corresponds to the second access network device; and sending the first core network tunnel information to the second access network device.

For example, when the terminal establishes a session through the first access network device, the first access network device requests the user plane function network element to allocate core network tunnel information to the session. The request may carry information about another access network device, and the another access network device may include all or some access network devices, for example, the second access network device and a third access network device, that are other than the first access network device and whose coverage areas include the location of the terminal. The user plane function network element may allocate the core network tunnel information to the session based on the request. The core network tunnel information corresponds to the another access network device. For example, the second access network device corresponds to second core network tunnel information, and the third access network device corresponds to third core network tunnel information. Further, the user plane function network element may send the allocated core network tunnel information to the corresponding access network device through the first access network device, or may send the allocated core network tunnel information to the corresponding access network device through the AMF, that is, the second core network tunnel information is sent to the second access network device, and the third core network tunnel information is sent to the third access network device.

In a possible implementation, the terminal is a stationary terminal.

In a possible implementation, before the determining, based on the first handover time information of the terminal, to hand over the terminal to the second access network device, the method further includes: determining, by the first access network device, whether the terminal is a stationary terminal, and determining, based on the first handover time information of the terminal, to hand over the terminal to the second access network device.

In a possible implementation, the first access network device obtains (or determines) the first handover time information when determining that the terminal is a stationary terminal.

According to a third aspect, this application provides a communication method. The method is applied to an access and mobility management function network element, and the method includes: determining, based on second handover time information of a terminal, to hand over the terminal from a first access network device to a second access network device, where the second handover time information includes time for serving the terminal by at least one access network device, and the at least one access network device includes the second access network device; and sending a first message to a session management function network element, where the first message is used to update access network tunnel information of the terminal.

In this embodiment of this application, the AMF actively triggers, based on the second handover time information, execution of a corresponding procedure of handing over the UE to the second access network device. Specifically, the first message may be sent to the session management function network element (SMF) without depending on a path switch message sent by the second access network device, thereby improving handover efficiency, and further relieving communication pressure on an NG interface.

In a possible implementation, the first message includes one or more of the following: access network tunnel information allocated by the second access network device to the terminal; an identifier of the second access network device; and an identifier of a first session of the terminal.

In a possible implementation, when the first message includes the identifier of the first session, the first message is specifically used to update access network tunnel information of the first session.

For example, when the access network tunnel information corresponds to only one session, and the session is the first session, if the SMF stores access network tunnel information corresponding to an identifier of an access network device and an identifier of a session, the first message may include the identifier of the first session and the identifier of the second access network device. Correspondingly, after receiving the first message, the SMF may update the access network tunnel information of the first session based on the identifier of the first session and the identifier of the second access network device.

For example, when the access network tunnel information corresponds to only one session, and the session is the first session, if the second access network device allocates first access network tunnel information to the first session, the first message may include an identifier of the first session and the first access network tunnel information. Correspondingly, after receiving the first message, the SMF may update the access network tunnel information of the first session based on the identifier of the first session and the access network tunnel information.

In a possible implementation, the method further includes: determining, by the access and mobility management function network element, the second handover time information based on access time for separately accessing the at least one access network device by the terminal in a satellite operation period; or determining, by the access and mobility management function network element, the second handover time information based on a location of the terminal and ephemeris information.

In a possible implementation, the method further includes: receiving the access network tunnel information allocated by the second access network device to the terminal; and sending, to the session management function network element, the access network tunnel information allocated by the second access network device to the terminal.

In this embodiment of this application, the access network tunnel information allocated by the second access network device to the terminal may be sent to the AMF through the first access network device. For example, when the terminal accesses the first access network device, the first access network device requests another access network device (including the second access network device) to allocate access network tunnel information to the terminal. After receiving the access network tunnel information allocated by the another access network device to the terminal, the first access network device sends the access network tunnel information to the AMF. Alternatively, the access network tunnel information allocated by the second access network device to the terminal may be directly sent by the second access network device to the AMF. For example, after the second access network device receives the handover request message, the second access network device may send the access network tunnel information to the AMF, or when the terminal previously accesses the second access network device, the second access network device sends the access network tunnel information to the AMF, and the AMF receives and stores the access network tunnel information. When determining to hand over the terminal to the second access network device, the AMF sends the first message to the SMF based on the access network tunnel information.

In a possible implementation, the access network tunnel information includes aggregation access network tunnel information.

In a possible implementation, before the determining, based on the second handover time information of the terminal, to hand over the terminal to the second access network device, the method further includes: receiving, from the first access network device, a terminal identifier allocated by another access network device to the terminal, where the another access network device includes one or more access network devices other than the first access network device in the at least one access network device; and after the determining to hand over the terminal to the second access network device, the method further includes: updating, based on the terminal identifier allocated by the another access network device to the terminal, a terminal identifier of the terminal that is recorded in the access and mobility management function network element to the terminal identifier allocated by the second access network device to the terminal.

In a possible implementation, a coverage area of the at least one access network device includes the location of the terminal.

Specifically, all areas covered by a signal of each of the at least one access network device in an operation process include the location of the terminal. It should be noted that, that all the areas covered by the signal of the access network device in the operation process include the location of the terminal means that when the access network device reaches a location (for example, upper left space, upper right space, or upper space of the terminal), a signal coverage area of the access network device includes the location of the terminal, instead of meaning that a communication coverage area at each moment in the entire operation process of the access network device includes the location of the terminal.

In a possible implementation, the terminal is a stationary terminal.

In some possible implementations, the determining, based on the first handover time information of the terminal, to hand over the terminal to the second access network device specifically includes: when the terminal is a stationary terminal, determining, based on the first handover time information of the terminal, to hand over the terminal to the second access network device.

According to a fourth aspect, this application provides a communication method, applied to a session management function network element. The method includes: receiving a first message from an access and mobility management function network element, where the first message is used to update access network tunnel information of a terminal, and the first message includes an identifier of a second access network device; allocating access network tunnel information to the terminal based on the identifier of the second access network device; and sending the allocated access network tunnel information to a user plane function network element, where the allocated access network tunnel information is used by the user plane function network element to update the access network tunnel information of the terminal.

In this embodiment of this application, the allocated access network tunnel information is access network tunnel information allocated to the terminal based on an identifier of the second access network device.

According to the communication method provided in this application, the SMF allocates the access network tunnel information to the terminal, so that signaling exchange about the access network tunnel information does not need to be performed between the access network device and the AMF, thereby further reducing signaling exchange duration in a handover procedure, and improving handover efficiency.

In a possible implementation, the method further includes: sending core network tunnel information of the terminal to the second access network device.

In a possible implementation, the method further includes: sending the allocated access network tunnel information to the second access network device.

According to a fifth aspect, this application provides a communication method, applied to a session management function network element. The method includes: receiving access network tunnel information from an access and mobility management function network element that is allocated by a second access network device to a terminal; receiving a first message from the access and mobility management function network element, where the first message is used to update access network tunnel information of the terminal, and the first message includes an identifier of the second access network device; and sending, to a user plane function network element based on the identifier of the second access network device, the access network tunnel information allocated by the second access network device to the terminal, where the access network tunnel information is used by the user plane function network element to update the access network tunnel information of the terminal.

Specifically, before the terminal accesses the second access network device, the SMF receives the access network tunnel information that is allocated by the second access network device to the terminal and that is sent by the AMF. When the terminal accesses the second access network device, the SMF receives the first message from the AMF. The SMF determines, based on the identifier of the second access network device carried in the first message, access network tunnel information for the second access network device to serve the terminal, and sends the access network tunnel information to the user plane function network element.

According to the communication method provided in this application, when the terminal accesses the second access network device, the SMF has stored the access network tunnel information for the second access network device to serve the terminal. Therefore, the AMF does not need to send, to the SMF by using the first message, the access network tunnel information for the second access network device to serve the terminal, and the second access network device does not need to send, to the AMF, the access network tunnel information for the second access network device to serve the terminal. This reduces signaling exchange in a handover procedure, relieves communication pressure, and further improves handover efficiency.

In a possible implementation, before the receiving the first message from the access and mobility management function network element, the method further includes: sending core network tunnel information of the terminal to the second access network device.

According to a sixth aspect, this application provides a communication system. The system includes a first access network device, a second access network device, and an access and mobility management function network element. The second access network device is configured to perform the method shown in any one of the first aspect or the possible implementations of the first aspect, the first access network device is configured to perform the method shown in any one of the second aspect or the possible implementations of the second aspect, and the access and mobility management function network element is configured to perform the method shown in any one of the third aspect or the possible implementations of the third aspect.

In a possible implementation, the system further includes a session management function network element, and the session management function network element is configured to perform the method shown in any one of the fourth aspect or the possible implementations of the fourth aspect; or the session management function network element is configured to perform the method shown in any one of the fifth aspect or the possible implementations of the fifth aspect.

According to a seventh aspect, this application provides a communication method, applied to a session management function network element. The method includes: receiving second handover time information from an access and mobility management function network element, where the second handover time information includes access time for at least one access network device corresponding to a terminal; determining, based on the second handover time information, to hand over the terminal to a second access network device; and requesting a user plane function network element to update access network tunnel information of the terminal to access network tunnel information for the second access network device to serve the terminal.

According to the communication method provided in this application, the session management function network element actively triggers, based on the second handover time information, to perform a related procedure of handing over the UE to the second access network device, without waiting for a synchronization message (for example, an update request message) that is sent by the AMF for handing over the terminal to the second access network device, thereby relieving communication pressure on an N11 interface and improving handover efficiency.

In a possible implementation, before the determining, based on the second handover time information, to hand over the terminal to the second access network device, the method further includes: receiving access network tunnel information from the access and mobility management function network element that is allocated by another access network device to the terminal, where the another access network device includes one or more access network devices other than the first access network device in the at least one access network device.

In a possible implementation, the access network tunnel information for the second access network device to serve the terminal includes aggregation access network tunnel information allocated by the second access network device to the terminal.

In a possible implementation, the access network tunnel information for the second access network device to serve the terminal includes access network tunnel information allocated by the second access network device to a first session of the terminal.

In a possible implementation, the access network tunnel information for the second access network device to serve the terminal is allocated by the session management function network element.

In a possible implementation, after the determining, based on the second handover time information, to hand over the terminal to the second access network device, the method further includes: sending the access network tunnel information to the second access network device and/or the access and mobility management function network element.

According to an eighth aspect, this application provides a communication method. The method is applied to an access and mobility management function network element, and the method includes: determining second handover time information of a terminal, where the second handover time information includes access time for at least one access network device corresponding to the terminal; and sending the second handover time information to a session management function network element.

In a possible implementation, the method further includes: obtaining access network tunnel information allocated by another access network device to the terminal, where the another access network device includes one or more access network devices other than the first access network device in the at least one access network device; and sending, to the session management function network element, the access network tunnel information allocated by the another access network device to the terminal.

According to a ninth aspect, this application provides a communication system. The system includes an access and mobility management function network element and a session management function network element. The access and mobility management function network element is configured to perform the method shown in any one of the eighth aspect or the possible implementations of the eighth aspect, and the session management function network element is configured to perform the method shown in any one of the seventh aspect or the possible implementations of the seventh aspect.

In a possible implementation, the system further includes a first access network device and a second access network device. The first access network device is configured to perform the method shown in any one of the second aspect or the possible implementations of the second aspect, and the second access network device is configured to perform the method shown in any one of the first aspect or the possible implementations of the first aspect.

According to a tenth aspect, this application provides a communication method, applied to a session management function network element. The method includes: receiving second information from an access and mobility management function network element, where the second information includes access time corresponding to at least one access network device accessed by a terminal and access network tunnel information allocated by the at least one access network device to the terminal; determining, based on the second information, to hand over the terminal to a second access network device; and requesting a user plane function network element to update access network tunnel information of the terminal to access network tunnel information for the second access network device to serve the terminal.

According to the communication method provided in this application, the session management function network element actively triggers, based on the second information, to perform a related procedure of handing over the UE to the second access network device, without waiting for a synchronization message (for example, an update request message) that is sent by the AMF for handing over the terminal to the second access network device, thereby relieving communication pressure on an N11 interface and improving handover efficiency.

In a possible implementation, the second information includes second handover time information and access network tunnel information allocated by another access network device to the terminal, and the second handover time information includes the access time for the at least one access network device corresponding to the terminal.

In a possible implementation, the second information includes a correspondence between an identifier of a session of the terminal, access time for accessing a corresponding access network device by the terminal, and access network tunnel information.

According to an eleventh aspect, this application provides a communication method. The method is applied to an access and mobility management function network element, and the method includes: determining second handover time information of a terminal, and obtaining access network tunnel information allocated by another access network device to the terminal, where the another access network device includes one or more access network devices other than the first access network device in the at least one access network device; and sending second information to a session management function network element based on the second handover time information and the access network tunnel information allocated by the another access network device to the terminal, where the second information includes access time corresponding to the at least one access network device accessed by the terminal and access network tunnel information allocated by the at least one access network device to the terminal.

In a possible implementation, the second information includes second handover time information and access network tunnel information allocated by another access network device to the terminal, and the second handover time information includes the access time for the at least one access network device corresponding to the terminal.

In a possible implementation, the second information includes a correspondence between an identifier of a session of the terminal, access time for accessing a corresponding access network device by the terminal, and access network tunnel information.

According to a twelfth aspect, this application provides a communication system. The system includes an access and mobility management function network element and a session management function network element. The access and mobility management function network element is configured to perform the method shown in any one of the eleventh aspect or the possible implementations of the eleventh aspect, and the session management function network element is configured to perform the method shown in any one of the tenth aspect or the possible implementations of the tenth aspect.

In a possible implementation, the system further includes a first access network device and a second access network device. The first access network device is configured to perform the method shown in any one of the second aspect or the possible implementations of the second aspect, and the second access network device is configured to perform the method shown in any one of the first aspect or the possible implementations of the first aspect.

According to a thirteenth aspect, this application provides a communication apparatus, including units configured to perform the method shown in any possible implementation of one or more of the first aspect, the second aspect, the third aspect, the fourth aspect, the fifth aspect, the seventh aspect, the eighth aspect, the tenth aspect, and the eleventh aspect.

According to a fourteenth aspect, this application provides a communication apparatus, including a processor. The processor is configured to perform the method shown in any possible implementation of one or more of the first aspect, the second aspect, the third aspect, the fourth aspect, the fifth aspect, the seventh aspect, the eighth aspect, the tenth aspect, and the eleventh aspect.

According to a fifteenth aspect, this application provides a communication apparatus, including a logic circuit and an interface. The logic circuit is coupled to the interface, the interface is configured to input and/or output information, and the logic circuit is configured to perform the method shown in any possible implementation of one or more of the first aspect, the second aspect, the third aspect, the fourth aspect, the fifth aspect, the seventh aspect, the eighth aspect, the tenth aspect, and the eleventh aspect.

According to a sixteenth aspect, a computer-readable storage medium is provided. The computer-readable storage medium is configured to store a computer program, and when the computer program is executed, the method shown in any possible implementation of one or more of the first aspect, the second aspect, the third aspect, the fourth aspect, the fifth aspect, the seventh aspect, the eighth aspect, the tenth aspect, and the eleventh aspect is performed.

According to a seventeenth aspect, this application provides a computer program. When the computer program is executed, the method shown in any possible implementation of one or more of the first aspect, the second aspect, the third aspect, the fourth aspect, the fifth aspect, the seventh aspect, the eighth aspect, the tenth aspect, and the eleventh aspect is performed.

According to an eighteenth aspect, this application provides a computer program product. The computer program product includes a computer program or computer code, and when the computer program product runs on a computer, the method shown in any possible implementation of one or more of the first aspect, the second aspect, the third aspect, the fourth aspect, the fifth aspect, the seventh aspect, the eighth aspect, the tenth aspect, and the eleventh aspect is performed.

According to a nineteenth aspect, an embodiment of this application provides a chip system. The chip system is applied to an electronic device, the chip system includes one or more processors, and the processor is configured to invoke computer instructions, so that the electronic device performs the method shown in any possible implementation of one or more of the first aspect, the second aspect, the third aspect, the fourth aspect, the fifth aspect, the seventh aspect, the eighth aspect, the tenth aspect, and the eleventh aspect.

It may be understood that the communication apparatus, the communication system, the computer storage medium, the computer program, the computer program product, and the chip system that are provided above are all configured to perform the method shown in any implementation in a corresponding aspect of embodiments of this application. Therefore, for beneficial effects that can be achieved, refer to the beneficial effects in the corresponding method. Details are not described herein again.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a diagram of a handover procedure of handing over a terminal to a target access network device in another communication method according to an embodiment of this application;
FIG. 4 is a diagram of a method procedure of a communication method according to an embodiment of this application;
FIG. 5A is a diagram of different source manners of core network tunnel information according to an embodiment of this application;
FIG. 5B is another diagram of different source manners of access network tunnel information according to an embodiment of this application;
FIG. 5C is another diagram of different source manners of a terminal identifier according to an embodiment of this application;
FIG. 6A and FIG. 6B are a diagram of a method procedure of another communication method according to an embodiment of this application;
FIG. 7A to FIG. 7C are a diagram of a method procedure of another communication method according to an embodiment of this application;
FIG. 8A to FIG. 8C are a diagram of a method procedure of another communication method according to an embodiment of this application;
FIG. 9A to FIG. 9C are a diagram of a method procedure of another communication method according to an embodiment of this application;
FIG. 10A to FIG. 10D are a diagram of a method procedure of another communication method according to an embodiment of this application; and
FIG. 11A to FIG. 11D are a diagram of a method procedure of another communication method according to an embodiment of this application.

### DESCRIPTION OF EMBODIMENTS

To make the objectives, technical solutions, and advantages of this application clearer, the following further describes this application with reference to the accompanying drawings.

The terms "first", "second", and the like in the specification, claims, and accompanying drawings of this application are used to distinguish between different objects, but are not used to describe a specific sequence. In addition, the terms "include" and "have" and any variations thereof are intended to cover non-exclusive inclusion. For example, a process, method, system, product, or device that includes a series of steps or units is not limited to the listed steps or units, but optionally further includes an unlisted step or unit, or optionally further includes another inherent step or unit for the process, method, product, or device.

The "embodiment" mentioned in this specification means that specific features, structures, or characteristics described with reference to the embodiment may be included in one or more embodiments of this application. Appearance of the phrase at various positions in the specification does not necessarily refer to a same embodiment, or an independent or alternative embodiment mutually exclusive with another embodiment. A person skilled in the art may explicitly and implicitly understand that embodiments described in this specification may be combined with other embodiments.

In this application, "one or more (pieces)" refers to one or more, "a plurality of" refers to two or more, "at least two (pieces)" refers to two, three, or more, and "and/or" is used to describe an association relationship of associated objects, and indicates that three relationships may exist. For example, "A and/or B" may indicate the following three cases: Only A exists, only B exists, and both A and B exist, where A and B may be singular or plural. The character "/" generally indicates an "or" relationship between associated objects. "At least one of the following items (pieces)" or a similar expression thereof refers to any combination of these items, including a single item (piece) or any combination of a plurality of items (pieces). For example, at least one of a, b, or c may represent a, b, c, "a and b", "a and c", "b and c", or "a, b, and c", where a, b, and c may be singular or plural.

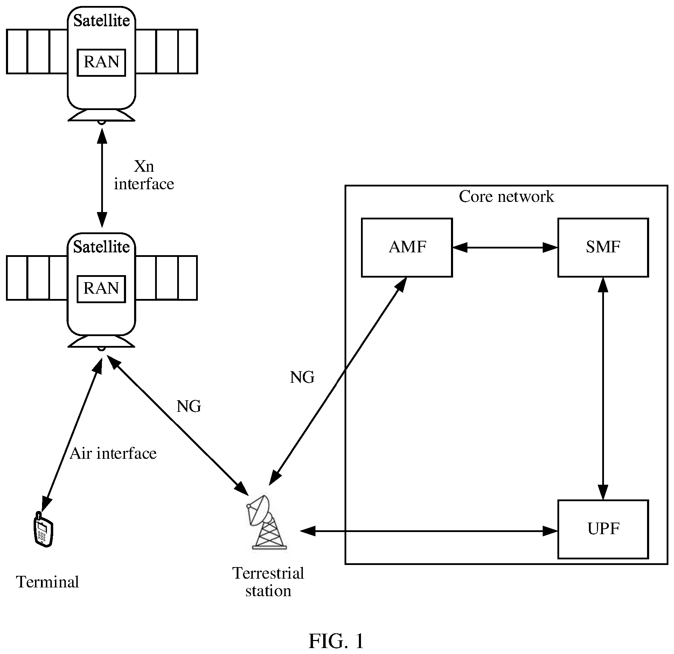

The method provided in embodiments of this application may be applied to a satellite communication system in a regenerated payload (regenerated payload) mode in a non-terrestrial network (non-terrestrial network, NTN). As shown in FIG. 1, the communication system may include a terminal, a satellite, a terrestrial station (which may also be referred to as a gateway station or a signal gateway station), an access and mobility management function (access and mobility management function, AMF) network element, a session management function (session management function, SMF) network element, and a user plane function (user plane function, UPF) network element.

In a scenario of the satellite communication system in the regenerated payload mode, a radio access network (radio access network, RAN) device may be deployed on the satellite. For example, all or some functions of a base station (RAN) are deployed on the satellite, and signaling exchange and user data transmission between base stations may be completed between satellites. The access network device described in this application may be a radio access network device. With evolution of standard technologies, the access network device may alternatively be a network device in another standard. This is not limited in this specification.

An air interface in FIG. 1 is a radio link between a terminal and a RAN. An Xn interface is an interface between RANs, and is mainly used for signaling exchange such as handover. An NG interface is an interface between a RAN and an AMF. In some descriptions, the NG interface is also referred to as an N2 interface, and is used to exchange non-access stratum (non-access stratum, NAS) signaling or the like of a core network and service data of a user.

The terminal is an apparatus with wireless receiving and sending functions. The terminal may communicate with an access network device (which may be alternatively referred to as an access device) in a radio access network (radio access network, RAN), for example, may access a RAN in a satellite through an air interface and initiate a service such as a call or internet access. The terminal may also be referred to as a user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal may be deployed on land, and include an indoor or outdoor terminal, a handheld terminal, or a vehicle-mounted terminal; or may be deployed on a water surface (for example, on a ship). In a possible implementation, the terminal may be a handheld device having a wireless communication function, a vehicle-mounted device, a wearable device, a sensor, a terminal in the internet of things, a terminal in the internet of vehicles, an uncrewed aerial vehicle, a terminal in any form in a 5th generation (5th generation, 5G) network and a future network, or the like. This is not limited in embodiments of this application. For example, communication may further be performed between terminals through device-to-device (device-to-device, D2D) or machine-to-machine (machine-to-machine, M2M). The terminal shown in embodiments of this application may alternatively be a device in the internet of things (internet of things, IoT). The IoT network may include, for example, an internet of vehicles. Communication modes in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The terrestrial station may be configured to connect a satellite to a RAN and connect a satellite to a core network, and is responsible for forwarding signaling and service data between the satellite and the core network. The satellite may provide a wireless access service for the terminal, schedule a radio resource for the access terminal, provide a reliable wireless transmission protocol and data encryption protocol, and the like. In an example, in a regenerated payload mode, the satellite may be an artificial earth satellite, a high-altitude aircraft, or the like that serves as a wireless communication base station (RAN), for example, an evolved NodeB (evolved NodeB, eNB) and a next generation NodeB (next generation NodeB, gNB).

The core network may include an AMF, an SMF, a UPF, and the like. The AMF may be responsible for user access management, security authentication, mobility management, and the like. The UPF may be responsible for managing user plane data transmission, traffic statistics collection, and the like.

In embodiments of this application, the satellite may be a medium earth orbit (medium earth orbit, MEO) satellite or a low earth orbit (low earth orbit, LEO) satellite of a non-geostationary earth orbit (non-geostationary earth orbit, NGEO), or may be a high-altitude platform station (high-altitude platform station, HAPS), or the like. A specific type of the satellite is not limited in embodiments of this application.

In some deployments of the RAN, the RAN may include a central unit (central unit, CU) and a distributed unit (distributed unit, DU). In some other deployments of the RAN, the CU may be further divided into a CU-control plane (control plane, CP) and a CU-user plane (user plane, UP). In some other deployments of the RAN, the RAN may alternatively have an open radio access network (open radio access network, ORAN) architecture or the like. A specific deployment manner of the RAN is not limited in embodiments of this application. For example, when the RAN has an ORAN architecture, the RAN shown in embodiments of this application may be an access network device in an ORAN, a functional module, or the like. In an ORAN system, the CU may also be referred to as an open (open, O)-CU, the DU may also be referred to as an O-DU, the CU-CP may also be referred to as an O-CU-CP, the CU-UP may also be referred to as an O-CU-UP, and the like. The deployment manners of the RAN listed herein are merely an example. With evolution of standard technologies, the RAN may have another deployment form.

It may be understood that FIG. 1 shows only one satellite and one terrestrial station. In actual use, an architecture with a plurality of satellites and/or a plurality of terrestrial stations may be used as required. Each satellite may provide a service for one or more terminals, each satellite may correspond to one or more terrestrial stations, each terrestrial station may correspond to one or more satellites, and the like. This is not specifically limited in embodiments of this application. The method provided in embodiments of this application may be applied to an internet of things (internet of things, IoT) system, an internet of vehicles (Vehicle to X, V2X), or a narrowband internet of things (narrowband internet of things, NB-IoT) system. For another example, the method may be applied to an LTE frequency division duplex (frequency division duplex, FDD) system, an LTE time division duplex (time division duplex, TDD) system, a long term evolution (long term evolution, LTE) system, a 5th generation (5th generation, 5G) communication system, a 6th generation (6th generation, 6G) communication system, or a future communication system. This is not specifically limited in embodiments of this application.

The following describes a communication architecture between network elements included in a communication system to which this application is applied.

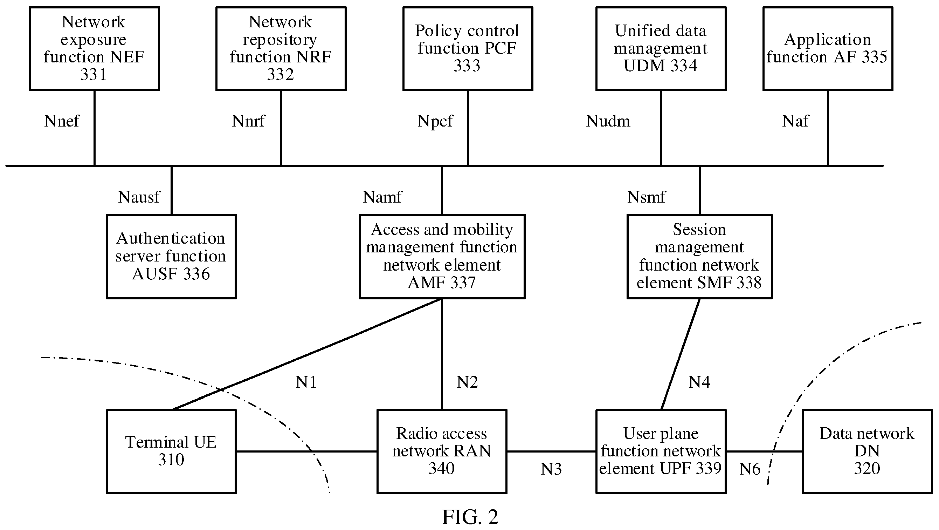

FIG. 2 is a diagram of a communication network architecture between network elements included in a communication system according to an embodiment of this application. A 5G network architecture based on a service-based architecture in a non-roaming scenario defined in a 3GPP standardization process is used as an example. The network architecture may include three parts: a terminal part, a 5G system, and a data network (data network, DN).

The terminal part may include a terminal 310, and the terminal 310 may also be referred to as a user equipment (user equipment, UE). The terminal 310 in this application is a device having wireless receiving and sending functions, and may communicate with one or more core network (core network, CN) devices (which may be alternatively referred to as core devices) through an access network device (which may be alternatively referred to as an access device) in a radio access network (radio access network, RAN) 340. The terminal 310 may also be referred to as an access terminal, a terminal, a subscriber unit, a subscriber station, a mobile station, a remote station, a remote terminal, a mobile device, a user terminal, a user agent, a user apparatus, or the like. The terminal 310 may be deployed on land, and include an indoor or outdoor terminal, a handheld terminal, or a vehicle-mounted terminal; or may be deployed on a water surface (for example, on a ship); or may be deployed in the air (for example, on an aircraft, a balloon, or a satellite). The terminal 310 may be a cellular phone (cellular phone), a cordless phone, a session initiation protocol (session initiation protocol, SIP) phone, a smart phone (smart phone), a mobile phone (mobile phone), a wireless local loop (wireless local loop, WLL) station, a personal digital assistant (personal digital assistant, PDA), or the like. Alternatively, the terminal 310 may be a handheld device with a wireless communication function, a computing device or another device connected to a wireless modem, a vehicle-mounted device, a wearable device, an uncrewed aerial vehicle device, a terminal in the internet of things or the internet of vehicles, a terminal in any form in a 5G network and a future network, a relay user equipment, a terminal in a future evolved 5G system, or the like. The relay user equipment may be, for example, a 5G residential gateway (residential gateway, RG). For example, the terminal 310 may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. A type, a category, or the like of the terminal is not limited in embodiments of this application.

The 5G system may include a network exposure function (network exposure function, NEF) 331, a network repository function (network function repository function, NRF) 332, a policy control function (policy control function, PCF) 333, a unified data management (unified data management, UDM) 334, an application function (application function, AF) 335, an authentication server function (authentication server function, AUSF) 336, an access and mobility management function (access and mobility management function, AMF) network element 337, a session management function (session management function, SMF) network element 338, a user plane function (user plane function, UPF) network element 339, a radio access network ((radio) access network, RAN) 340, and the like. In the foregoing 5G system, a part other than the (radio) access network 340 part may be referred to as a core network (core network, CN) part or a core network part.

The data network DN 320 may also be referred to as a packet data network (packet data network, PDN), and is usually a network outside the 5G system, for example, a third-party network. For example, the 5G system may access a plurality of data networks DNs 320, and a plurality of services may be deployed on the data networks DNs 320, to provide services such as a data service and/or a voice service for the terminal 310. For example, the data network DN 320 may be a private network of a smart factory, a sensor installed in a workshop of the smart factory may be the terminal 310, a control server of the sensor is deployed in the data network DN 320, and the control server may provide a service for the sensor. The sensor may communicate with the control server to obtain an instruction of the control server, transmit collected sensor data to the control server according to the instruction, and the like. For another example, the data network DN 320 may be an internal office network of a company, a mobile phone or a computer of an employee of the company may be the terminal 310, and the mobile phone or the computer of the employee may access information, data resources, and the like on the internal office network of the company. The terminal 310 may establish a connection to the 5G system through an interface (for example, an N1 interface in FIG. 2) provided by the 5G system, to use a service such as a data service and/or a voice service provided by the 5G system. The terminal 310 may further access the data network DN 320 through the 5G system, and use an operator service deployed on the data network DN 320 and/or a service provided by a third party. The third party may be a service provider other than the 5G system and the terminal 310, and may provide another service such as a data service and/or a voice service for the terminal 310. A specific representation form of the third party may be specifically determined based on an actual application scenario, and is not limited herein.

For example, the following briefly describes network functions in the 5G system.

The RAN 340 is a subnet of the 5G system, and is an implementation system between a service node (or a network function) and the terminal 310 in the 5G system. To access the 5G system, the terminal 310 first accesses the RAN 340, and then is connected to a service node in the 5G system through the RAN 340. The access network device in embodiments of this application is a device that provides a wireless communication function for the terminal 310, and may also be referred to as an access device, a RAN device, a network device, or the like. For example, the access device includes but is not limited to: a next generation NodeB (next generation node base station, gNB) in a 5G system, an evolved NodeB (evolved NodeB, eNB) in an LTE system, a radio network controller (radio network controller, RNC), a NodeB (NodeB, NB), a base station controller (base station controller, BSC), a base transceiver station (base transceiver station, BTS), a home base station (home evolved NodeB or home NodeB, HNB), a baseband unit (baseband unit, BBU), a transmitting and receiving point (transmitting and receiving point, TRP), a transmitting point (transmitting point, TP), a pico base station device (pico), a mobile switching center, a network device in a future network, or the like. It may be understood that a specific type of the access network device is not limited in this application. In systems using different radio access technologies, devices with functions of the access network device may have different names.

Optionally, in some deployments of the access device, the access device may include a central unit (central unit, CU), a distributed unit (distributed unit, DU), and the like. In some other deployments of the access device, the CU may be further divided into a CU-control plane (control plane, CP), a CU-user plane (user plane, UP), and the like. In some other deployments of the access device, the access device may alternatively has an open radio access network (open radio access network, ORAN) architecture or the like. A specific deployment manner of the access device is not limited in this application.

The network exposure function NEF (which may also be referred to as an NEF network function or an NEF network function entity) 331 is a control plane function provided by an operator. The NEF network function 331 exposes an external interface of the 5G system to a third party in a secure manner. When the SMF needs to communicate with a third-party network function, the NEF network function 331 may serve as a relay for communication between the SMF and a third-party network entity. When serving as the relay, the NEF network function 331 may translate identification information of a subscriber and identification information of the third-party network function. For example, when sending a subscriber permanent identifier (subscriber permanent identifier, SUPI) of the subscriber from the 5G system to the third party, the NEF network function 331 may translate the SUPI into an external identity (identity, ID) corresponding to the SUPI. Conversely, when sending an external ID (an ID of a third-party network entity) to the 5G system, the NEF network function 331 may translate the external ID into an SUPI.

The network repository function NRF 332 may be configured to maintain real-time information of all network function services in a network.

The policy control function PCF 333 is a control plane function provided by the operator, and is configured to provide a protocol data unit (protocol data unit, PDU) session policy for the session management function network element SMF 338. The policy may include a charging-related policy, a QoS-related policy, an authorization-related policy, and the like.

The unified data management UDM 334 is a control plane function provided by the operator, and is responsible for storing information such as a subscriber permanent identifier (subscriber permanent identifier, SUPI), a security context (security context), and subscription data of a subscriber in the 5G system. The subscriber in the 5G system may be specifically a user using a service provided by the 5G system, for example, a user using a terminal SIM card of China Telecom, or a user using a terminal SIM card of China Mobile. For example, the SUPI of the subscriber may be a number of the terminal SIM card. The security context may be data (cookie), a token (token), or the like stored in a local terminal (for example, a mobile phone). The subscription data of the subscriber may be a supporting service of the terminal SIM card, for example, a traffic package of the mobile phone SIM card.

The application function AF 335 is configured to perform data routing affected by an application, access the network exposure function, interact with a policy framework for policy control, and the like.

The authentication server function AUSF 336 is a control plane function provided by an operator, and is usually used for primary authentication, that is, authentication between the terminal 310 (the subscriber) and the 5G system.

The access and mobility management function network element AMF 337 is a control plane network function provided by the 5G system, and is responsible for access control and mobility management when the terminal 310 accesses the 5G system, for example, including functions such as mobility status management, allocation of a temporary user identity, and user authentication and authorization.

The session management function network element SMF 338 is a control plane network function provided by the 5G system, and is responsible for managing a protocol data unit (protocol data unit, PDU) session of the terminal 310. The PDU session is a channel for transmitting a PDU, and the terminal and the DN 320 need to transmit PDUs to each other through the PDU session. The SMF 338 may be responsible for establishment, maintenance, deletion, and the like the PDU session. The SMF 338 includes session-related functions such as session management (such as session establishment, modification, and release, including tunnel maintenance between the UPF 339 and the RAN 340), selection and control of the UPF 339, service and session continuity (service and session continuity, SSC) mode selection, and roaming.

The user plane function UPF 339 is a gateway provided by the operator, and is a gateway for communication between the 5G system and the DN 320. The UPF 339 includes user plane-related functions such as data packet routing and transmission, packet detection, traffic usage reporting, quality of service (quality of service, QoS) handling, lawful interception, uplink packet detection, and downlink data packet storage.

The network functions in the 5G system shown in FIG. 2 may further include a network slice selection function (network slice selection function, NSSF) (not shown in FIG. 2) responsible for determining a network slice instance, selecting an AMF network function, and the like. The network functions in the 5G system shown in FIG. 2 may further include a unified data repository (unified data repository, UDR) or the like. Another network function included in the 5G system is not limited in embodiments of this application.

In FIG. 2, Nnef, Nausf, Nnrf, Npcf, Nudm, Naf, Namf, Nsmf, N1, N2, N3, N4, and N6 are interface sequence numbers. For example, for meanings of the interface serial numbers, refer to meanings defined in the 3GPP standard protocol. The meanings of the interface serial numbers are not limited in this application. It should be noted that in FIG. 2, only an example in which the terminal 310 is a UE is used for description. Names of interfaces between the network functions in FIG. 2 are also merely examples. In specific implementation, the names of the interfaces in the system architecture may alternatively be other names. This is not limited in this application.

A mobility management network function in this application may be the AMF 337 shown in FIG. 2, or may be another network function having the foregoing access and mobility management function network element AMF 337 in a future communication system. Alternatively, the mobility management network function in this application may be a mobility management entity (mobility management entity, MME) or the like in an LTE system.

For ease of description, in embodiments of this application, the access and mobility management function network element AMF 337 is referred to as an AMF for short, the unified data management UDM 334 is referred to as a UDM for short, and the terminal 310 is referred to as a UE. In other words, in embodiments of this application, an AMF described below may be replaced with a mobility management network function, a UDM described below may be replaced with a unified data management, and a UE described below may be replaced with a terminal. It may be understood that the replacement method is also applicable to another network function that is not shown.

A service-based architecture and a universal interface are used for the network architecture (for example, a 5G network architecture) shown in FIG. 2. A conventional network element function is split into several self-contained, self-managed, and reusable network function service modules based on a network function virtualization (network function virtualization, NFV) technology. The diagram of the network architecture shown in FIG. 2 may be understood as a diagram of a service-based 5G network architecture in a non-roaming scenario. In this architecture, different network functions are combined in an orderly manner based on requirements of a specific scenario, so that a capability and a service of a network may be customized, thereby avoiding deploying a dedicated physical network for different services. With a network slicing technology, the operator can respond to customer requirements more flexibly and quickly and support flexible allocation of network resources.

The following describes terms in embodiments of this application.
(1) Access network tunnel information, core network tunnel information, and path switch message

The access network tunnel information is an address of an access network device used when a UPF sends terminal-related information (for example, downlink data) to the access network device. The core network tunnel information is an address of a UPF used when an access network device sends terminal-related information (for example, uplink data) to the UPF. In some descriptions of this application, for ease of description, tunnel information used to carry data about a terminal between an access network device and a user plane function network element is described as access network tunnel information or core network tunnel information for the access network device to serve the terminal, and may be specifically access network tunnel information or core network tunnel information for the access network device and/or the user plane function network element to serve the terminal or a session of the terminal. It should be noted that specific definitions about the access network tunnel information and the core network tunnel information are determined according to a protocol standard.

Generally, in a handover procedure in which a terminal is handed over to a target access network device, after air interface handover of the UE is completed between a source access network device and the target access network device, the target access network device sends a path switch message to an AMF. The path switch message is used to switch a path of the terminal. For example, an English name of the path switch message may be N2 path switch, path switch, or N2 path switch request. This is not limited in this specification.

In an example, the path switch message indicates (or triggers) the AMF to request, through an SMF, a UPF to allocate core network tunnel information to the terminal, and switch an N3 path used by the UPF to send and/or receive related information of the terminal from the source access network device to the target access network device.

In addition, after the UPF allocates the core network tunnel information to the terminal in response to the request of the SMF and sends the core network tunnel information to the target access network device, the target access network device sends, to the UPF, access network tunnel information allocated by the target access network device to the terminal (specifically, the access network tunnel information may be sent to the UPF through the AMF and the SMF), so that the target access network device communicates with the UPF based on the core network tunnel information and the access network tunnel information. Alternatively, in some other possible implementations, the path switch message may carry access network tunnel information allocated by the target access network device to the terminal. This is not limited in this specification. However, it should be noted that, in a manner of sending, to the UPF by using a path switch message in step S303, the access network tunnel information allocated by the target access network device to the terminal, the access network device can allocate the access network tunnel information to the terminal without waiting for the UPF to allocate the core network tunnel information to the terminal, so that communication duration for performing the handover procedure is shorter, and handover efficiency is higher.

In embodiments of this application, sessions that can be served by the core network tunnel information and the access network tunnel information are consistent. The core network tunnel information and the access network tunnel information may serve only one session, or may serve a session of only a same slice, or may serve a session of only a same terminal accessing a same access network device, or may serve sessions of all terminals accessing a same access network device. This is not limited in this specification.

For ease of description in this specification, tunnel information (core network tunnel information and access network tunnel information) that can serve only one session is referred to as tunnel information at a session granularity; tunnel information that can serve a session of only one slice is referred to as tunnel information at a slice granularity; tunnel information that can serve a session of only a same terminal accessing a same access network device is referred to as tunnel information at a UE-RAN granularity; and core network tunnel information and access network tunnel information that can serve sessions of all terminals accessing a same access network device are referred to as tunnel information at a RAN granularity. Tunnels at the session granularity, the slice granularity, the UE-RAN granularity, and the RAN granularity may all be referred to as aggregation tunnels. It should be noted that service granularities of the core network tunnel information and the access network tunnel information are usually in one-to-one correspondence. For example, if the core network tunnel information is tunnel information at the session granularity, the access network tunnel information is also tunnel information at the session granularity. However, this application sets no limitation that the service granularities of the core network tunnel information and the access network tunnel information can only be in one-to-one correspondence. This is not limited in this specification.

In another example, time at which the AMF receives a path switch (path switch) message is time at which the terminal accesses the second access network device. For example, if the AMF receives, at time t1, a path switch message for accessing a RAN1 by the terminal, and receives, at time t2, a path switch message for accessing a RAN2 by the terminal, the RAN1 serves the terminal device in a time period from t1 to t2.

### (2) Terminal identifier

In some possible implementations, in consideration of communication security, when an access network device and an AMF communicate with each other for a terminal through an NG interface, an identifier (UE ID) of the terminal may not be directly used to identify the UE, but an NG application protocol identity (RAN UE NG Application Protocol Identity, RAN UE NGAP ID) allocated by the access network device to the UE and another private identifier allocated by the AMF to the UE are used to identify the UE. For ease of description in this specification, the RAN UE NGAP ID is referred to as a terminal identifier.

In some possible implementations, in a handover procedure of the terminal, a path switch message sent by a target access network device to the AMF may further carry a terminal identifier allocated by the target access network device to the terminal, to enable or trigger the AMF to update, based on the terminal identifier, a RAN UE NGAP ID locally stored in the AMF.

The following describes a technical background and a technical problem to be resolved in embodiments of this application.

In a regenerative transmission mode, a base station or some base station functions are deployed on a satellite. To be specific, movement of the satellite causes a change in a radio signal coverage area of a radio access network (radio access network, RAN) deployed on the satellite, and a satellite serving a UE needs to be changed from a source access network device to a target access network device. Generally, a low earth orbit satellite is at a low altitude from the ground and moves at a high speed. It is estimated that, for a location on the ground, a time interval required from moving to right upper space of the ground by one satellite to moving to the right upper space of the ground by a next satellite is only about 3 minutes. Therefore, a handover procedure in which the UE is handed over from accessing the source access network device to accessing the target access network device frequently occurs. For ease of description below, the procedure in which the UE is handed over from accessing the source access network device to accessing the target access network device is referred to as a handover procedure. In some other description manners, the procedure may be alternatively referred to as an Xn handover procedure. This is not limited in this specification.

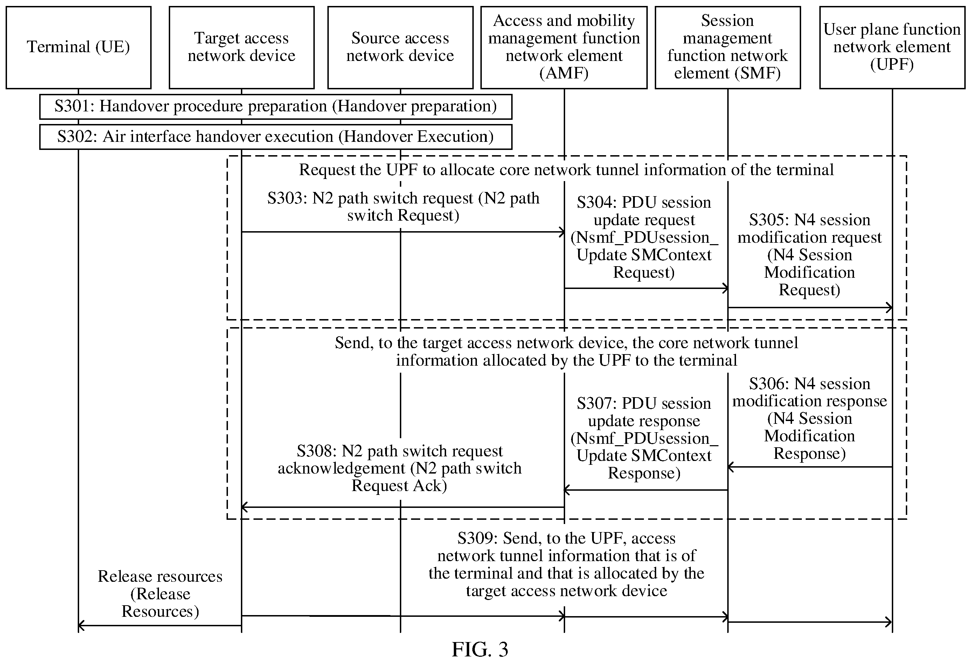

For example, in some other communication methods, each time the UE performs the handover procedure, the target access network device performs a series of signaling exchange with a core network. As shown in FIG. 3, after air interface handover of the UE between the source access network device and the target access network device is completed (corresponding to step S302 in FIG. 3), the target access network device sends an N2 path switch request about the UE to an AMF (corresponding to step S303 in FIG. 3), to trigger the AMF to send a session update request to an SMF (corresponding to step S304 in FIG. 3), and the SMF sends an N4 session modification request to a UPF in response to the session update request (corresponding to step S305 in FIG. 3), to request the UPF to allocate core network tunnel information of the terminal. After allocating the core network tunnel information of the terminal, the UPF sends, to the target access network device by using steps S306 to S308, the core network tunnel information allocated by the UPF to the terminal. In addition, after receiving the core network tunnel information of the terminal, the target access network device sends, to the UPF by using step S309, access network tunnel information allocated by the target access network device to the terminal.

In this communication method, there is a relatively large amount of signaling exchange related to obtaining the core network tunnel information of the terminal by the target access network device, and specific response duration is required for the target access network device to request and wait for the UPF to allocate the core network tunnel information to the terminal. From a perspective of a handover procedure of a single UE, handover efficiency is to be improved. In addition, a core network serves a large quantity of UEs, and a low earth orbit satellite moves at a high speed. Each UE is frequently handed over to different access network devices, and a same access network device and different access network devices frequently obtain core network tunnel information of the terminal from the UPF. This easily causes a network congestion problem. Consequently, a problem of waiting duration for the target access network device to wait for the user plane function network element to allocate the core network tunnel information to the terminal is prominent, and a problem of efficiency of handing over the UE to an access network device is prominent.

In addition, the UE is frequently handed over to different access network devices, and an NG interface between the access network device and the AMF needs to frequently process signaling exchange related to Xn handover (for example, steps S303, S308, and S309). Consequently, a signaling storm of the NG interface is caused, and a communication pressure problem is to be resolved.

In view of this, embodiments of this application provide a communication method, to improve handover efficiency of a UE handover procedure.

In a communication method provided in embodiments of this application, after determining, based on first handover time information, that a UE is to be handed over to a second access network device, a first access network device sends a handover request message about the UE to the second access network device, where the first handover time information includes corresponding access time for accessing different RANs by the UE. After receiving the handover request message, the second access network device communicates with a UPF based on the handover request message and core network tunnel information that is of the terminal and that has been stored by the second access network device. After determining, based on second handover time information, that the UE is to be handed over to the second access network device, the AMF sends a first message about the UE to an SMF, where the second handover time information includes the corresponding access time for accessing the different RANs by the UE, and the first message is used to request the SMF to update access network tunnel information of a session of the terminal to access network tunnel information for the second access network device to serve the session of the terminal.

According to the communication method provided in this application, after receiving the handover request message for the terminal, the second access network device communicates with the UPF based on core network tunnel information of the terminal that has been established between the second access network device and the UPF, and does not need to send, to the AMF, a path switch message for requesting the UPF to allocate core network tunnel information to the terminal. In this way, a procedure in which the second access network device requests and waits for the UPF to allocate the core network tunnel information to the terminal in a handover procedure is omitted, thereby improving handover efficiency of frequently performing the handover procedure by the terminal. In addition, a problem of communication pressure on an NG interface caused by frequently performing the handover procedure by the terminal is avoided. For example, the second access network device does not need to send an N2 path switch request in step S303 shown in FIG. 3 to the AMF, and the AMF does not need to send an N2 path switch request acknowledgement shown in step S308 to the second access network device. In addition, the AMF cooperates, based on the second handover time information, to perform a corresponding procedure of handing over the UE to the second access network device (for example, updating RAN UE NGAP IP corresponding to the terminal, and sending the first message corresponding to the terminal to the SMF), to ensure consistency and integrity of the UE handover procedure.

In an example, the core network tunnel information that is of the terminal and that is stored in the second access network device may be allocated by the UPF to the terminal when the terminal accesses the second access network device in a previous satellite operation period, or may be allocated to the terminal and sent to the second access network device by the UPF requested by a third access network device before the second access network device receives the handover request message.

In another communication method shown in FIG. 3, signaling exchange for sending, to the UPF, access network tunnel information allocated by the target access network device to the terminal also needs specific execution duration. When a plurality of UEs frequently perform a handover procedure, signaling exchange related to access network tunnel information also adversely affects handover efficiency to some extent.

In view of this, in the communication method provided in this application, the SMF may further allocate access network tunnel information to the terminal, so that the AMF does not need to wait for the access network tunnel information allocated by the second access network device to the terminal, and may not need to send, to the SMF, the access network tunnel information allocated by the second access network device to the terminal, thereby further improving handover efficiency.

Alternatively, in the communication method provided in this application, before the terminal currently accesses the second access network device, the access network tunnel information allocated by the second access network device to the terminal is sent to the AMF in advance. When the terminal accesses the second access network device, the second access network device does not need to send, to the AMF, the access network tunnel information allocated to the terminal. For example, when the terminal accesses the first access network device, the first access network device sends, to the AMF, access network tunnel information allocated by a plurality of other access network devices to the terminal, thereby further improving handover efficiency.

Alternatively, in the communication method provided in this application, when the terminal accesses the second access network device last time, after receiving the access network tunnel information that is allocated to the terminal and that is sent by the second access network device, the AMF stores the access network tunnel information. When the terminal accesses the second access network device next time, the second access network device does not need to send, to the AMF, the access network tunnel information allocated to the terminal, thereby further improving handover efficiency.

In another communication method provided in embodiments of this application, after determining, based on second handover time information, to hand over a UE to a second access network device, an AMF may not send a first message corresponding to the terminal to an SMF. Instead, the SMF actively triggers, based on the second handover time information, to send a second message to a UPF, to request the UPF to update access network tunnel information of a session of the terminal. In this way, execution duration of one request and one response is further reduced, communication efficiency is further improved, and a problem of communication pressure on an N11 interface caused by frequently performing a handover procedure by the terminal is reduced.

In another communication method provided in embodiments of this application, after determining, based on second handover time information, to hand over a UE to a second access network device, an SMF may not send a second message corresponding to the terminal to a UPF, but the UPF actively triggers, based on the second handover time information, to update access network tunnel information of a session of the terminal. In this way, communication pressure on an NG interface and an N11 interface is relieved, and a problem of communication pressure on an N4 interface caused by frequently performing a handover procedure by the terminal is further reduced.

In this application, the N2 path switch message is also referred to as a path switch message, the first message is also referred to as a PDU session update request message or an update request message, and the second message is also referred to as an N4 session modification request. A specific name is determined according to a communication protocol standard. This is not limited in this specification.

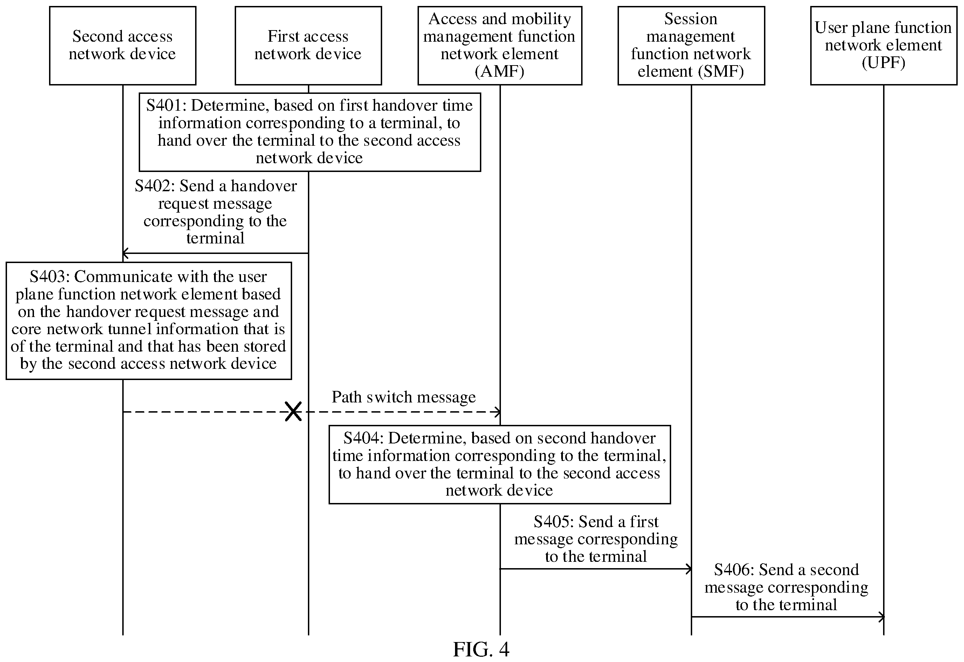

With reference to FIG. 4, the following describes a communication method provided in this application. For descriptions of a first access network device, a second access network device, an AMF, an SMF, and a UPF in FIG. 4, refer to related descriptions in FIG. 1 and FIG. 2. As shown in FIG. 4, the method includes the following steps.

S401: The first access network device determines, based on first handover time information of a terminal, to hand over the terminal to the second access network device.

The first access network device may be an access network device currently accessed by the terminal, and the first access network device may be any one of access network devices that can serve the terminal.

The first handover time information corresponding to the terminal may include time for serving the terminal by at least one access network device, and the time for serving the terminal by the access network device may be a service time period, or may be a service end moment. If the service time is a service time period, the first access network device determines handover to the second access network device based on an end moment in the service time period. If the service time is a service end moment, the first access network device determines, based on the service end moment, to hand over the terminal to the second access network device. For example, when the service time is a service end moment, if the at least one access network device includes a RAN1 and a RAN2, an end time point for serving the terminal by the RAN1 is T1, and an end time point for serving the terminal by the RAN2 is T2, the first handover time information corresponding to the terminal may include T1 corresponding to the RAN1 and T2 corresponding to the RAN2, which may be specifically represented in a form of a list. This is not limited.

The at least one access network device may include all or some access network devices that can serve the terminal.

The access network device that can serve the terminal is an access network device whose signal coverage area includes a location of the terminal in a running process, and the at least one access network device includes the second access network device.

In some possible implementations, a satellite corresponding to the at least one access network device and a satellite corresponding to the first access network device belong to a same constellation; or a satellite corresponding to the at least one access network device and a satellite corresponding to the first access network device have a direct inter-satellite link connection and/or an indirect inter-satellite link connection; or a coverage area of each of the at least one access network device includes the location of the terminal.

In some possible implementations, the first access network device may determine the first handover time information based on access time for separately accessing the at least one access network device by the terminal in a satellite operation period (a previous satellite operation period). The satellite operation period is duration corresponding to a period in which a satellite starts to operate from any location in orbit and then returns to the location. The first access network device may store access time corresponding to all or some access network devices that can serve the terminal and that are accessed by the terminal in a complete satellite operation period. It should be noted that the access time may be specifically a service time period or may be a service end moment, and the access time and the service time are merely different description manners of a same concept from different subject perspectives.

In an example, the first access network device obtains the first handover time information based on a satellite operation period and corresponding access time for accessing the at least one access network device by the terminal in a last satellite operation period. For example, the satellite operation period is 1 hour. In the satellite operation period, the terminal accesses the RAN1 from 09:00 to 09:05, and accesses the RAN2 from 9:06 to 09:10.... In this case, the terminal accesses the RAN1 from 10:00 to 10:05 and accesses the RAN2 from 10:05 to 10:10 in a next satellite operation period, and so on. The at least one access network device may include all or some access network devices accessed by the terminal in a complete satellite operation period. For example, the first access network device stores only time for accessing the RAN1 and the RAN2 by the terminal in the latest satellite operation period, and does not store time for accessing another RAN by the terminal. In this case, the first handover time information may be determined based on the corresponding access time for separately accessing the RAN1 and the RAN2 by the terminal.

In another example, the first access network device obtains the first handover time information based on a satellite operation period and corresponding access time for accessing the first access network device by the terminal in a last satellite operation period (the access time may be a service time period in which the first access network device serves the terminal, or may be an end moment at which the terminal ends accessing the first access network device). For example, the satellite operation period is 1 hour, and the first access network device serves the UE within 5 minutes starting from a start moment in a satellite operation period. When a service end moment of serving the terminal by the first access network device arrives, the first access network device initiates a handover request message about the terminal to a next access network device (the second access network device) in a satellite operation direction. For example, in the last satellite operation period, the terminal accesses the first access network device from 09:00 to 09:05. In this case, in a next satellite operation period of the satellite operation period to which the first access network device belongs, the terminal accesses the first access network device from 10:00 to 10:05. In the next satellite operation period, a sending time at which the first access network device sends the handover request message to the second access network device is an end moment corresponding to 10:05, and so on. The second access network device is a next access network device of the first access network device in the satellite operation direction. Alternatively, the second access network device may be determined after the first access network device interacts with a plurality of access network devices through an inter-satellite link. A specific access network device being the second access network device and a manner of determining the second access network device are not limited.

It should be noted that the description that the satellite operation period is 1 hour and duration for serving the UE by each access network device in one satellite operation period is 5 minutes is merely an example. The satellite operation period and the duration for serving the UE by each access network device in one satellite operation period may alternatively be in other precision. This is not limited in this specification.

In some other possible implementations, the first access network device may determine the first handover time information based on the location of the terminal and ephemeris information. The ephemeris information includes ephemeris information of satellites corresponding to one or more access network devices that can serve the terminal. Specifically, the first access network device may deduce, by mastering ephemeris information of a satellite, information such as a location and a signal coverage area of an access network device corresponding to the satellite at any moment in the future, and predict, based on the location of the terminal and the signal coverage area of the access network device, access time for accessing each access network device by the terminal, to obtain the first handover time information. It may be understood that the access network device corresponding to the satellite is an access network device deployed on the satellite.

In an example, the first access network device obtains ephemeris information corresponding to another access network device based on local storage and/or communication interaction with the another access network device. For example, the first access network device stores the ephemeris information corresponding to the another access network device. Alternatively, the first access network device obtains (or receives) the ephemeris information corresponding to the another access network device based on communication interaction with the another access network device. Alternatively, the first access network device obtains the ephemeris information corresponding to the another access network device based on a combination of two manners of local storage and communication interaction with the another access network device. Specifically, the first access network device locally stores ephemeris information corresponding to some access network devices, and obtains ephemeris information of remaining access network devices based on communication interaction with the other access network devices.

The ephemeris information of the satellite includes one or more of the following: a satellite coverage map, satellite coverage availability information, satellite motion rule information, and satellite-related information that has a correspondence with time. The satellite coverage map means that a map is divided into a plurality of grids, and each satellite corresponds to a coverage map at each moment. Grid points are marked on the coverage map. In the coverage map, bright grid points indicate that there is signal coverage, and dark grid points indicate that there is no signal coverage. The satellite motion rule information may include information such as an orbit parameter, an angular velocity, a speed, and an initial location of the satellite. The satellite-related information that has a correspondence with time includes location information of the satellite and capability information of the satellite that correspond to a corresponding moment or a corresponding time period.

In some other possible implementations, the first access network device may alternatively obtain the first handover time information by receiving the first handover time information from the AMF. For example, the AMF sends the first handover time information to the first access network device after the AMF determines the first handover time information based on the access time for separately accessing the at least one access network device by the terminal in the satellite operation period or based on the location of the terminal and ephemeris information.

In some other possible implementations, the AMF may determine second handover time information, and send the second handover time information to the first access network device, and the first access network device determines the first handover time information based on the second handover time information. For details, refer to detailed descriptions in the following step S603.

It should be noted that first handover time information that corresponds to the terminal and that is stored in each access network device may be consistent. For example, handover time information stored in each access network device includes time for serving the terminal by some specific access network devices in the foregoing at least one access network device. For another example, handover time information stored in each access network device is total handover time information. The total handover time information includes corresponding access time for accessing, by the terminal, all access network devices that can serve the terminal. That is, if the first handover time information includes corresponding time for serving the terminal by at least one access network device, the at least one access network device is all access network devices that are accessed by the terminal and that can serve the terminal. In this scenario, after obtaining the first handover time information, the first access network device may further send the first handover time information to another access network device that can serve the terminal, to further alleviate a performance loss problem caused by mechanically and repeatedly determining, by the another access network device, handover time information corresponding to the terminal.

Alternatively, first handover time information that is of the terminal and that is stored in each access network device may be inconsistent. For example, the first handover time information stored in the first access network device includes only one of access time (a time point or a time period) for accessing a neighboring access network device by the terminal, a time period in which the terminal accesses the first access network device, and an end moment at which the terminal ends a connection to the first access network device. The neighboring access network device is a next access network device of the first access network device in the satellite operation direction.

In some possible implementations, the communication method provided in this application is applicable to a scenario in which a terminal of a target terminal type performs a handover procedure, and the terminal of the target terminal type is a stationary terminal. In an example, the stationary terminal is a terminal whose location does not change or whose moving speed is 0. It should be noted that the communication method provided in this application is also applicable to a scenario in which a terminal whose type is not a target terminal type performs a handover procedure. However, in this scenario, when a location of the terminal changes, an access network device and an AMF side need to re-obtain corresponding handover time information based on the location of the terminal.

S402: The first access network device sends a handover request message corresponding to the terminal to the second access network device.

Correspondingly, the second access network device receives the handover request message.

The handover request message is used to request to hand over the terminal to the second access network device. For example, the handover request message carries context information of the terminal, and the context information of the terminal includes a first identifier of the terminal. In some possible implementations, the context information may further include an identifier of a PDU session of the terminal, and the first identifier of the terminal may be an identifier (UE ID) of the terminal, or the first identifier of the terminal may be a cell radio network temporary identifier (cell radio network temporary identifier, C-RNTI) of the terminal.

S403: The second access network device communicates with a user plane function network element based on the handover request message and core network tunnel information that is of the terminal and that has been stored by the second access network device.

For example, in response to the handover request message, the second access network device triggers to establish a GTP-U tunnel to the user plane function network element by using the core network tunnel information that is of the terminal and that has been stored in the second access network device, to perform communication.

In a possible implementation, before the second access network device receives the handover request message from the first access network device, the method further includes: The second access network device receives the core network tunnel information of the terminal, and stores the core network tunnel information. That the second access network device receives the core network tunnel information corresponding to the terminal includes: receiving the core network tunnel information of the terminal from the first access network device; or receiving the core network tunnel information of the terminal from a session management function network element.

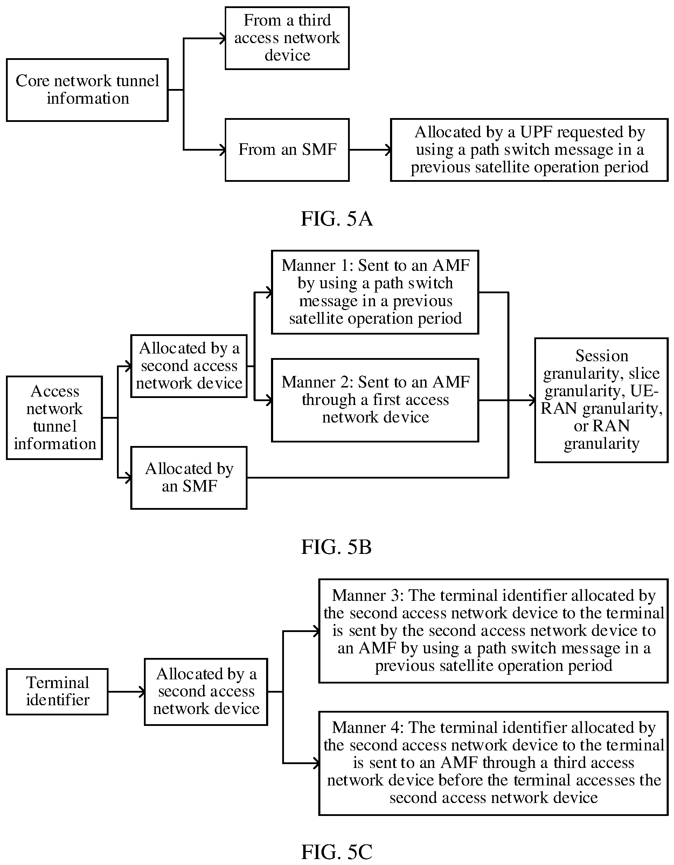

In other words, as shown in FIG. 5A, the core network tunnel information that is of the terminal and that has been stored in the second access network device may be from a third access network device (the third access network device is the first access network device or another access network device). Specifically, access network tunnel information of the terminal may mean that when the terminal accesses the third access network device in a previous satellite operation period, the third access network device requests the UPF to allocate the core network tunnel information for another access network device to serve the terminal. The another access network device includes the second access network device. After allocating the corresponding core network tunnel information for the another access network device to serve the terminal, the UPF sends the corresponding core network tunnel information to a corresponding access network device in the another access network device through the third access network device. After receiving the corresponding core network tunnel information, the another access network device stores the corresponding core network tunnel information.

Alternatively, FIG. 5A is reused. The core network tunnel information that is of the terminal and that has been stored in the second access network device may be from the SMF. Specifically, the core network tunnel information of the terminal is allocated by the UPF for the second access network device to serve the terminal and sent to the second access network device through the SMF when the terminal accesses the second access network device in a historical satellite operation period. For example, before receiving the handover request message, when the terminal accesses the second access network device in a previous satellite operation period, the second access network device sends a path switch message to the AMF, so that the AMF and the SMF are used to request the UPF to allocate the core network tunnel information to the terminal. After allocating the core network tunnel information to the terminal, the UPF sends the core network tunnel information to the second access network device. After receiving the core network tunnel information, the second access network device stores the core network tunnel information.

In this embodiment of this application, after the second access network device receives the handover request message for the terminal, the second access network device does not send, to the AMF, the path switch message for requesting the UPF to allocate the core network tunnel information to the terminal, but communicates with the terminal based on a core network tunnel for the terminal that has been established between the second access network device and the UPF. In this way, a procedure in which the second access network device requests and waits for the UPF to allocate the core network tunnel information to the terminal in a handover procedure is omitted, thereby improving handover efficiency, and avoiding a problem of network congestion caused because a plurality of terminals frequently perform a handover procedure.

S404: The AMF determines, based on the second handover time information corresponding to the terminal, to hand over the terminal to the second access network device.

In this embodiment of this application, the second handover time information includes time for serving the terminal by at least one access network device, the at least one access network device includes the second access network device, and the at least one access network device includes all or some access network devices that can serve the terminal.

In this embodiment of this application, the first handover time information stored in the first access network device corresponds to the second handover time information stored in the AMF.

In an example, for time for serving the terminal by a same access network device (for example, an access network device A), time for serving the terminal by the access network device A that is recorded in the first handover time information is the same as time for serving the terminal by the access network device A that is recorded in the second handover time information.

In another example, for access time corresponding to a same access network device (for example, an access network device A), time for serving the terminal by the access network device A that is recorded in the first handover time information is earlier than or later than time for serving the terminal by the access network device A that is recorded in the second handover time information. For example, the time for serving the terminal by the access network device A that is recorded in the first handover time information is denoted as service time 1, and the time for serving the terminal by the access network device A that is recorded in the second handover time information is denoted as service time 2. The service time 1 is earlier than the service time 2. For example, a time difference between the two pieces of service time is time for transmitting signaling once between the satellite and the ground. To be specific, although the second access network device does not send signaling of the path switch message to the AMF, when the AMF normally performs a handover procedure for handing over the terminal to the second access network device, sending of the signaling needs to be waited for to trigger execution of a corresponding handover procedure. Therefore, a time period of signaling transmission is an acceptable error range. The time difference between the two pieces of service time, a time sequence of the two pieces of service time, and a length of the time difference are not limited in this specification.

In some possible implementations, the AMF determines the second handover time information based on the access time for separately accessing the at least one access network device by the terminal in the satellite operation period. For details, refer to the foregoing related description of determining, by the first access network device, the first handover time information based on the access time for separately accessing the at least one access network device by the terminal in the satellite operation period. Details are not described herein again.

In some other possible implementations, the AMF determines the second handover time information based on the location of the terminal and the ephemeris information. Specifically, the AMF may obtain the ephemeris information based on a local configuration and/or communication interaction with an access network device, to determine the second handover time information. For example, corresponding ephemeris information is obtained through communication interaction with the access network device by using an NG Set Request message. For details, refer to the foregoing related description of determining, by the first access network device, the first handover time information based on the location of the terminal and the ephemeris information. Details are not described herein again.

In some other possible implementations, the AMF may alternatively obtain the second handover time information based on handover time information (the first handover time information or the second handover time information) from any access network device that can serve the terminal.

S405: The AMF sends a first message corresponding to the terminal to the SMF.

Correspondingly, the SMF receives the first message.

The first message is used to update access network tunnel information of the terminal.

Specifically, the first message may be used to request the SMF to update access network tunnel information of a session of the terminal to access network tunnel information corresponding to the second access network device.

In this embodiment of this application, the AMF determines, as the second access network device based on the second handover time information, a target access network device that corresponds to the terminal and current time, and triggers sending of the first message to the SMF. The first message includes a request message used to request the SMF to update the access network tunnel information of the session of the terminal to the access network tunnel information corresponding to the second access network device. In some descriptions of this application, the first message may also be referred to as an update request message (for example, Nsmf_PDUsession_Update SMContext Request). A specific name of the first message is determined according to a protocol standard. This is not limited in this specification.

Refer to FIG. 5B. In some possible implementations, an access network tunnel for the second access network device to serve the terminal may be allocated by the SMF. Correspondingly, the first message sent by the AMF to the SMF may carry an identifier of the second access network device. The first message is used to request the SMF to allocate first access network tunnel information to the terminal based on the identifier of the second access network device, and request the SMF to update the access network tunnel information of the terminal to the first access network tunnel information.

Refer to FIG. 5B. In some possible implementations, an access network tunnel for the second access network device to serve the terminal may be alternatively allocated by the second access network device. After allocating the access network tunnel information to the terminal, the second access network device sends the access network tunnel information to the AMF. The AMF determines, based on the access network tunnel information, data content carried in the first message. For example, when the terminal accesses the second access network device in a previous satellite operation period, the second access network device sends, to the AMF by using a path switch message, the access network tunnel information allocated to the terminal, and correspondingly, the AMF stores an association relationship between the access network tunnel information, the identifier of the second access network device, the identifier of the terminal, and access time for accessing the second access network device by the terminal next time, so that when the terminal accesses the second access network device again in a next satellite operation period, the AMF actively triggers, based on the access network tunnel information and the access time for accessing the second access network device by the terminal next time in the association relationship, to send the first message to the SMF based on the corresponding identifier of the second access network device and the corresponding access network tunnel information.

For a sending manner in which the second access network device sends, to the AMF, the access network tunnel information allocated by the second access network device to the terminal, refer to the following related descriptions of manner 1 and manner 2. Details are not described herein.

It should be noted that regardless of whether the access network tunnel information for serving the terminal is allocated by the SMF or the second access network device, the access network tunnel information may be access network tunnel information at a session granularity, a slice granularity, a UE-RAN granularity, or a RAN granularity.

In an example, the access network tunnel information allocated by the second access network device to the terminal is aggregation access network tunnel information at the UE-RAN granularity or the RAN granularity, the first message carries the identifier of the second access network device and an identifier of one or more sessions of the terminal, and the first message is used to request the SMF to determine aggregation access network tunnel information corresponding to the identifier of the second access network device, and update access network tunnel information corresponding to the one or more sessions of the terminal to the aggregation access network tunnel information. For example, before the second access network device receives the handover request message corresponding to the terminal from the first access network device, the second access network device has sent the aggregation access network tunnel information at the UE-RAN granularity or the RAN granularity to the AMF, and after receiving the aggregation access network tunnel information, the AMF sends a correspondence between the aggregation access network tunnel information and the identifier of the one or more sessions of the terminal to the SMF. The SMF records the correspondence between the aggregation access network tunnel information and the identifier of the one or more sessions of the terminal. Therefore, after receiving, from the AMF, the first message that carries the identifier of the second access network device and the identifier of the one or more sessions of the terminal, the SMF may determine the aggregation access network tunnel information corresponding to the identifier of the second access network device, and update, based on the aggregation access network tunnel information, the access network tunnel information corresponding to the one or more sessions of the terminal to the aggregation access network tunnel information.

In another example, the access network tunnel information allocated by the second access network device to the terminal is access network tunnel information at the session granularity, the first message carries an identifier of one or more sessions of the terminal and access network tunnel information corresponding to the one or more sessions, and the first message is used to request the SMF to update access network tunnel information of a corresponding session of the terminal to the access network tunnel information for the second access network device to serve the session.

According to the communication method provided in this application, in an Xn handover procedure of the terminal, the second access network device communicates with the UPF based on the core network tunnel information that has been stored in the second access network device, and does not need to send, to the AMF, the path switch message used to request the UPF to allocate core network tunnel information to the terminal, thereby relieving communication pressure on an NG interface and improving handover efficiency. In addition, the first access network device and the AMF respectively perform, based on the first handover time information and the second handover time information, corresponding tasks of handing over the UE to the second access network device, to ensure consistency and integrity of a handover procedure of handing over the UE from the first access network device to the second access network device.

S406: The SMF sends a second message corresponding to the terminal to the UPF.

The second message is used to request the UPF to update access network tunnel information corresponding to the terminal to the access network tunnel information corresponding to the second access network device.

Correspondingly, the UPF receives the second message.

In this embodiment of this application, the second message may also be referred to as an N4 session modification request. The second message carries the access network tunnel information of the terminal, and does not carry indication information for requesting the UPF to allocate the core network tunnel information of the terminal. For example, the second message specifically carries a first N4 session ID and second access network tunnel information, the first N4 session ID corresponds to one or more sessions of the terminal, and the first N4 session ID is a private identifier that identifies one or more sessions of a same terminal between the SMF and the UPF. The UPF modifies, based on the second message, all access network tunnel information corresponding to the first N4 session ID to the second access network tunnel information.

In a possible implementation, after step S402 in which the second access network device receives the handover request message from the first access network device, the communication method shown in FIG. 4 further includes: The second access network device does not send a path switch message to the access and mobility management function network element if the second access network device has stored the core network tunnel information of the terminal and the second access network device has allocated the access network tunnel information to the terminal, where the path switch message is used to switch a path corresponding to the terminal.

In this embodiment of this application, as shown in FIG. 5B, the access network tunnel information for the UPF and the second access network device to serve the terminal may be allocated by the second access network device to the terminal, and the access network tunnel information allocated by the second access network device to the terminal may be sent to the AMF in two optional manners (manner 1 and manner 2) before the second access network device receives the handover request message corresponding to the terminal.

Manner 1: The access network tunnel information allocated by the second access network device to the terminal is sent to the AMF by using a path switch message in a previous satellite operation period.

For example, before the second access network device receives the handover request message corresponding to the terminal, the terminal has accessed the second access network device in the previous satellite operation period, and the second access network device has sent, to the AMF, a path switch message that carries the access network tunnel information allocated by the second access network device to the terminal.

Manner 2: The access network tunnel information allocated by the second access network device to the terminal is sent to the AMF through a third access network device.

The third access network device may be the first access network device or another access network device.

For example, before the first access network device sends the handover request message to the second access network device, the first access network device requests another access network device to allocate access network tunnel information to the terminal, where the another access network device includes the second access network device. The first access network device receives the access network tunnel information allocated by the another access network device to the terminal, and sends, to the AMF, the access network tunnel information allocated by the another access network device to the terminal. Therefore, when the terminal accesses the second access network device, the second access network device and the UPF serve the terminal by using the access network tunnel information allocated by the second access network device to the terminal in advance, so that the second access network device does not need to send, to the AMF, a path switch message that carries the access network tunnel information allocated by the second access network device to the terminal. In this embodiment of this application, when the at least one access network device in the first handover time information includes the first access network device, the another access network device includes one or more access network devices other than the first access network device in the at least one access network device; or when the at least one access network device does not include the first access network device, the another access network device is one or more of the at least one access network device.

Based on manner 1 or manner 2, when the terminal accesses the second access network device again, the AMF or the SMF requests, based on the access network tunnel information allocated by the second access network device to the terminal in the previous satellite operation period or based on the access network tunnel information allocated by the second access network device to the terminal in advance before the second access network device receives the handover request message, the UPF to update an N3 path of the terminal. The second access network device does not need to send, to the AMF through an NG interface, the access network tunnel information allocated by the second access network device to the terminal, so that a signaling storm problem on the NG interface is further alleviated, communication pressure on the NG interface is relieved, and handover efficiency is improved.

In the foregoing manner 1, the second access network device needs to send, to the AMF only once, the access network tunnel information allocated by the second access network device to the terminal. When the terminal accesses the second access network device next time, the second access network device no longer sends tunnel information to the terminal. The access network tunnel information is used a plurality of times after being sent once. This relieves communication pressure on the NG interface, and improves handover efficiency. For example, for signaling exchange that is about access network tunnel information between the second access network device and the AMF and that corresponds to n times (n is greater than or equal to 2) of access of the terminal to the same second access network device, n pieces of signaling is reduced to one piece, so that communication pressure on the NG interface is relieved. In addition, the third access network device does not need to forward, to the AMF, the access network tunnel information allocated by the second access network device to the terminal, thereby reducing interaction between access network devices.

In the foregoing manner 2, the third access network device forwards, to the AMF, the access network tunnel information allocated by the another access network device to the terminal. For example, the another access network device is all or some access network devices that can serve the terminal and that are other than the third access network device. In other words, signaling exchange of sending the access network tunnel information by all the access network devices (or the some access network devices) to the AMF is combined into a same message for sending. All the access network devices (including the second access network device) may not send, to the AMF through the NG interface from beginning to end, signaling that includes the access network tunnel information, so that communication pressure on the NG interface is further relieved, and handover efficiency is improved.

In this embodiment of this application, the access network tunnel information and the core network tunnel information of the terminal may be tunnel information at a session granularity, a slice granularity, a UE-RAN granularity, or a RAN granularity.

In some possible implementations, when the access network tunnel information allocated by the second access network device to the terminal belongs to an access network tunnel at the session granularity, that the first access network device requests the another access network device to allocate the access network tunnel information to the terminal may specifically include: In a process in which the terminal establishes a first session by using the first access network device, the first access network device requests the another access network device to allocate access network tunnel information to the first session, where the request may carry an identifier of the first session. For example, if the terminal establishes a session 1 and a session 2 by using the first access network device, in a process of establishing the session 1 and the session 2, the first access network device may request the another access network device to allocate access network tunnel information to the session 1 and the session 2. A request 1 (requesting the another access network device to allocate access network tunnel information to the session 1) and a request 2 (requesting the another access network device to allocate access network tunnel information to the session 2) may be in a same message, or may be two different request messages. This is not limited in this specification.

For the foregoing manner 2, after the terminal accesses each access network device, not all the access network devices need to request the another access network device to allocate access network tunnel information to the terminal. For example, when the first access network device accessed by the terminal is a preset access network device, the first access network device requests the another access network device to allocate access network tunnel information to the terminal. The preset access network device is a preset access network device that is configured to request the another access network device to allocate access network tunnel information to the terminal. For example, the preset access network device is a 1^{st} access network device accessed by the terminal, or the preset access network device is a specific access network device at a specific location in a satellite operation period, or the preset access network device is an access network device to which the terminal establishes a session.

In some other possible implementations, a path switch message is sent to the access and mobility management function network element if the second access network device does not store the core network tunnel information of the terminal or the second access network device does not allocate access network tunnel information to the terminal, where the path switch message is used to switch a path corresponding to the terminal.

For example, after receiving the handover request message in step S802, the second access network device determines whether the second access network device has stored the core network tunnel information of the terminal, and determines whether the second access network device has allocated the access network tunnel information to the terminal.
(1) When determining that the core network tunnel information of the terminal has not been stored and the second access network device has not allocated the access network tunnel information to the terminal, the second access network device sends the path switch message to the AMF, to request, through the AMF and the SMF, the UPF to allocate core network tunnel information to the terminal, receive the access network tunnel information allocated by the second access network device to the terminal, and send the access network tunnel information to the UPF. For example, after the second access network device requests, through the AMF and the SMF, the UPF to allocate the core network tunnel information to the terminal, the second access network device allocates the access network tunnel information to the terminal, and sends the access network tunnel information to the UPF through the AMF and the SMF.
(2) When determining that the core network tunnel information of the terminal has not been stored and the second access network device has allocated the access network tunnel information to the terminal, the second access network device sends the path switch message to the AMF, to request, through the AMF and the SMF, the UPF to allocate core network tunnel information to the terminal. After the second access network device receives the core network tunnel information of the terminal, the second access network device may or may not send, to the UPF, the access network tunnel information allocated by the second access network device to the terminal. This is not limited in this specification.
(3) When the second access network device determines that the core network tunnel information of the terminal has been stored and the second access network device has not allocated the access network tunnel information to the terminal, the second access network device sends the path switch message to the AMF, and the second access network device may further perform step S403. In an example, the path switch message may carry the access network tunnel information allocated by the second access network device to the terminal, and the path switch message indicates the AMF to request the SMF to request the UPF to update the access network tunnel information of the terminal. The following describes a relationship between the path switch message and the core network tunnel information: When the second access network device does not perform step S403, the path switch message may be further used to request the UPF to allocate new core network tunnel information to the terminal. Alternatively, when the second access network device performs step S403, the path switch message may not have a function of requesting the UPF to allocate new core network tunnel information to the terminal. This is not limited in this specification. In another example, the path switch message does not carry the access network tunnel information allocated by the second access network device to the terminal, and the path switch message is used to request the UPF to allocate new core network tunnel information to the terminal, so that after receiving the core network tunnel information of the terminal, the second access network device allocates access network tunnel information to the terminal and sends the access network tunnel information to the UPF. The second access network device communicates with the UPF based on the new core network tunnel information of the terminal and the access network tunnel information of the terminal.
(4) When determining that the core network tunnel information of the terminal has been stored and the second access network device has allocated the access network tunnel information to the terminal, the second access network device does not send the path switch message to the AMF. In this way, related request and waiting duration is omitted, handover efficiency of frequently performing a handover procedure by the terminal is improved, and communication pressure on the NG interface caused by frequently performing the handover procedure by the terminal is relieved.

In some other possible implementations, if the access network tunnel information for the second access network device to serve the terminal is allocated by the SMF, after receiving the handover request message in step S802, the second access network device determines whether the second access network device has stored the core network tunnel information of the terminal, and does not need to determine whether the second access network device has allocated the access network tunnel information to the terminal. In addition, the second access network device performs S403 when determining that the second access network device has stored the core network tunnel information of the terminal. When determining that the second access network device has not stored the core network tunnel information of the terminal, the second access network device sends the path switch message to the AMF, to request, through the AMF and the SMF, the UPF to allocate core network tunnel information to the terminal.

In some other possible implementations, the path switch message may further carry a terminal identifier allocated by the second access network device to the terminal. The foregoing "the second access network device does not send a path switch message to the access and mobility management function network element if the second access network device has stored the core network tunnel information of the terminal and the second access network device has allocated the access network tunnel information to the terminal" specifically includes: When the second access network device has stored the core network tunnel information of the terminal, the second access network device has allocated the access network tunnel information to the terminal, and the second access network device has allocated the terminal identifier to the terminal, the second access network device does not send the path switch message to the AMF.

In addition, the foregoing "a path switch message is sent to the access and mobility management function network element if the second access network device does not store the core network tunnel information of the terminal or the second access network device does not allocate access network tunnel information to the terminal, where the path switch message is used to switch a path corresponding to the terminal" specifically includes: When the second access network device does not store the core network tunnel information of the terminal, or the second access network device does not allocate the access network tunnel information to the terminal, or the second access network device does not allocate the terminal identifier to the terminal, the path switch message is not sent to the AMF.

Correspondingly, in some possible implementations, step S404 in which the AMF determines to hand over the terminal to the second access network device may specifically include: The AMF determines, as the second access network device based on the second handover time information, a target access network device that corresponds to the terminal and current time, and updates a locally recorded second identifier of the terminal to the terminal identifier allocated by the second access network device to the terminal. The second identifier is a private terminal identifier (also referred to as a RAN UE NGAP ID) used to identify the terminal between the AMF and an access network device accessed by the terminal.

In some possible implementations, as shown in FIG. 5C, the terminal identifier allocated by the second access network device to the terminal may be sent to the AMF in advance in the following two optional manners (manner 3 and manner 4). Herein, "in advance" is before the second access network device receives the handover request message corresponding to the terminal, or before the AMF determines, based on the second handover time information, to hand over the terminal to the second access network device.

Manner 3: The terminal identifier allocated by the second access network device to the terminal is sent by the second access network device to the AMF by using a path switch message in a previous satellite operation period.

For example, before the second access network device receives the handover request message from the first access network device in step S402, the terminal has accessed the second access network device in the previous satellite operation period, and the second access network device has sent, to the AMF in any of the previous satellite operation period (for example, when the terminal accesses the second access network device for the first time or last time), a path switch message that carries the terminal identifier allocated by the second access network device to the terminal.

Manner 4: Before the terminal accesses the second access network device (that is, before the second access network device receives the handover request message), the terminal identifier allocated by the second access network device to the terminal is sent to the AMF through a third access network device, where the third access network device may be the first access network device or another access network device.

For example, before the first access network device sends the handover request message to the second access network device, the first access network device requests another access network device to allocate a terminal identifier to the terminal. The another access network device includes the second access network device, and the another access network device includes all or some access network devices that can serve the terminal. The first access network device receives the terminal identifier allocated by the another access network device to the terminal, and sends, to the AMF, the terminal identifier allocated by the another access network device to the terminal.

It should be noted that, for the foregoing manner 4, after the terminal accesses each access network device, not all the access network devices need to request the another access network device to allocate a terminal identifier to the terminal. For example, when the first access network device accessed by the terminal is a preset access network device, the first access network device requests the another access network device to allocate a terminal identifier to the terminal. The preset access network device is a preset access network device that is configured to request the another access network device to allocate a terminal identifier to the terminal. For example, the preset access network device is a 1^{st} access network device accessed by the terminal, or the preset access network device is a specific access network device at a specific location in a satellite operation period.

According to the communication method provided in this application, the first access network device sends the handover request message to the second access network device based on the first handover time information. After receiving the handover request message, the second access network device communicates with the UPF based on the stored core network tunnel information of the terminal. The AMF actively triggers, based on the second handover time information, execution of a corresponding task about handing over the UE to the second access network device (including sending the first message to the SMF to request to update the access network tunnel information of the terminal and update the second identifier of the terminal). This ensures consistency and integrity of air interface handover, RAN UE NGAP ID update, and N3 path update (including update of access network tunnel information and core network tunnel information) in a handover procedure in which the UE is handed over from the first access network device to the second access network device.

In some other possible implementations, the first access network device may alternatively send the handover request message about the terminal to the second access network device based on a signal strength change, and does not need to determine, based on the first handover time information, to send the handover request message about the terminal to the second access network device. In addition, the service time corresponding to each access network device included in the second handover time information corresponds to request time at which the first access network device sends the handover request message for the terminal to a corresponding access network device based on the signal strength change. For example, service time for serving the terminal by the second access network device in the second handover time information corresponds to request time corresponding to sending, by the first access network device, the handover request message about the terminal to the second access network device based on the signal strength change; and service time for serving the terminal by the third access network device in the second handover time information corresponds to request time corresponding to sending, by the second access network device, the handover request message about the terminal to the third access network device based on the signal strength change. In addition, the terminal is a stationary terminal. Therefore, even if a source access network device sends a handover request message for the terminal to a target access network device based on the signal strength change instead of the first handover time information, a related procedure for handing over the terminal to the target access network device can synchronously performed with the AMF, to ensure consistency and integrity of the handover procedure.

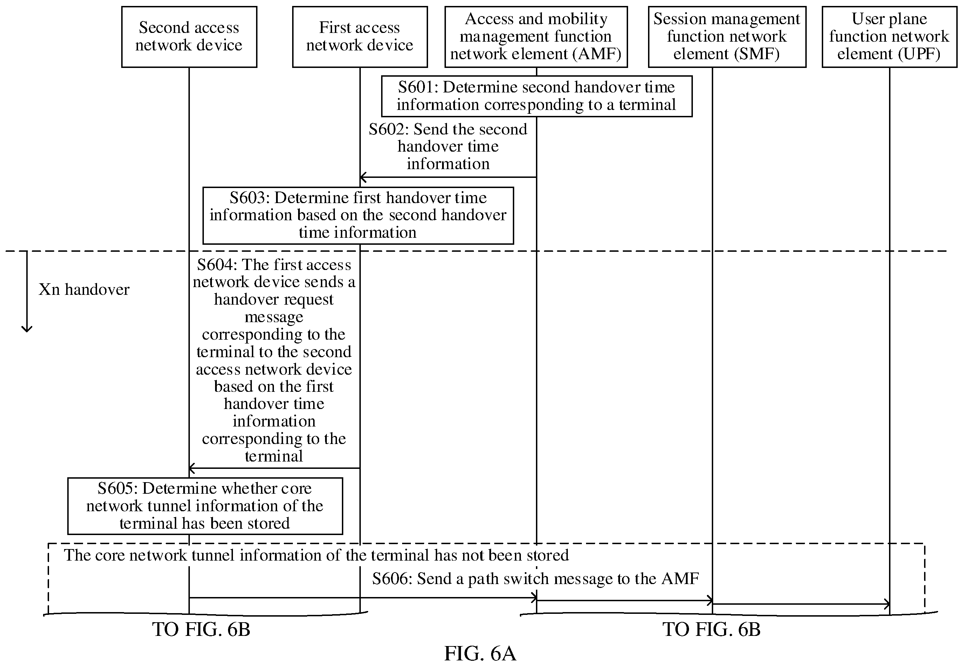

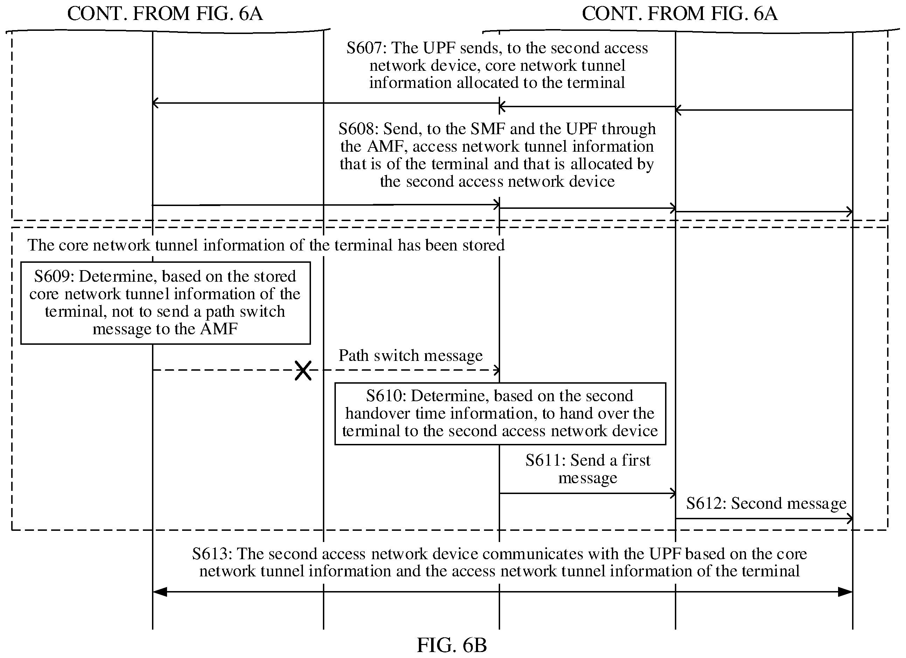

Specific applications of the communication method provided in this application are described below with reference to FIG. 6A and FIG. 6B to FIG. 11A to FIG. 11D based on an allocation body of the access network tunnel information used by the second access network device to serve the terminal and diversity of tunnel information (core network tunnel information and access network tunnel information) service granularities.

With reference to an interaction diagram shown in FIG. 6A and FIG. 6B, an application of a communication method provided in an embodiment of this application is described below by using an example in which a second access network device allocates access network tunnel information to a terminal and sends, to an AMF in the foregoing manner 1, the access network tunnel information allocated by the second access network device to the terminal. As shown in FIG. 6A and FIG. 6B, the method includes the following steps.

S601: The AMF determines second handover time information corresponding to the terminal.

In this embodiment of this application, the second handover time information corresponds to the terminal (UE), and different UEs correspond to different handover time information. The second handover time information includes an identifier of at least one access network device and time that corresponds to the identifier of the access network device and that is for serving the terminal. In the second handover time information, there may be one or more pieces of service time corresponding to an identifier of a same access network device.

In this embodiment of this application, the AMF may determine the second handover time information based on corresponding access time for accessing the at least one access network device by the terminal in a satellite operation period, or determine the second handover time information based on a location of the terminal and ephemeris information. For a specific manner of determining the second handover time information based on the location of the terminal and the ephemeris information, refer to related descriptions in step S404.

In an example, a condition for triggering the AMF to determine the second handover time information of the terminal may be that the AMF receives a session establishment request of the terminal for establishing a 1^{st} session.

In another example, a condition for triggering the AMF to update (determine) the second handover time information of the terminal may be that latest service time included in the second handover time information corresponding to the terminal is later than current time, and a difference between the latest service time and the current time is less than preset duration.

In another example, a condition for triggering the AMF to update (determine) the second handover time information of the terminal may alternatively be that the AMF completes a handover task for the terminal each time.

It should be noted that the AMF may alternatively determine or update the second handover time information of the terminal based on another appropriate trigger condition. This is not limited in this specification.

In an example, if the AMF updates the second handover time information of the terminal once each time the AMF completes a handover task for the terminal, the second handover time information determined by the AMF once corresponds to a next target access network device accessed by the terminal. In other words, the at least one access network device is a next target access network device accessed by the terminal in a satellite operation direction.

In another example, the second handover time information determined by the AMF once corresponds to at least two access network devices, and the at least two access network devices may be access network devices that are sequentially arranged in a satellite operation direction with an access network device currently accessed by the terminal.

In this embodiment of this application, the service time for serving the terminal by the access network device may be a moment or a service time period. This is not limited in this specification. When the service time is a service time period, a handover moment at which the terminal is handed over from a first access network device to the second access network device is an end moment of a service time period corresponding to the first access network device or a start moment of a service time period corresponding to the second access network device.

For example, the service time is a service time period, and an identifier of a same access network device corresponds to two pieces of different service time. Data specifically included in the second handover time information may be shown in the following Table 1.

**Table 1**

| Terminal identifier | Access network device identifier | Service time |
|---|---|---|
| | RAN1 ID | 00:00-00:05, 05:00-05:05 |
| | RAN2 ID | 00:05-00:10, 05:05-05:10 |
| UE1ID | ... | ... |
| | RAN30 ID | 02:25-02:30, 07:25-07:30 |
| | ... | ... |

S602: The AMF sends the second handover time information to the first access network device.

Correspondingly, the first access network device receives the second handover time information sent by the AMF.

S603: The first access network device determines first handover time information based on the second handover time information.

For example, after determining the second handover time information, the AMF may send the second handover time information to the first access network device, and the first access network device determines the first handover time information based on the second handover time information. Service time that is included in the first handover time information and that is for serving the terminal by the access network device is in one-to-one correspondence with the service time that is included in the second handover time information and that is for serving the terminal by the access network device.

In an example, for a same access network device A, if service time corresponding to the access network device A in the first handover time information is a first millisecond earlier than service time corresponding to the access network device A in the second handover time, after receiving the first handover time information, the first access network device may determine the first handover time information based on the second handover time information and the first millisecond, where the first millisecond may be time for transmitting signaling between a satellite and the ground once.

S604: The first access network device sends a handover request message corresponding to the terminal to the second access network device based on the first handover time information corresponding to the terminal.

Correspondingly, the second access network device receives the handover request message.

In this embodiment of this application, the first access network device determines, based on the first handover time information corresponding to the terminal, to hand over the terminal to the second access network device, and sends, to the second access network device, the handover request message corresponding to the terminal.

In an example, the handover request message carries context information of the terminal, and the context information of the terminal includes a first identifier of the terminal. For example, the first identifier may be a C-RNTI of the terminal.

S605: The second access network device determines whether core network tunnel information of the terminal has been stored.

In this embodiment of this application, the core network tunnel information may be at a session granularity, a slice granularity, a UE-RAN granularity, or a RAN granularity. This is not limited in this specification.

In this embodiment of this application, when the core network tunnel information is at the UE-RAN granularity or the RAN granularity, the second access network device performs step S606 when determining that the core network tunnel information of the terminal has not been stored; or the second access network device performs step S609 when determining that the core network tunnel information of the terminal has been stored.

When the core network tunnel information is at the session granularity, that the second access network device determines whether the core network tunnel information of the terminal has been stored in step S605 includes: The second access network device determines whether core network tunnel information respectively corresponding to all sessions of the terminal has been stored. The second access network device performs step S606 when determining that the core network tunnel information respectively corresponding to all the sessions of the terminal has been stored, or the second access network device performs step S609 when determining that the core network tunnel information respectively corresponding to all the sessions of the terminal has not been stored.

When the core network tunnel information is at the slice granularity, that the second access network device determines whether the core network tunnel information of the terminal has been stored in step S605 includes: The second access network device determines whether core network tunnel information respectively corresponding to all slices of the terminal has been stored. The second access network device performs step S606 when determining that the core network tunnel information respectively corresponding to all the slices of the terminal has been stored, or the second access network device performs step S609 when determining that the core network tunnel information respectively corresponding to all the slices of the terminal has not been stored.

S606: The second access network device sends a path switch message to the AMF.

Correspondingly, the AMF requests, based on the path switch request, a UPF to allocate core network tunnel information of the terminal.

In an example, step S606 specifically includes: The second access network device sends the path switch message to the AMF, where the path switch message indicates (or triggers) the AMF to request the core network tunnel information from the UPF through an SMF; the AMF sends an update request message to the SMF in response to the path switch message, where the update request message carries indication information for indicating the SMF to request the UPF to allocate the core network tunnel information to the terminal; and the SMF sends an N4 session modification request to the UPF in response to the update request message, where the N4 session modification request indicates the UPF to allocate the core network tunnel information to the terminal. For a specific implementation of step S606, refer to the protocol standard 3GPP TS 23.502. The path switch message may further carry an identifier (UE ID) of the terminal and a terminal identifier (RAN UE NGAP ID) allocated by the second access network device to the terminal, so that the AMF updates a second identifier corresponding to the terminal to the terminal identifier allocated by the second access network device to the terminal. The second identifier is a private terminal identifier (also referred to as a RAN UE NGAP ID) that identifies the terminal between the AMF and an access network device to which the terminal is handed over.

For example, the AMF may store a first correspondence based on the terminal identifier that is allocated by the second access network device to the terminal and that is carried in the path switch message. The first correspondence includes a correspondence between an identifier of a terminal, an identifier of an access network device, and a terminal identifier allocated by the access network device to the terminal. For example, data included in the first correspondence is shown in the following Table 2. Based on the first correspondence, when the terminal accesses the second access network device next time, the AMF may actively trigger, based on the first handover time information and the first correspondence, update of the second identifier corresponding to the terminal, without depending on a path switch request message sent by the second access network device.

**Table 2**

| Terminal identifier | Access network device identifier | Terminal identifier |
|---|---|---|
| | RAN1 ID | RAN1 UE1 ID |
| | RAN2 ID | RAN2 UE1 ID |
| UE1 ID | ... | ... |
| | RAN30 ID | RAN30 UE1 ID |
| | ... | ... |

In some other possible implementations, the path switch message may alternatively not include the terminal identifier allocated by the second access network device to the terminal. Instead, as shown in the foregoing manner 4, before the terminal accesses the second access network device, the terminal identifier allocated by the second access network device to the terminal is sent to the AMF through a third access network device.

In this embodiment of this application, a UPF corresponding to the second access network device may be the same as or different from a UPF corresponding to the first access network device. This is not limited in this specification.

S607: The UPF sends, to the second access network device, the core network tunnel information allocated to the terminal.

Specifically, the UPF may send, to the second access network device through the AMF and the SMF, core network tunnel information corresponding to the second access network device and the terminal, or the UPF may send, to the first access network device through the AMF and the SMF, core network tunnel information corresponding to the second access network device and the terminal, and then the second access network device sends, to the first access network device, the core network tunnel information correspondingly allocated by the UPF to the second access network device and the terminal. This is not limited in this specification.

In this embodiment of this application, after receiving the core network tunnel information of the terminal, the second access network device stores the core network tunnel information of the terminal. For example, the second access network device stores a second correspondence shown in the following Table 3, where the second correspondence includes a correspondence between an identifier of a terminal and core network tunnel information. Therefore, in step S609, the second access network device may determine, based on the second correspondence, not to send a path switch message to the AMF.

**Table 3**

| Terminal identifier | Core network tunnel information |
|---|---|
| UE1 ID | CN tunnel info1 |
| UE2 ID | CN tunnel info2 |
| ... | ... |
| UE3 ID | CN tunnel info3 |
| ... | ... |

S608: Send, to the SMF and the UPF through the AMF, access network tunnel information that is of the terminal and that is allocated by the second access network device.

Specifically, refer to descriptions of a related handover procedure in the standard 3GPP TS 23.502.

In some other possible implementations, the second access network device may alternatively send, to the UPF in step S606, the access network tunnel information allocated by the second access network device to the terminal, and step S608 is omitted. Specifically, the path switch message, the update request message, and the N4 session modification request in S606 carry the access network tunnel information allocated by the second access network device to the terminal.

After receiving the access network tunnel information sent by the second access network device through the AMF, the SMF may store a correspondence between the identifier of the terminal, an identifier of the second access network device, and the access network tunnel information allocated by the second access network device to the terminal, to obtain a third correspondence. The third correspondence includes a correspondence between an identifier of a terminal, an identifier of an access network device, and access network tunnel information. For example, when the access network tunnel information is aggregation access network tunnel information at the UE-RAN granularity, data included in the third correspondence is shown in the following Table 4. When the access network tunnel information is aggregation access network tunnel information at the RAN granularity, data included in the third correspondence is shown in the following Table 5.

Based on the third correspondence and with reference to a correspondence that is between identifiers of all the sessions of the terminal and the identifier of the terminal and that is stored in the SMF, when the terminal accesses the second access network device next time, and the SMF receives, from the AMF, an update request message that carries the identifier of the terminal and the identifier of the second access network device, the SMF may update, based on the third correspondence, access network tunnel information of all the sessions corresponding to the terminal to the access network tunnel information allocated by the second access network device to the terminal.

**Table 4**

| Terminal identifier | Access network device identifier | Aggregation access network tunnel information |
|---|---|---|
| UE1 ID | RAN1 ID | AN tunnel info1 |
| | RAN2 ID | AN tunnel info2 |
| | ... | ... |
| | RAN30 ID | AN tunnel info3 |
| | ... | ... |
| UE2 ID | RAN1 ID | AN tunnel info4 |
| | RAN2 ID | AN tunnel info5 |
| | ... | ... |
| | RAN30 ID | AN tunnel info6 |
| | ... | ... |

**Table 5**

| Terminal identifier | Access network device identifier | Aggregation access network tunnel information |
|---|---|---|
| UE1 ID, UE2 ID, UE3 ID, UE4 ID, ... | RAN1 ID | AN tunnel info1 |
| UE5 ID, UE6 ID, UE7 ID, UE8 ID, ... | RAN2 ID | AN tunnel info2 |
| ... | ... | ... |

In another example, after receiving the access network tunnel information sent by the second access network device through the AMF, the SMF may alternatively store a correspondence between an identifier of one or more sessions, an identifier of the second access network device, and the access network tunnel information allocated by the second access network device to the terminal, to obtain a fourth correspondence. For example, data included in the fourth correspondence is shown in the following Table 6. The fourth correspondence includes a correspondence between an identifier of a session, an identifier of an access network device, and aggregation access network tunnel information. Based on this, when the terminal accesses the second access network device next time, and the SMF receives, from the AMF, an update request message that carries the identifier of the one or more sessions and the identifier of the second access network device, the SMF may update, based on the fourth correspondence, corresponding access network tunnel information of the one or more sessions to aggregation access network tunnel information allocated by the second access network device to the terminal.

**Table 6**

| Session identifier | Access network device identifier | Aggregation access network tunnel information |
|---|---|---|
| PDU session1 ID, PDU session2 ID, PDU session3 ID (UE1 session) | RAN1 ID | AN tunnel info1 |
| | RAN2 ID | AN tunnel info2 |
| | ... | ... |
| | RAN30 ID | AN tunnel info3 |
| | ... | ... |
| PDU session4 ID, PDU session5 ID, PDU session6 ID (UE2 session) | RAN1 ID | AN tunnel info4 |
| | RAN2 ID | AN tunnel info5 |
| | ... | ... |
| | RAN30 ID | AN tunnel info6 |
| | ... | ... |
| ... | ... | ... |

S609: The second access network device determines, based on the stored core network tunnel information of the terminal, not to send a path switch message to the AMF.

In this embodiment of this application, when determining that the core network tunnel information of the terminal has been stored, the second access network device does not send the path switch message to the AMF, to alleviate a signaling storm problem on an NG interface, and improve handover efficiency.

S610: The AMF determines, based on the second handover time information, to hand over the terminal to the second access network device.

In an example, that the AMF determines, based on the second handover time information, to hand over the terminal to the second access network device specifically includes: The AMF determines, based on the second handover time information shown in Table 1, that an identifier of a target access network device of the terminal corresponding to current time is the identifier of the second access network device. In addition, the terminal identifier allocated by the second access network device to the terminal is determined based on the first correspondence shown in Table 2, and the locally stored second identifier of the terminal is updated to the terminal identifier allocated by the second access network device to the terminal.

S611: The AMF sends a first message to the SMF.

The first message is used to request the SMF to update access network tunnel information of a session of the terminal to the access network tunnel information allocated by the second access network device to the terminal.

Correspondingly, the SMF receives the first message, and updates the access network tunnel information of the session of the terminal to the access network tunnel information allocated by the second access network device to the terminal.

In this embodiment of this application, the first message in step S611 carries indication information for indicating the SMF to update the access network tunnel information of the terminal, and does not include indication information for indicating the SMF to request the UPF to allocate core network tunnel information to the terminal.

In an example, when the SMF stores the third correspondence in step S607, the first message in S611 further carries the identifier of the terminal and the identifier of the second access network device. After receiving the first message, the SMF determines, based on the third correspondence shown in Table 4 or Table 5, access network tunnel information corresponding to the identifier of the second access network device and the identifier of the terminal, updates access network tunnel information of all sessions of the terminal to the access network tunnel information, and performs step S612 based on the access network tunnel information.

In another example, when the SMF stores the fourth correspondence in step S607, the first message in S611 further carries an identifier of one or more sessions. After receiving the first message, the SMF updates, based on the fourth correspondence, access network tunnel information of the one or more sessions to the access network tunnel information allocated by the second access network device to the terminal, and performs step S612 based on the access network tunnel information.

In some possible implementations, the first message sent by the AMF to the SMF may further carry capability information of the second access network device. For example, the second handover time information corresponding to Table 1 may further include capability information of the access network device corresponding to the identifier of the access network device. The AMF determines, based on the second handover time information, to hand over the terminal to the second access network device, and determines the identifier of the second access network device, the capability information of the second access network device, and the identifier of the terminal that are carried in the first message. The capability information of the access network device includes one or more of a supported tracking area list (supported TA list), supported data network name/single network slice selection assistance information (supported DNN/S-NSSAI), and a supported QoS flow that are of the access network device. For example, the SMF may set the access network tunnel information of all the sessions of the terminal based on the capability information of the second access network device and the access network tunnel information allocated by the second access network device to the terminal, and release a QoS flow not supported by the second access network device.

In this embodiment of this application, to avoid a case in which an unknown program error occurs because the AMF receives the path switch message in step S606 and actively triggers execution of step S610 based on the second handover time information, in an example, after determining to hand over the terminal to the second access network device, the AMF may determine, based on the terminal identifier allocated by the second access network device to the terminal being not stored in the first correspondence, not to perform step S611, but perform steps S606 to S608 based on the path switch message sent by the second access network device. Alternatively, in another example, the AMF records indication information indicating whether the second access network device has allocated the terminal identifier and the access network tunnel information to the terminal. When determining, based on the indication information, that the second access network device has allocated the terminal identifier and the access network tunnel information to the terminal, the AMF performs step S610 and step S611 based on the second handover time information.

S612: The SMF sends a second message to the UPF.

In this embodiment of this application, the second message in step S612 carries the access network tunnel information of the terminal, and does not carry indication information for requesting the UPF to allocate core network tunnel information of the terminal. For descriptions of the second message, refer to related descriptions in step S406. Details are not described herein again.

S613: The second access network device communicates with the UPF based on the core network tunnel information and the access network tunnel information of the terminal.

In this embodiment of this application, after step S608 or step S612, the second access network device may perform communication based on the core network tunnel information and the access network tunnel information of the terminal, to serve a session of the terminal.

In this embodiment of this application, when the terminal accesses the second access network device for the first time, referring to steps S606 to S608, the second access network device requests, by using the path switch message, the UPF to allocate the core network tunnel information to the terminal, and sends, to the AMF by using the path switch request message, the terminal identifier allocated by the second access network device to the terminal. After receiving the core network tunnel information of the terminal, the second access network device allocates the access network tunnel information to the terminal and sends the access network tunnel information to the AMF. The AMF stores the first correspondence based on the path switch message, and sends the access network tunnel information to the SMF. The SMF stores the third correspondence based on the update request message.

When the terminal accesses the second access network device again, referring to steps S609 to S612, the second access network device no longer sends a path switch message to the AMF based on the second access network device having stored the core network tunnel information of the terminal, thereby reducing duration of requesting and waiting for the core network tunnel information, alleviating a signaling storm problem on an NG interface caused by frequently performing a handover procedure by the terminal, and improving handover efficiency. In addition, the AMF actively updates the second identifier of the terminal based on the second handover time information and the first correspondence, and sends the first message for the terminal to the SMF. The SMF updates N3 path information of the terminal based on the first message and the third correspondence, to ensure integrity of related air interface handover, N2 information update, and N3 interface handover when the terminal is handed over from the first access network device to the second access network device, thereby ensuring a normal network access function of the terminal after the handover procedure is performed.

The air interface handover means that communicating with a core network by the terminal through an air interface corresponding to the first access network device is switched to communicating with the core network by the terminal through an air interface corresponding to the second access network device based on the handover request message. The N2 information update means that serving the terminal by the AMF through an NG interface corresponding to the first access network device is switched to serving the terminal through an NG interface corresponding to the second access network device based on the path switch message. The N2 information update includes update of the second identifier. The N3 interface handover means that serving the terminal by the UPF through an N4 interface corresponding to the first access network device is switched to serving the terminal through an N4 interface corresponding to the second access network device based on the second message.

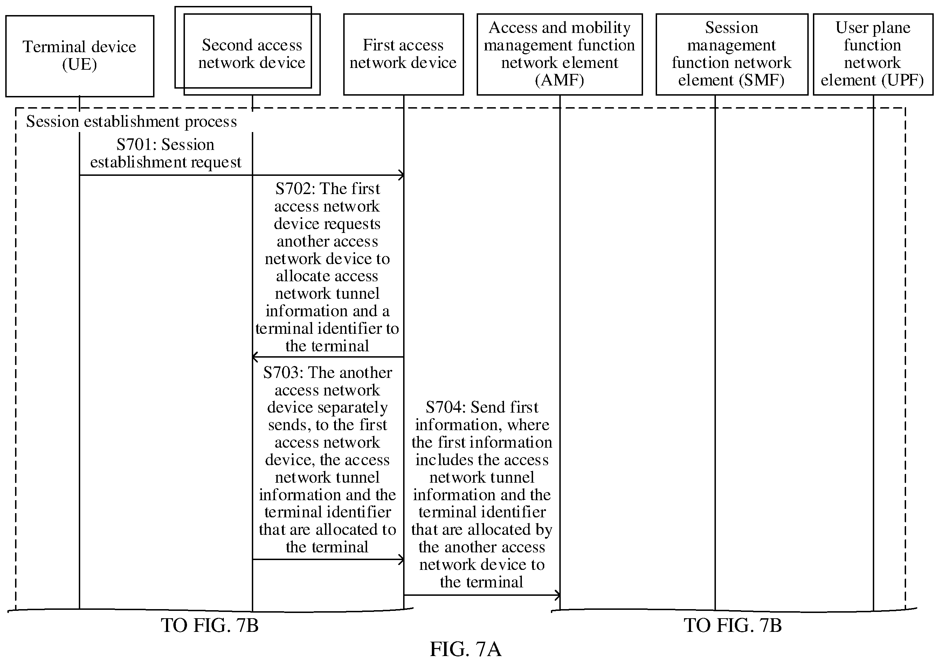

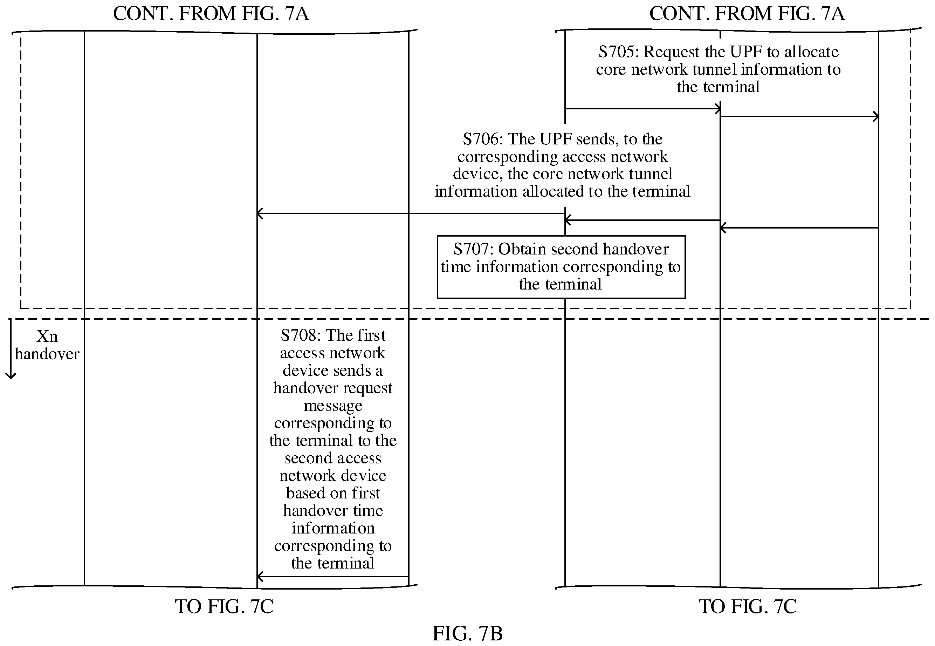

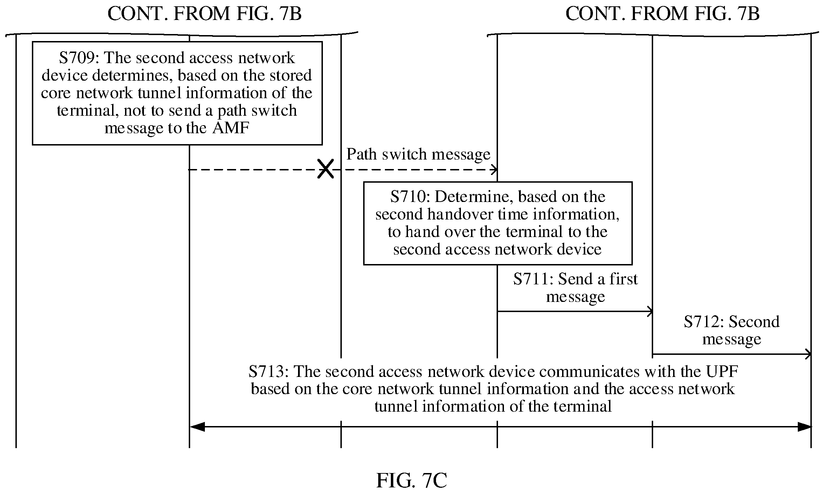

With reference to an interaction diagram shown in FIG. 7A to FIG. 7C, an application of a communication method provided in an embodiment of this application is described below by using an example in which a terminal identifier and access network tunnel information that are allocated by a second access network device to a terminal are sent to an AMF in advance by using a combination of the foregoing manner 2 and manner 4, and a type of tunnel information (access network tunnel information and core network tunnel information) is tunnel information at a session granularity. It should be noted that, if the terminal can be directly identified between the second access network device and the AMF based on a UE ID, instead of being identified by using a RAN UE NGAP ID, the communication method shown in FIG. 7A to FIG. 7C may alternatively not include a solution with respect to the terminal identifier. It should be noted that another access network device in the specification may be replaced with the second access network device. This is not limited.

As shown in FIG. 7A to FIG. 7C, the method includes the following steps.

S701: The terminal sends a session establishment request for a first session to a first access network device.

Correspondingly, the first access network device receives the session establishment request.

In this embodiment of this application, an access network device currently accessed by the terminal is the first access network device, and the first session may be any session established by the terminal through the first access network device.

In this embodiment of this application, the session establishment request is used as a request trigger condition for requesting, by the first access network device, another access network device to allocate access network tunnel information and a terminal identifier to the terminal. In other words, each time the terminal establishes a new session through the first access network device, after the first access network device receives the session establishment request, the first access network device triggers execution of step S702.

S702: The first access network device requests another access network device to allocate access network tunnel information and a terminal identifier to the terminal.

The another access network device includes the second access network device, and the second access network device is an access network device adjacent to the first access network device in a positive direction of a satellite operation direction. For descriptions of the another access network device, refer to related descriptions in step S403. Details are not described herein again.

S703: The another access network device separately sends, to the first access network device, the access network tunnel information and the terminal identifier that are allocated to the terminal.

Correspondingly, the first access network device receives the access network tunnel information and the terminal identifier that are allocated by the another access network device to the terminal.

In this embodiment of this application, the first access network device may request, by using a same request message, the another access network device to allocate the access network tunnel information and the terminal identifier to the terminal. Alternatively, the first access network device may request the another access network device to allocate the terminal identifier to the terminal and request the another access network device to allocate the access network tunnel information to the terminal by using different request messages. This is not limited in this specification.

In an example, the first access network device separately sends a first request and a second request to the another access network device, where the first request is used to request the another access network device to separately allocate access network tunnel information to one or more sessions currently established by the terminal, and the second request is used to request the another access network device to allocate the terminal identifier to the terminal. The another access network device separately allocates the access network tunnel information to the one or more sessions of the terminal based on the first request, and the another access network device allocates the terminal identifier to the terminal based on the second request. The first access network device receives a first response separately sent by the another access network device, where the first response corresponds to the first request, and the first response carries access network tunnel information allocated by the corresponding access network device to the terminal; and the first access network device receives a second response separately sent by the another access network device, where the second response corresponds to the second request, and the second response carries a terminal identifier allocated by the corresponding access network device to the terminal.

In another example, the first access network device separately sends a third request (the third request includes request content of the first request and the second request) to the another access network device, and the third request is used to request the another access network device to allocate the terminal identifier to the terminal and separately allocate access network tunnel information to one or more sessions currently established by the terminal. For example, the third request carries an identifier of the one or more sessions currently established by the terminal and a first identifier of the terminal. Based on the third request, the another access network device allocates access network tunnel information to each session of the terminal, and allocates the terminal identifier to the terminal. The first access network device receives a third response separately sent by the another access network device, where the third response carries the first identifier of the terminal, a terminal identifier allocated by the access network device corresponding to the first response to the terminal, and access network tunnel information allocated by the access network device corresponding to the first response to each session of the terminal.

In this embodiment of this application, when the first access network device requests, by using the third request, the another access network device to allocate the access network tunnel information and the terminal identifier to the terminal, the session establishment request in step S701 may be used as a request trigger condition for triggering the first access network device to send the third request to the another access network device. Any one of the another access network device allocates a same terminal identifier to the terminal each time in response to a third request for a same terminal. Alternatively, in response to a third request for a same terminal, any one of the another access network device no longer allocates a terminal identifier to the terminal when determining that the terminal identifier has been allocated to the terminal, and a third response sent by the access network device to the AMF carries access network tunnel information allocated by the access network device to the terminal, but does not carry the terminal identifier allocated by the access network device to the terminal.

It should be noted that, in this embodiment of this application, the session establishment request is merely used as an example of the request trigger condition for triggering the first access network device to request, by using the third request, the another access network device to allocate the access network tunnel information and the terminal identifier to the terminal. The request trigger condition corresponding to the third request may alternatively be another condition. For example, the request trigger condition may alternatively be that the first access network device receives a session establishment accept message sent by the AMF.

In this embodiment of this application, when the first access network device requests, by using the first request and the second request, the another access network device to allocate the access network tunnel information and the terminal identifier to the terminal, a request trigger condition corresponding to the first request and the second request may be the session establishment request in step S701, but is not limited thereto. For example, the request trigger condition of the first request and the second request may alternatively be that the first access network device receives a session establishment accept message sent by the AMF. For another example, the request trigger condition of the second request may alternatively be that the first access network device is a preset access network device. For descriptions of the preset access network device, refer to the foregoing related descriptions.

It may be understood that if the first access network device requests, by using the third request, the another access network device to allocate the access network tunnel information and the terminal identifier to the terminal, two tasks can be processed in a same message, thereby achieving twice the results with half the effort, reducing signaling exchange on an Xn interface between the first access network device and the second access network device to some extent, and reducing a performance loss. If the first access network device separately requests, by using the first request and the second request, the another access network device to allocate the access network tunnel information and the terminal identifier to the terminal, decoupling processing is performed on two different tasks, a program design is simpler, and program response duration can be reduced to some extent.

S704: The first access network device sends first information to the AMF.

The first information may include the access network tunnel information and the terminal identifier that are allocated by the another access network device to the terminal.

Correspondingly, the AMF receives the first information.

For example, the first information includes a terminal identifier allocated by the second access network device to the terminal, an identifier of an access network device, an identifier of each session of the terminal, access network tunnel information that is allocated by the second access network device to the terminal and that corresponds to the identifier of each session of the terminal, and a terminal identifier allocated by the first access network device to the terminal. The terminal identifier that is carried in the first information and that is allocated by the first access network device to the terminal indicates the terminal corresponding to the first information to the AMF.

In this embodiment of this application, after receiving the first information, the AMF may store a fifth correspondence. The fifth correspondence is used to record the terminal identifier allocated by the access network device to the terminal and the access network tunnel information allocated to each session of the terminal. For example, the fifth correspondence includes a correspondence between the identifier of the terminal, the identifier of the second access network device, the terminal identifier allocated by the second access network device to the terminal, the identifier of each session of the terminal, and the access network tunnel information corresponding to the identifier of each session of the terminal. For example, data that corresponds to a same terminal and that is included in the fifth correspondence is shown in the following Table 7. The fifth correspondence may include data corresponding to one terminal, or may include data corresponding to a plurality of terminals. This is not limited in this specification.

**Table 7**

| Terminal identifier | Access network device identifier | Terminal identifier | Session identifier | Access network tunnel information |
|---|---|---|---|---|
| UE1 ID | RAN1 ID | RAN1 UE1 NGAP ID1 | PDU session ID1 | AN tunnel info1 |
| | | | PDU session ID2 | AN tunnel info2 |
| | RAN2 ID | RAN2 UE1 NGAP ID2 | PDU session ID1 | AN tunnel info3 |
| | | | PDU session ID2 | AN tunnel info4 |
| ... | ... | ... | ... | ... |

In some possible implementations, the first information further includes access network tunnel information allocated by the first access network device to the first session (the first session is a currently established session). When establishing the first session, the first access network device does not send, to the AMF, a path switch message that carries the access network tunnel information allocated by the first access network device to the first session. After the AMF receives the first information, the AMF actively sends, based on the access network tunnel information that is included in the first information and that is allocated by the access network device (that is, the first access network device) currently accessed by the terminal to the session of the terminal, a first message about the first session to the SMF, where the first message carries an identifier of the first session and the access network tunnel information allocated by the first access network device to the first session. Therefore, the access network tunnel information allocated by the first access network device to the newly established first session is included in the first information and sent to the AMF, instead of being sent to the AMF by using the path switch message. This further alleviates a signaling storm problem on an NG interface, and improves handover efficiency.

S705: The AMF requests a UPF to allocate core network tunnel information to the terminal.

In an example, indication information for indicating the AMF to request, through the SMF, the UPF to allocate the core network tunnel information to the terminal may be sent to the AMF in a same message as the first information in step S704. In another example, the indication information and the first information may not be included in a same message. In other words, the first access network device sends the indication information to the AMF by using another message.

Specifically, the AMF may indicate, by using an update request message, the SMF to request the UPF to allocate the core network tunnel information to the terminal. The update request message carries indication information for indicating the SMF to request the UPF to allocate the core network tunnel information to the terminal. In response to the update request message, the SMF requests, by using an N4 session modification request, the UPF to allocate the core network tunnel information to the terminal. The N4 session modification request includes indication information for indicating the UPF to allocate the core network tunnel information to the terminal.

In this embodiment of this application, the AMF may request, for each session of the terminal, the UPF to allocate core network tunnel information to each session. For example, the terminal establishes a session 1 and a session 2 through the first access network device, and the AMF sends an update request message 1 and an update request message 2 to the UPF through the SMF. The update request message 1 is used to request the UPF to allocate core network tunnel information to the session 1, and the update request message 2 is used to request the UPF to allocate core network tunnel information to the session 2.

Alternatively, for all sessions of the terminal, the AMF may request, at a time, the UPF to allocate core network tunnel information to the sessions corresponding to the terminal. For example, the terminal establishes a session 1 and a session 2 through the first access network device, and the AMF sends an update request message 3 to the UPF through the SMF. The update request message 3 is used to request the UPF to allocate core network tunnel information to the session 1 and the session 2.

In an example, after receiving the request, the UPF allocates the core network tunnel information to the terminal, where the core network tunnel information corresponds to another access network device. Further, the UPF sends the allocated core network tunnel information to the first access network device, for example, sends the allocated core network tunnel information to the first access network device through the AMF or the SMF.

The request may carry information (for example, an identifier or an address) about the another access network device, so that the UPF allocates different core network tunnel information to the terminal for different access network devices. For example, the information about the another access network device includes the second access network device and a third access network device. For the second access network device, the UPF allocates second core network tunnel information to the terminal, and for the third access network device, the UPF allocates third core network tunnel information to the terminal.

The second core network tunnel information is used to establish a tunnel between the UPF and the second access network device for the terminal when the terminal accesses the second access network device, and the tunnel is used to carry data of the terminal. The third core network tunnel information is used to establish a tunnel between the UPF and the third access network device for the terminal when the terminal accesses the third access network device, and the tunnel is used to carry data of the terminal.

It can be learned that, that the core network tunnel information corresponds to the another access network device may be understood as that the second core network tunnel information corresponds to the second access network device, and the third core network tunnel information corresponds to the third access network device.

S706: The UPF sends, to the corresponding access network device, the core network tunnel information allocated to the terminal.

Correspondingly, the access network device receives the core network tunnel information allocated by the UPF to the terminal.

In an example, the UPF may send, to the first access network device through the AMF and the SMF, the core network tunnel information allocated to the terminal, and then the first access network device correspondingly sends the core network tunnel information to the another access network device (including the second access network device and the third access network device). For example, the second core network tunnel information and the third core network tunnel information are sent to the SMF, the SMF sends the second core network tunnel information and the third core network tunnel information to the AMF, the AMF sends the second core network tunnel information and the third core network tunnel information to the first access network device, and the first access network device sends the second core network tunnel information to the second access network device, and sends the third core network tunnel information to the third access network device.

In another example, the UPF may directly send the core network tunnel information to the corresponding access network device through the AMF and the SMF. For example, the second core network tunnel information is sent to the SMF, then forwarded by the SMF to the AMF, and then forwarded by the AMF to the second access network device.

For example, in a process in which the terminal accesses the first access network device and establishes the first session based on the first access network device (or may be understood as each time the terminal establishes a session), the UPF allocates corresponding core network tunnel information to the second access network device for serving the newly established session, and sends the core network tunnel information to the second access network device. The second access network device receives and stores the core network tunnel information. Therefore, in step S709, the second access network device may not send a path switch message to the AMF based on the stored core network tunnel information of the terminal.

It should be noted that the another access network device may include only one access network device, for example, the second access network device. In addition, allocating the core network tunnel information to the terminal may be replaced with allocating core network tunnel information to the first session in step S701. This is not limited.

S707: The AMF obtains second handover time information corresponding to the terminal.

S708: The first access network device sends a handover request message corresponding to the terminal to the second access network device based on first handover time information corresponding to the terminal.

Correspondingly, the second access network device receives the handover request message.

For detailed descriptions of the second handover time information, the first handover time information, and the handover request message, refer to related descriptions in steps S601 to S604 in FIG. 6A and FIG. 6B or steps S401 and S404 in FIG. 4. Details are not described herein again.

S709: The second access network device determines, based on the stored core network tunnel information of the terminal, not to send a path switch message to the AMF.

For example, after receiving the handover request message for the terminal, the second access network device may not determine whether the second access network device has stored the core network tunnel information of the terminal, but directly does not send a corresponding path switch message to the AMF in response to the handover request message.

S710: The AMF determines, based on the second handover time information, to hand over the terminal to the second access network device.

For example, the AMF determines, based on the second handover time information, that an identifier of a target access network device of the terminal corresponding to current time is the identifier of the second access network device; and then determines, based on the identifier of the second access network device and the locally stored fifth correspondence, the terminal identifier allocated by the second access network device to the terminal, and updates a locally recorded second identifier of the terminal to the terminal identifier allocated by the second access network device to the terminal (which may also be understood as updating N2 information).

S711: The AMF sends a first message to the SMF.

The first message may carry the access network tunnel information allocated by the second access network device to the terminal.

Correspondingly, the SMF receives the first message.

In this embodiment of this application, the first message may alternatively be an update request message. The first message does not include indication information for indicating the SMF to request the UPF to allocate core network tunnel information to the terminal. In addition, the first message may carry indication information for indicating the SMF to update the access network tunnel information of the terminal, or the first message may not carry the indication information, but the access network tunnel information that is carried in the first message and that is allocated by the second access network device to the terminal may indicate the SMF to update the access network tunnel information of the terminal.

For example, the AMF determines, based on the fifth correspondence, access network tunnel information allocated by the second access network device to each session of the terminal, and sends the first message for the terminal to the SMF based on the access network tunnel information.

In an example, when a quantity of sessions of the terminal is greater than or equal to 2, the first message may correspond to at least two sessions (for example, all sessions) of the terminal, and the first message carries identifiers of the at least two sessions of the terminal and access network tunnel information corresponding to an identifier of each session.

In another example, the first message may alternatively correspond to one session of the terminal. Specifically, the first message carries the identifier of the first session of the terminal and the access network tunnel information corresponding to the first session, and the first session is any session of the terminal. If a quantity of sessions of the terminal is greater than or equal to 2, the AMF may send, to the SMF one by one, a first message corresponding to each session of the terminal.

S712: The SMF sends a second message for the terminal to the UPF.

Correspondingly, the UPF receives the second message.

In this embodiment of this application, the second message in step S712 carries the access network tunnel information of the terminal, and does not carry indication information for requesting the UPF to allocate the core network tunnel information of the terminal. For descriptions of the second message, refer to related descriptions in step S406. Details are not described herein again.

S713: The second access network device communicates with the UPF based on the core network tunnel information and the access network tunnel information of the terminal.

In this embodiment of this application, after step S608 or step S613, the second access network device may perform communication based on the core network tunnel information and the access network tunnel information of the terminal, to serve a session of the terminal.

In this embodiment of this application, before the terminal is handed over to the second access network device, the terminal identifier allocated by the second access network device to the terminal and the access network tunnel information separately allocated by the second access network device to the session of the terminal are sent to the AMF, and the core network tunnel information allocated by the UPF to the second access network device for serving the terminal is also sent to the second access network device. Based on this, when the terminal is handed over to the second access network device (that is, the second access network device receives the handover request message about the terminal), the second access network device does not send a path switch message to the AMF, and does not need to request and wait for the UPF to allocate core network tunnel information to the terminal. This alleviates a signaling storm problem on an NG interface caused by frequently performing a handover procedure by the terminal, and improves handover efficiency. In addition, based on the second handover time information and the fifth correspondence shown in Table 7, the AMF actively updates the N2 information of the terminal and actively sends the first message for the terminal to the SMF, to ensure integrity of the handover procedure of the terminal.

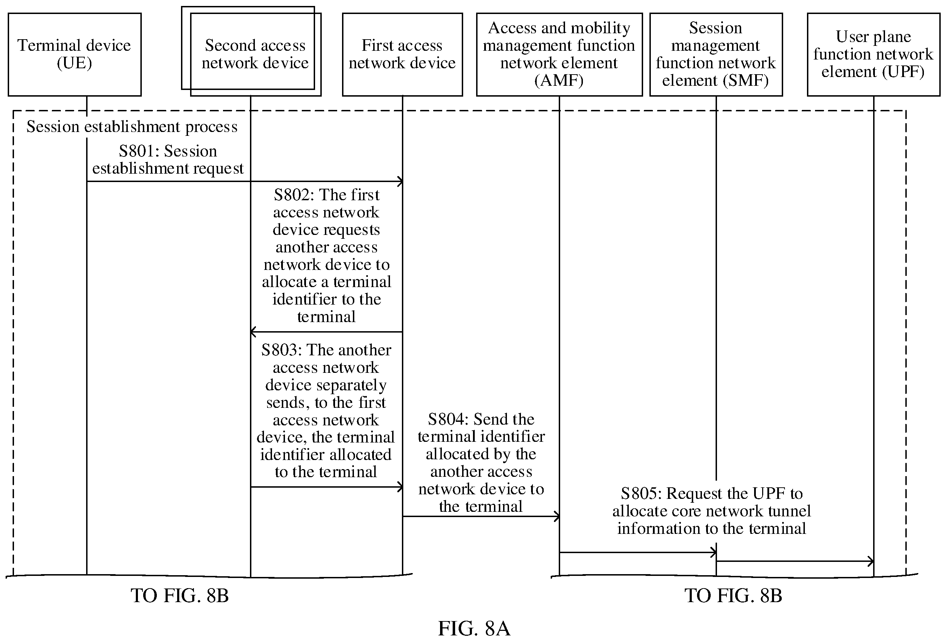

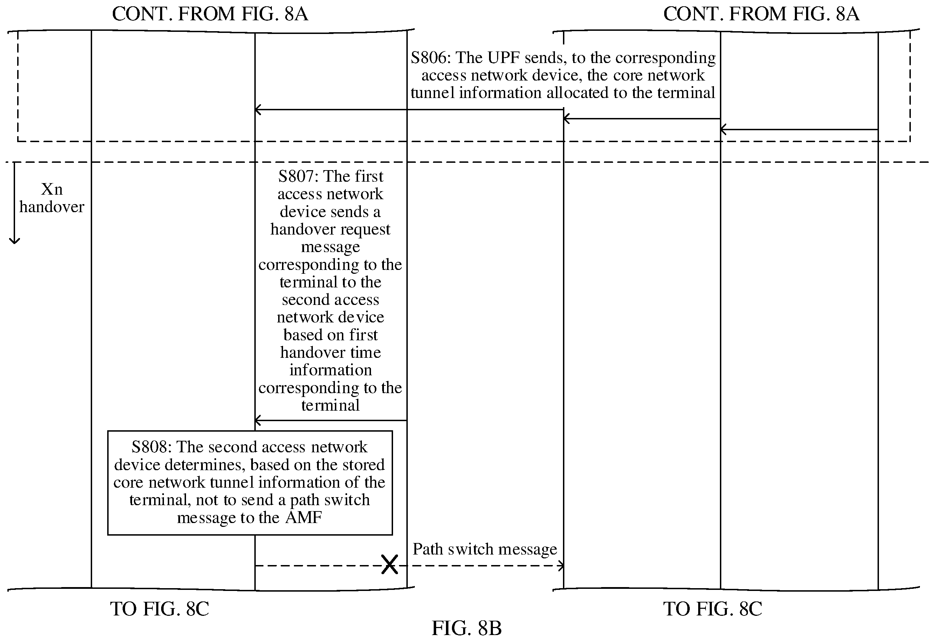

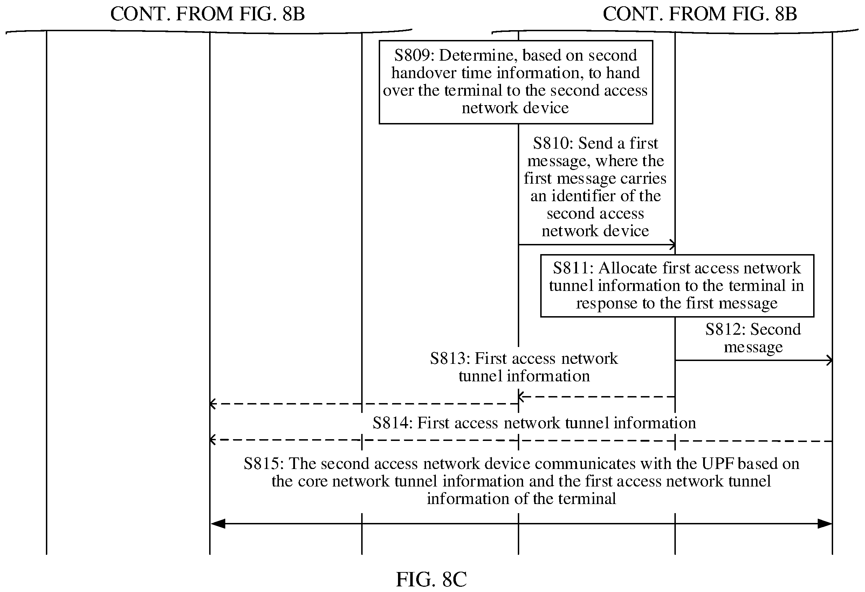

With reference to an interaction diagram shown in FIG. 8A to FIG. 8C, an application of a communication method provided in an embodiment of this application is described below by using an example in which a terminal identifier allocated by a second access network device to a terminal is sent to an AMF in advance in the foregoing manner 2, and access network tunnel information for the second access network device to serve the terminal is allocated by an SMF. As shown in FIG. 8A to FIG. 8C, the method includes the following steps.

S801: The terminal sends a session establishment request for a first session to a first access network device.

Correspondingly, the first access network device receives the session establishment request.

For descriptions of the first session, refer to related descriptions in step S701.

S802: The first access network device requests another access network device to allocate a terminal identifier to the terminal.

Specifically, the first access network device separately sends a second request to the another access network device. The second request is used to request the another access network device to allocate the terminal identifier to the terminal. For example, the second request carries a first identifier of the terminal, and the first identifier may be a UE ID or a C-RNTI of the terminal. Based on the second request, the another access network device separately allocates the terminal identifier to the terminal, and separately sends a second response to the first access network device. The second response carries the terminal identifier allocated by the corresponding access network device to the terminal. For example, the second response may carry the first identifier of the terminal and the terminal identifier allocated by the corresponding access network device to the terminal.

In this embodiment of this application, the session establishment request may be used as a request trigger condition for the first access network device to request the another access network device to allocate the terminal identifier to the terminal. However, the request trigger condition of the first request is not limited thereto. For details, refer to related descriptions of the request trigger condition of the first request in step S703. Details are not described herein again.

For descriptions of the another access network device, refer to related descriptions in step S403. Details are not described herein again.

S803: The another access network device separately sends, to the first access network device, the terminal identifier allocated to the terminal.

Correspondingly, the first access network device receives the terminal identifier allocated by the another access network device to the terminal.

S804: The first access network device sends, to the AMF, the terminal identifier allocated by the another access network device to the terminal.

Correspondingly, the AMF receives the terminal identifier allocated by the another access network device to the terminal.

For example, the AMF stores, based on the second response, the terminal identifier allocated by the another access network device to the terminal, for example, stores a sixth correspondence shown in the following Table 8.

**Table 8**

| Terminal identifier | Access network device identifier | Terminal identifier |
|---|---|---|
| UE1 ID | RAN1 ID | RAN1 UE1 NGAP ID |
| | RAN2 ID | RAN2 UE1 NGAP ID |
| | ... | ... |
| | RAN30 ID | RAN30 UE1 NGAP ID |
| ... | ... | ... |

S805: Request a UPF to allocate corresponding core network tunnel information to the terminal.

In an example, a message used by the first access network device to send, to the AMF, the terminal identifier allocated by the another access network device to the terminal in S804 may further include indication information. The indication information indicates the AMF to request, through the SMF, the UPF to separately allocate corresponding core network tunnel information for the another access network device to serve the terminal. In another example, the indication information and the terminal identifier allocated by the another access network device to the terminal may not be in a same message, and the first access network device sends the indication information to the AMF by using another message.

In another example, the first access network device sends, to the AMF, the terminal identifier allocated by the another access network device to the terminal, to trigger the AMF to request, through the SMF, the UPF to separately allocate corresponding core network tunnel information for the another access network device to serve the terminal.

Alternatively, in another possible implementation, triggering the AMF to request, through the SMF, the UPF to allocate the core network tunnel information may not depend on a condition of whether the AMF receives the terminal identifier allocated by the another access network device to the terminal, but may depend on another trigger condition. This is not limited in this specification.

For detailed descriptions of how the AMF specifically requests, through the SMF, the UPF to separately allocate the corresponding core network tunnel information for the another access network device to serve the terminal, refer to step S705.

S806: The UPF sends, to the corresponding access network device, the core network tunnel information allocated to the terminal.

Correspondingly, the access network device receives the core network tunnel information allocated by the UPF to the terminal.

Specifically, the UPF may send, to the first access network device through the AMF and the SMF, the corresponding core network tunnel information for the another access network device to serve the terminal, and then the first access network device correspondingly sends the core network tunnel information to the another access network device (including the second access network device). For example, corresponding core network tunnel information for the second access network device to serve the terminal is sent to the SMF, forwarded by the SMF to the AMF, then forwarded by the AMF to the first access network device, and then forwarded by the first access network device to the second access network device. Alternatively, the UPF may directly send the core network tunnel information to the corresponding access network device through the AMF and the SMF. For example, core network tunnel information for the second access network device to serve the terminal is sent to the SMF, then forwarded by the SMF to the AMF, and then forwarded by the AMF to the second access network device. For detailed descriptions of sending, by the UPF to the corresponding access network device, the core network tunnel information separately allocated for the another access network device to serve the terminal, refer to step S706.

For example, in a process in which the terminal accesses the first access network device and establishes a first session based on the first access network device (or may be understood as each time the terminal establishes a session), the UPF allocates corresponding core network tunnel information to the second access network device for serving the newly established session of the terminal, and sends the core network tunnel information to the second access network device. The second access network device stores the core network tunnel information. Therefore, in step S808, the second access network device may not send a path switch message to the AMF based on the stored core network tunnel information of the terminal.

A service granularity of the core network tunnel information may be a session granularity, a slice granularity, a UE-RAN granularity, or a RAN granularity. This is not limited in this specification.

S807: The first access network device sends a handover request message corresponding to the terminal to the second access network device based on first handover time information corresponding to the terminal.

Correspondingly, the second access network device receives the handover request message.

For the first handover time information, refer to the related description in step S401. Details are not described herein again.

S808: The second access network device determines, based on the stored core network tunnel information of the terminal, not to send a path switch message to the AMF.

In an example, the second access network device may not need to determine whether the second access network device has stored the core network tunnel information of the terminal, but directly send a corresponding path switch message to the AMF in response to the handover request message.

S809: The AMF determines, based on second handover time information, to hand over the terminal to the second access network device.

For example, the AMF determines, based on the second handover time information, that an identifier of a target access network device of the terminal corresponding to current time is the identifier of the second access network device; and then determines, based on the identifier of the second access network device and the locally stored sixth correspondence in the AMF, the terminal identifier allocated by the second access network device to the terminal, and updates a locally recorded second identifier of the terminal to the terminal identifier allocated by the second access network device to the terminal.

S810: The AMF sends a first message for the terminal to the SMF, where the first message carries an identifier of the second access network device.

Correspondingly, the SMF receives the first message.

In this embodiment of this application, the first message is used to request the SMF to allocate first access network tunnel information to the terminal based on the identifier of the second access network device, and update access network tunnel information of a session of the terminal to the first access network tunnel information. The first access network tunnel information may be access network tunnel information at a session granularity, a slice granularity, a UE-RAN granularity, or a RAN granularity.

S811: The SMF allocates the first access network tunnel information to the terminal in response to the first message.

For example, the SMF stores one or more pieces of configurable access network tunnel information corresponding to an identifier of an access network device, so that the SMF may allocate the corresponding first access network tunnel information to the terminal based on the identifier of the second access network device carried in the first message.

In an example, when the access network tunnel information of the terminal is at the session granularity or the slice granularity, the first message may carry an identifier of one or more sessions of the terminal and the identifier of the second access network device. The first message is used to request the SMF to separately allocate access network tunnel information to the one or more sessions of the terminal based on the identifier of the second access network device, and update access network tunnel information of the one or more sessions based on the allocated access network tunnel information. Alternatively, when the access network tunnel information of the terminal is at the session granularity, the first message may carry an identifier of the terminal, and the SMF determines, based on the identifier of the terminal, an identifier of one or more sessions corresponding to the terminal, and separately allocates access network tunnel information to the one or more sessions. In this case, the first access network tunnel information in step S811 includes access network tunnel information respectively corresponding to the identifier of the one or more sessions.

In another example, when the access network tunnel information of the terminal is aggregation access network tunnel information at the UE-RAN granularity or the RAN granularity, the first message may carry an identifier of the terminal and the identifier of the second access network device. The first message is used to request the SMF to allocate aggregation access network tunnel information to the terminal based on the identifier of the second access network device, and update access network tunnel information of all sessions corresponding to the identifier of the terminal to the aggregation access network tunnel information. Alternatively, the first message may carry an identifier of one or more sessions of the terminal and the identifier of the second access network device. The update request is used to request the SMF to allocate corresponding aggregation access network tunnel information to the session of the terminal based on the identifier of the second access network device and the identifier of the session. In this case, the first access network tunnel information in step S811 is aggregation access network tunnel information corresponding to the terminal and the second access network device.

In some possible implementations, after the SMF separately allocates access network tunnel information A to the first session of the terminal, the SMF may further store a correspondence between an identifier of the first session, the access network tunnel information A, and the second access network device. When the SMF receives a first message including the identifier of the session A and the identifier of the second access network device next time, the access network tunnel information A previously allocated to the second access network device for serving the first session may be directly used as access network tunnel information of the first session.

S812: The SMF sends a second message to the UPF.

For descriptions of the second message, refer to related descriptions in S406. Details are not described herein again.

In some possible implementations, after step S811, the SMF further performs step S813.

S813: The SMF sends the first access network tunnel information to the second access network device.

In this embodiment of this application, after allocating the first access network tunnel information to the second access network device for serving the terminal, the SMF may send the first access network tunnel information to the second access network device through the AMF. Alternatively, the first access network tunnel information may be sent to the first access network device through the AMF, and the first access network device sends the first access network tunnel information to the second access network device through an inter-satellite link.

In an example, the first access network tunnel information is access network tunnel information at a session granularity, and that the SMF sends the first access network tunnel information to the second access network device through the AMF includes: The SMF sends an identifier of one or more sessions and access network tunnel information respectively corresponding to the one or more sessions to the AMF, and then the AMF forwards the identifier of the one or more sessions and the access network tunnel information respectively corresponding to the one or more sessions to the second access network device.

It may be understood that the SMF sends the identifier of the one or more sessions and the access network tunnel information respectively corresponding to the one or more sessions to the second access network device through the AMF, so that when subsequently receiving a message sent by the UPF by using the access network tunnel information A, the second access network device can determine a session corresponding to the message, where the access network tunnel information A corresponds to one of the one or more sessions.

In another example, the first access network tunnel information is aggregation access network tunnel information, and that the SMF sends the first access network tunnel information to the second access network device through the AMF includes: The SMF sends the first access network tunnel information and the identifier of the second access network device to the AMF, and then the AMF forwards the first access network tunnel information to the second access network device.

Alternatively, in some possible implementations, the communication method provided in this application includes the foregoing steps S801 to S812 and S814. S814 is performed after step S812.

S814: The UPF sends the first access network tunnel information to the second access network device.

For example, that the UPF sends the first access network tunnel information to the second access network device includes: The UPF sends the identifier of the one or more sessions and access network tunnel information corresponding to each session to the second access network device.

S815: The second access network device communicates with the UPF based on the core network tunnel information and the first access network tunnel information of the terminal.

For example, a GTP-U tunnel is established between the second access network device and the UPF based on the core network tunnel information and the first access network tunnel information of the terminal for communication.

In this embodiment of this application, before the terminal is handed over to the second access network device, the terminal identifier allocated by the second access network device to the terminal is sent to the AMF, and the core network tunnel information allocated by the UPF to the second access network device for serving the terminal is also sent to the second access network device. Based on this, when the terminal is handed over to the second access network device (that is, the second access network device receives the handover request message about the terminal), the second access network device does not send a path switch message to the AMF. In other words, the second access network device does not need to request and wait for the UPF to allocate core network tunnel information to the terminal. This improves handover efficiency. In addition, the SMF allocates the access network tunnel information to the second access network device for serving the terminal, and the second access network device does not need to send the access network tunnel information to the AMF. This reduces signaling exchange, and further improves handover efficiency. In addition, the first access network device does not need to request another access network device (including the second access network device) for obtaining access network tunnel information allocated to the terminal, thereby reducing signaling exchange on an Xn interface between the first access network device and the second access network device, further reducing a performance loss, and improving handover efficiency.

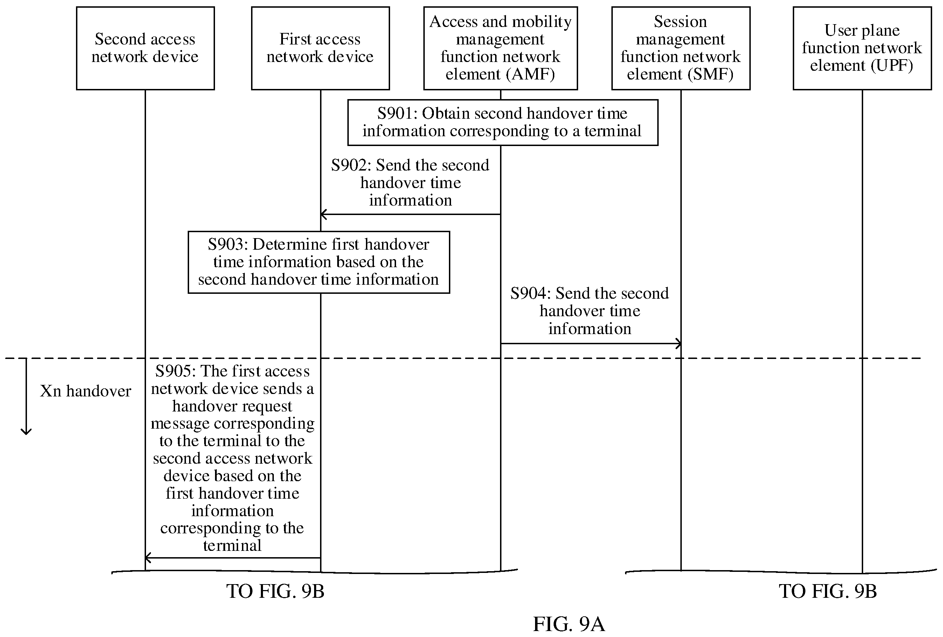

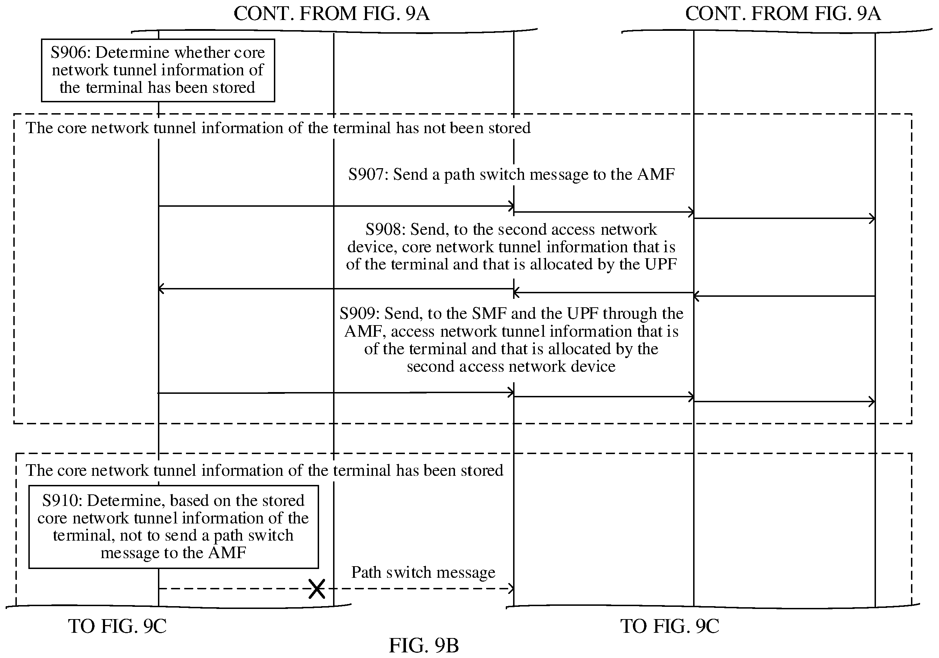

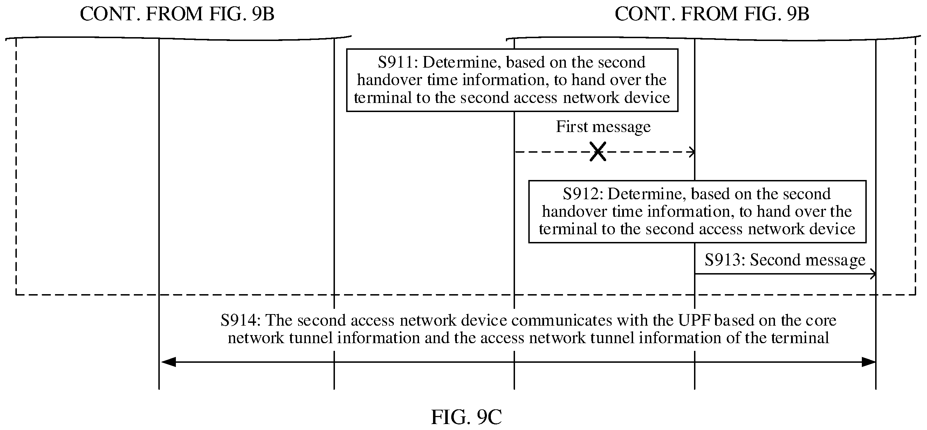

With reference to FIG. 9A to FIG. 9C, an application of a communication method provided in an embodiment of this application is described below by using an example in which a second access network device allocates access network tunnel information to a terminal, a type of tunnel information (access network tunnel information and core network tunnel information) is tunnel information at a UE-RAN granularity or a RAN granularity, the access network tunnel information allocated by the second access network device to the terminal is sent to an AMF in the foregoing manner 1, and the AMF sends second service time information to an SMF, so that the SMF can actively trigger execution of a related procedure of handing over the terminal to the second access network device, and a handover request message sent by the AMF to the SMF through an N11 interface in the handover procedure is further omitted. As shown in FIG. 9A to FIG. 9C, the method includes the following steps.

S901: The AMF obtains second handover time information corresponding to the terminal.

S902: The AMF sends the second handover time information to a first access network device.

Correspondingly, the first access network device receives the second handover time information sent by the AMF.

S903: The first access network device determines first handover time information based on the second handover time information.

For descriptions of S901 to S903, refer to related descriptions of S601 to S603. Details are not described herein again.

S904: The AMF sends the second handover time information to the SMF.

Correspondingly, the SMF receives the second handover time information.

In this embodiment of this application, S902 and S904 may be performed simultaneously or sequentially, and a sequence is not limited.

S905: The first access network device sends a handover request message corresponding to the terminal to the second access network device based on the first handover time information corresponding to the terminal.

Correspondingly, the second access network device receives the handover request message.

S906: The second access network device determines whether core network tunnel information of the terminal has been stored.

The core network tunnel information may be at a UE-RAN granularity or a RAN granularity.

In this embodiment of this application, the second access network device performs step S907 when determining that the core network tunnel information of the terminal has not been stored; or the second access network device performs step S910 when determining that the core network tunnel information of the terminal has been stored.

S907: The second access network device sends a path switch message to the AMF.

Correspondingly, the AMF requests, based on the path switch message, a UPF to allocate core network tunnel information of the terminal.

For details, refer to related descriptions in step S606. Details are not described herein again.

S908: Send, to the second access network device, the core network tunnel information that is of the terminal and that is allocated by the UPF.

For details, refer to related descriptions in step S607. Details are not described herein again.

S909: Send, to the SMF and the UPF through the AMF, access network tunnel information that is of the terminal and that is allocated by the second access network device.

For details, refer to related descriptions in step S608. Details are not described herein again.

S910: The second access network device determines, based on the stored core network tunnel information of the terminal, not to send a path switch message to the AMF.

In this embodiment of this application, when determining that a terminal identifier and an aggregation access network tunnel have been allocated to the terminal, the second access network device does not send a path switch message to the AMF. This alleviates a signaling storm problem on an NG interface caused by frequently performing a handover procedure by the terminal, and improves handover efficiency.

S911: The AMF determines, based on the second handover time information, to hand over the terminal to the second access network device, and determines not to send a first message to the SMF.

In this embodiment of this application, after determining to hand over the terminal to the second access network device, the AMF determines, based on the second service time information of the terminal that has been sent to the SMF in step S904, not to send the first message to the SMF. Therefore, a signaling storm problem on an N11 interface in the terminal handover procedure is alleviated, a performance loss is further reduced, and handover efficiency is improved.

For a manner of avoiding an unknown program error that occurs because the AMF performs both step S911 and steps S907 to S909 based on the path switch message sent by the second access network device, refer to related descriptions in step S611.

S912: The SMF determines, based on the second handover time information, to hand over the terminal to the second access network device.

In an example, the SMF stores the third correspondence shown in Table 4 or Table 5. In this case, 'the SMF determines, based on the second handover time information, to hand over the terminal to the second access network device' may specifically include: The SMF determines, based on the second handover time information (referring to Table 1), that an identifier of a current target access network device of the terminal is the identifier of the second access network device, and determines, based on the locally stored third correspondence, aggregation access network tunnel information corresponding to the identifier of the terminal and corresponding to the identifier of the second access network device. Based on the aggregation access network tunnel information, the SMF updates access network tunnel information corresponding to each session of the terminal in a local configuration to the aggregation access network tunnel information allocated by the second access network device to the terminal.

In another example, the SMF stores the fourth correspondence shown in Table 6. In this case, 'the SMF determines, based on the second handover time information, to hand over the terminal to the second access network device' may specifically include: The SMF determines, based on the second handover time information (referring to Table 1), that an identifier of a current target access network device of the terminal is the identifier of the second access network device, determines, based on the locally stored fourth correspondence, aggregation access network tunnel information corresponding to the session of the terminal and corresponding to the identifier of the second access network device, and updates the access network tunnel information of the session of the terminal based on the aggregation access network tunnel information.

S913: The SMF sends a second message to the UPF.

In this embodiment of this application, after determining, based on the second handover time information, to hand over the terminal to the second access network device, the SMF sends the second message to the UPF. For descriptions of the second message, refer to related descriptions in step S406. Details are not described herein again.

In this embodiment of this application, the AMF sends the second service time information to the SMF, and the SMF may actively trigger execution of a related procedure of handing over the terminal to the second access network device. This further omits a handover request message sent by the AMF to the SMF through an N11 interface in the handover procedure, thereby further relieving communication pressure on the N11 interface and improving handover efficiency.

S914: The second access network device communicates with the UPF based on the core network tunnel information and the access network tunnel information of the terminal.

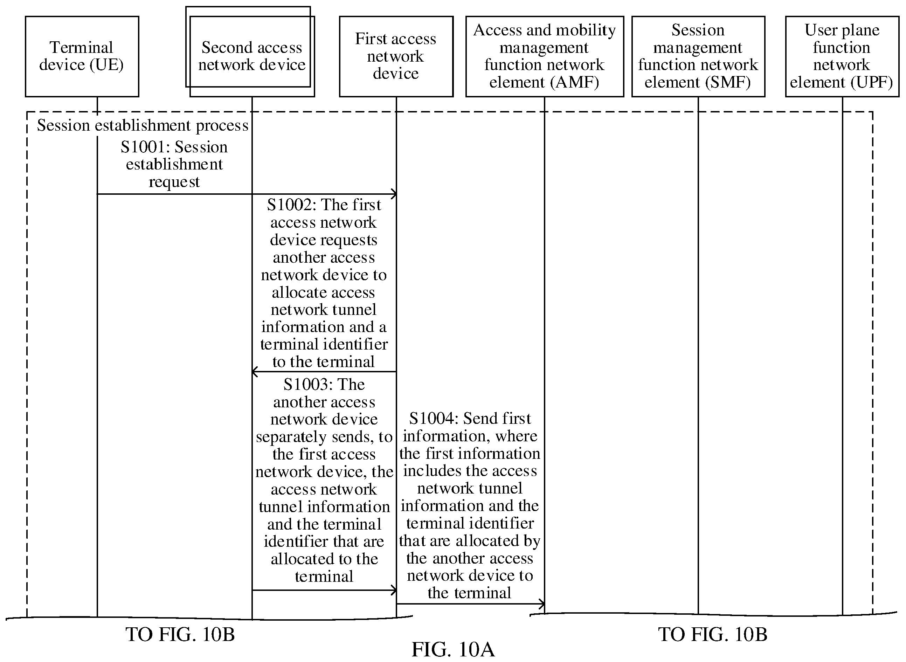

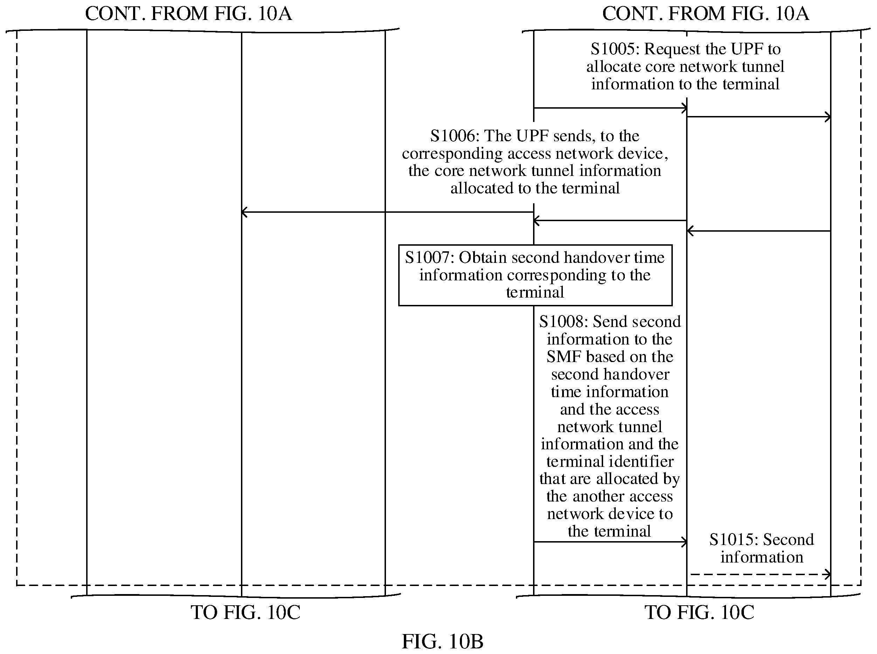

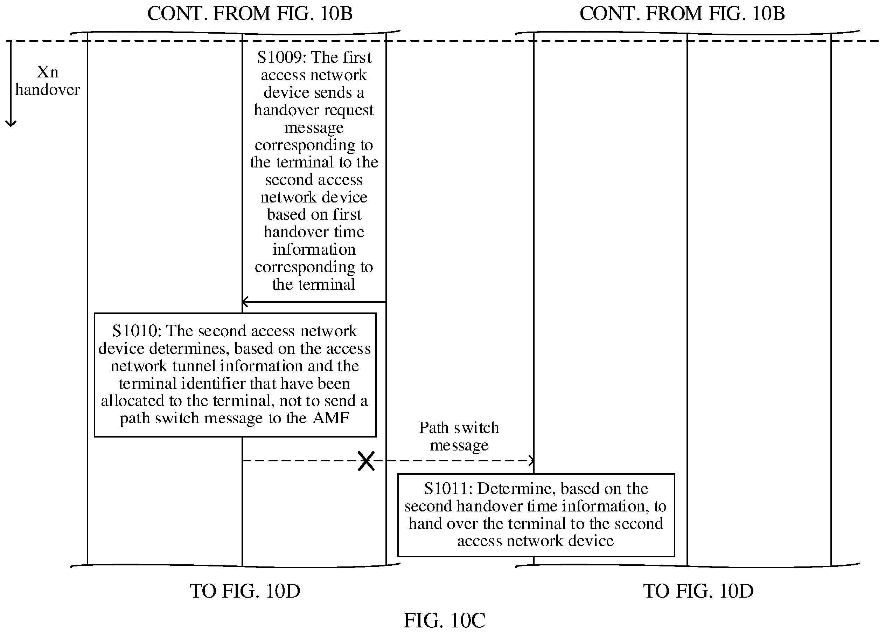

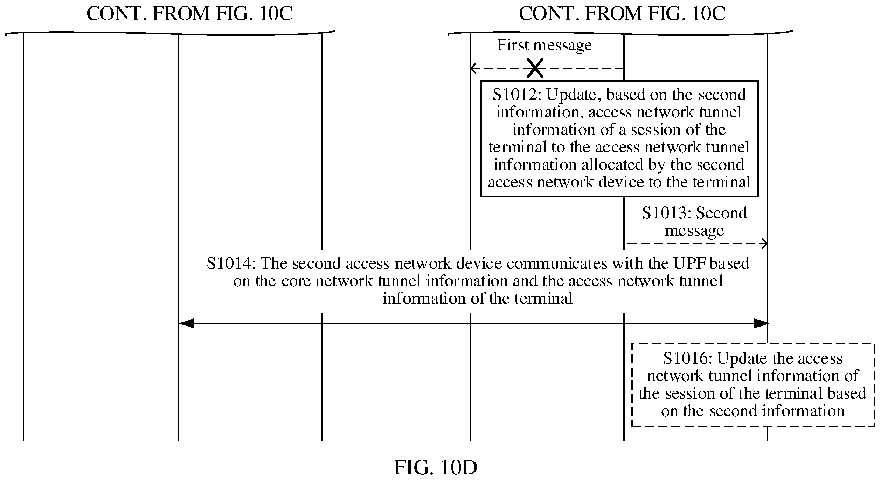

With reference to an interaction diagram shown in FIG. 10A to FIG. 10D, an application of a communication method provided in an embodiment of this application is described below by using an example in which a terminal identifier and access network tunnel information that are allocated by a second access network device to a terminal are sent to an AMF in advance by using a combination of the foregoing manner 2 and manner 2, a type of the access network tunnel information is access network tunnel information at a session granularity, and the AMF sends, to an SMF in advance, service time for serving the terminal by the second access network device and the access network tunnel information allocated by the second access network device to the terminal, so that the SMF can actively trigger execution of a related procedure of handing over the terminal to the second access network device. As shown in FIG. 10A to FIG. 10D, the communication method provided in this embodiment of this application includes the following steps.

S1001: The terminal sends a session establishment request to a first access network device.

Correspondingly, the first access network device receives the session establishment request.

S1002: The first access network device requests another access network device to allocate access network tunnel information and a terminal identifier to the terminal.

S1003: The first access network device receives the access network tunnel information and the terminal identifier that are allocated by the another access network device to the terminal.

S1004: The first access network device sends first information to the AMF, where the first information includes the access network tunnel information and the terminal identifier that are allocated by the another access network device to the terminal.

Correspondingly, the AMF receives the first information.

S1005: Request a UPF to allocate core network tunnel information to the terminal.

S1006: The UPF sends, to the corresponding access network device, the core network tunnel information allocated to the terminal.

S1007: The AMF obtains second handover time information corresponding to the terminal.

For detailed descriptions of steps S1001 to S 1007, refer to related descriptions of steps S701 to S707.

S1008: The AMF sends second information to the SMF based on the second handover time information, and the access network tunnel information and the terminal identifier that are allocated by the another access network device to the terminal.

Correspondingly, the SMF receives the second information, where the second information includes service time for serving the terminal by the second access network device and access network tunnel information allocated by the second access network device to the terminal.

In an example, the second information includes the second handover time information corresponding to the terminal and the access network tunnel information allocated by the another access network device to the terminal. For example, the second information includes data other than the terminal identifier in Table 1 and Table 7. It should be noted that an identifier of a session of the terminal in the second information sent by the AMF to the SMF may be a PDU session ID or an SM context ID. The PDU session ID may be understood as a public identifier of the session, and the SM context ID is a private identifier that is allocated by the SMF to the session and that is used to identify the session between the SMF and the AMF.

For example, the AMF may determine, based on Table 1, that an identifier of a target access network device of a UE1 is a RAN2 ID, and determine, based on a PDU session ID1 of a session corresponding to the UE1, the RAN2 ID, and Table 7, access network tunnel information corresponding to the PDU session ID1 and the RAN2 ID as access network tunnel information of the session.

In another example, the second information includes a correspondence between an identifier of each session of the terminal, service time for serving the terminal by an access network device, and access network tunnel information corresponding to the service time. The identifier of the session may be a PDU session ID of the session or an SM context ID of the session. The following describes, with reference to Table 9, data included in the second information by using an example in which the identifier of the session in the second information is the PDU session ID.

For example, as shown in Table 9, a PDU session ID1 and a PDU session ID2 respectively correspond to two different sessions of the terminal. A session corresponding to the PDU session ID1 is in two time periods: 00:00-00:05 and 05:00-05:05 (for example, the terminal is handed over to the first access network device in the two time periods), and used tunnel information is AN tunnel info1 (for example, access network tunnel information allocated by the first access network device to the PDU session ID1 of the terminal is AN tunnel info1). A session corresponding to the PDU session ID2 is in two time periods: 00:00-00:05 and 05:00-05:05 (for example, the terminal is handed over to the second access network device in the two time periods), and used tunnel information is AN tunnel info2 (for example, access network tunnel information allocated by the first access network device to the PDU session ID2 of the terminal is AN tunnel info2).

Table 9 actually does not include data content marked in the brackets. The identifier of the access network device marked in brackets in the service time column of Table 9 is merely for ease of indicating that the service time is service time for accessing a specific access network device by the terminal. For example, '00:00-00:05, 05:00-05:05 (RAN1)' means that service time for handing over the terminal to the RAN1 is 00:00-00:05 and 05:00-05:05.

**Table 9**

| Session identifier | Service time | Access network tunnel information |
|---|---|---|
| PDU session ID1 | 00:00-00:05, 05:00-05:05 (RAN1) | AN tunnel info1 |
| | 00:05-00:10, 05:05-05:10 (RAN2) | AN tunnel info3 |
| PDU session ID2 | 00:00-00:05, 05:00-05:05 (RAN1) | AN tunnel info2 |
| | 00:05-00:10, 05:05-05:10 (RAN2) | AN tunnel info4 |
| ... | ... | ... |

S1009: The first access network device sends a handover request message corresponding to the terminal to the second access network device based on the first handover time information corresponding to the terminal.

Correspondingly, the second access network device receives the handover request message.

S1010: The second access network device determines, based on the access network tunnel information and the terminal identifier that have been allocated to the terminal, not to send a path switch message to the AMF.

S1011: The AMF determines, based on the second handover time information, to hand over the terminal to the second access network device.

For detailed descriptions of steps S1009 to S1011, refer to related descriptions of steps S708 to S710.

In this embodiment of this application, after determining to hand over the terminal to the second access network device, the AMF determines not to send a first message to the SMF based on the AMF having sent, to the SMF in step S1007, the access network tunnel information allocated by the another access network device to the terminal, and having sent the second service time information of the terminal to the SMF in step S1010.

S1012: The SMF updates, based on the second information, access network tunnel information of a session of the terminal to access network tunnel information allocated by the second access network device to the session of the terminal.

In an example, the second information includes data other than the terminal identifier in Table 1 and Table 7. That the SMF updates, based on the second information, the access network tunnel information of the session of the terminal to the access network tunnel information allocated by the second access network device to the session of the terminal specifically includes: The SMF determines, based on Table 1, that an identifier of a target access network device of the terminal corresponding to current time is the identifier of the second access network device, determines, based on data other than the terminal identifier in Table 7, access network tunnel information A corresponding to the identifier of the second access network device and corresponding to a first session of the terminal, and updates access network tunnel information corresponding to the first session to the access network tunnel information A.

For example, in Table 1, the identifier of the target access network device corresponding to the current time is a RAN2 ID (the second access network device), the identifier of the first session of the terminal is a PDU session ID1, and access network tunnel information corresponding to the PDU session ID1 and the RAN2 ID is AN tunnel info3. Based on this, access network tunnel information corresponding to one or more sessions of the terminal is updated to access network tunnel information allocated by the second access network device to the corresponding sessions.

Alternatively, in another example, data included in the second information is shown in Table 9. That the SMF updates, based on the second information, the access network tunnel information of the session of the terminal to the access network tunnel information allocated by the second access network device to the session of the terminal specifically includes: The SMF determines, based on Table 9, service time corresponding to a current moment, and updates access network tunnel information of (one or more) sessions corresponding to the service time to access network tunnel information corresponding to the sessions and corresponding to the service time. For example, the service time corresponding to the current moment is 00:00-00:05, and the sessions of the terminal include a PDU session ID1 and a PDU session ID2. The SMF updates access network tunnel information of a session corresponding to the PDU session ID1 to AN tunnel info1 corresponding to the time 00:00-00:05, and updates access network tunnel information of a session corresponding to the PDU session ID2 to AN tunnel info2 corresponding to the time 00:00-00:05.

S1013: The SMF sends a second message to the UPF, where the second message is used to request to update access network tunnel information corresponding to one or more sessions of the terminal to access network tunnel information allocated by the second access network device to the corresponding sessions.

In this embodiment of this application, after determining, based on the second information, to hand over the terminal to the second access network device, the SMF sends the second message to the UPF. For descriptions of the second message, refer to related descriptions in step S406. Details are not described herein again.

S1014: The second access network device communicates with the UPF based on the core network tunnel information and the access network tunnel information of the terminal. For example, a GTP-U tunnel is established between the second access network device and the UPF based on the core network tunnel information and the access network tunnel information of the terminal for communication.

In some other possible implementations, the method provided in this embodiment of this application may alternatively include steps S1001 to S1012, S1015 and S1016, and S1014.

S1015: The SMF sends the second information to the UPF.

Correspondingly, the UPF receives the second information, where the second information includes service time for accessing the second access network device by the terminal and access network tunnel information allocated by the second access network device to the terminal.

For descriptions of the second information, refer to related descriptions in step S1012. It should be noted that in the second information sent by the SMF to the UPF, the identifier of the session may be a PDU session ID or an N4 session ID of the session.

S1016: The UPF updates access network tunnel information of the session of the terminal based on the second information.

Specifically, the UPF updates, based on the second information, access network tunnel information of a session whose service time corresponds to current time, and performs step S1014 after step S1016. For how the UPF determines, based on the second information, the access network tunnel information corresponding to the one or more sessions of the terminal corresponding to the current time, refer to related descriptions in step S1012 in which the SMF determines, based on the second information, the access network tunnel information corresponding to the one or more sessions of the terminal corresponding to the current time.

Based on this, the UPF actively triggers, by using the second information based on the service time, execution of a related procedure of updating the access network tunnel information of the session of the terminal, and the SMF does not need to send an N4 session update request to the UPF. This further reduces signaling exchange on an N4 interface in a handover procedure of the terminal, reduces a performance loss, and improves handover efficiency.

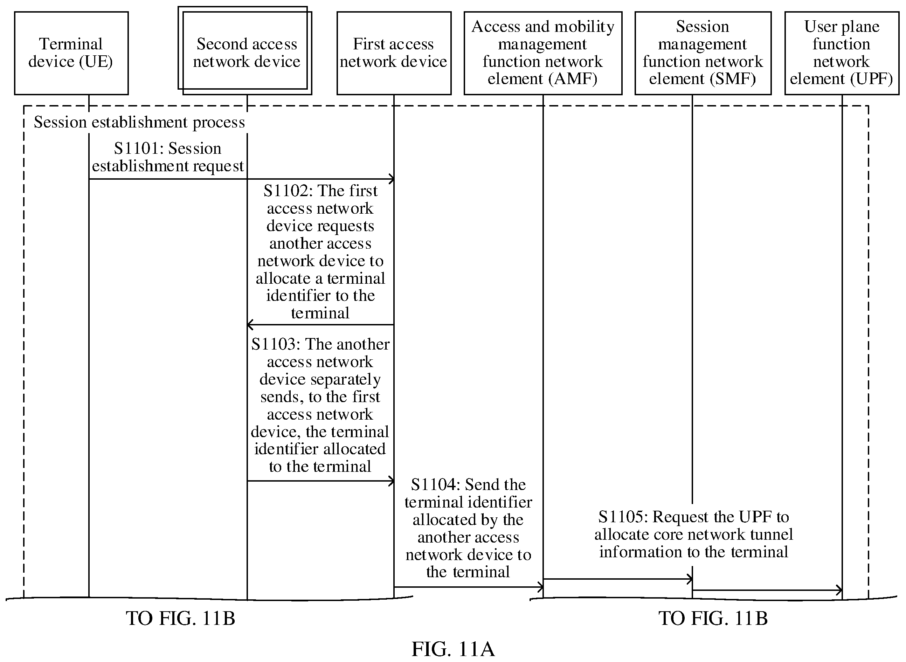

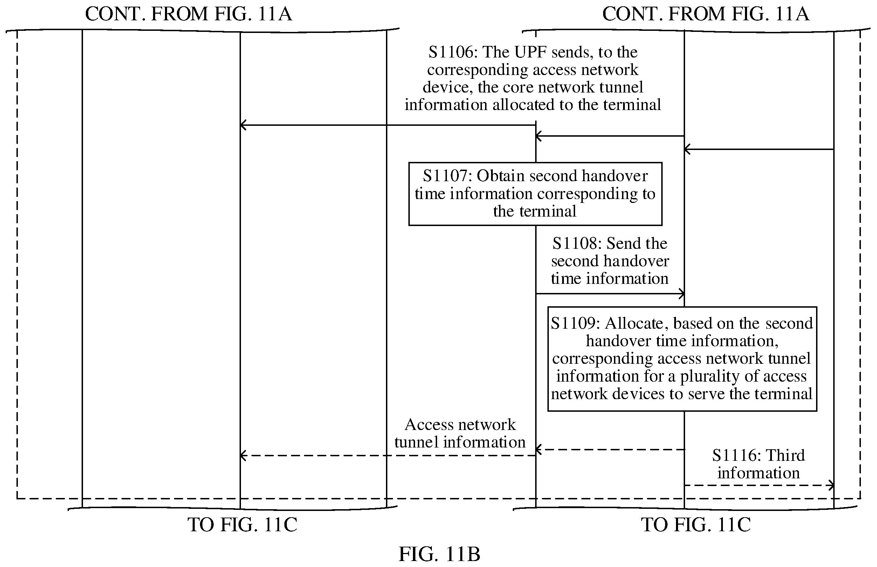

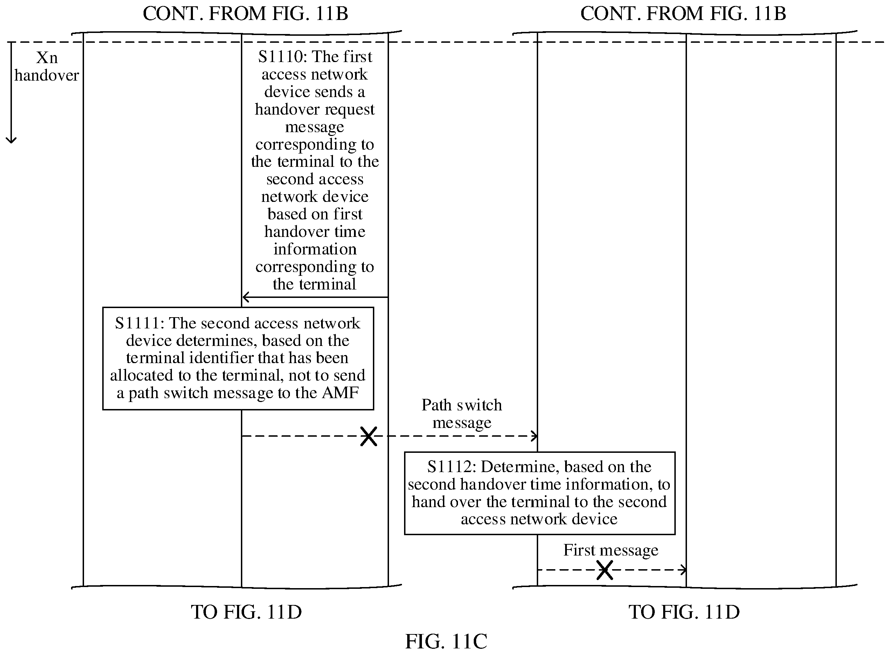

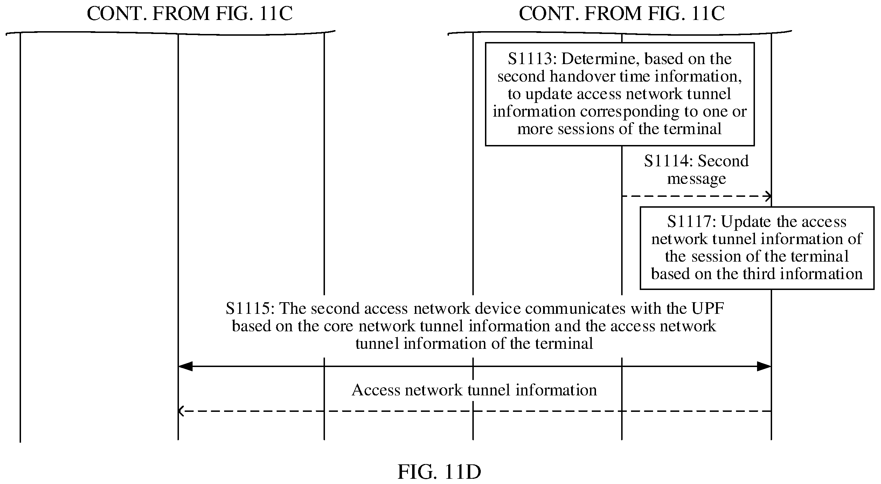

With reference to an interaction diagram shown in FIG. 8A to FIG. 8C, an application of a communication method provided in an embodiment of this application is described below by using an example in which a terminal identifier allocated by a second access network device to a terminal is sent to an AMF in advance in the foregoing manner 2, access network tunnel information for the second access network device to serve the terminal is allocated by an SMF, and the AMF sends second service time information to the SMF, so that the SMF can actively trigger execution of a related procedure of handing over the terminal to the second access network device. As shown in FIG. 11A to FIG. 11D, the communication method provided in this embodiment of this application includes the following steps.

S1101: The terminal sends a session establishment request to a first access network device.

Correspondingly, the first access network device receives the session establishment request.

S1102: The first access network device requests another access network device to allocate a terminal identifier to the terminal.

S1103: The first access network device receives the terminal identifier allocated by the another access network device to the terminal.

S1104: The first access network device sends, to the AMF, the terminal identifier allocated by the another access network device to the terminal.

S1105: Request a UPF to allocate core network tunnel information to the terminal.

S1106: The UPF sends, to the corresponding access network device, the core network tunnel information allocated to the terminal.

For detailed descriptions of steps S1101 to S1104, refer to related descriptions of steps S801 to S806.

S1107: The AMF obtains second handover time information corresponding to the terminal.

For detailed descriptions of how to obtain the second handover time information, refer to related descriptions in steps S601 to S604 in FIG. 6A and FIG. 6B or steps S401 and S404 in FIG. 4. Details are not described herein again.

S1108: The AMF sends the second handover time information to the SMF.

Correspondingly, the SMF receives the second handover time information sent by the AMF.

S1109: The SMF allocates, based on the second handover time information, corresponding access network tunnel information for a plurality of access network devices to serve the terminal.

In this embodiment of this application, the plurality of access network devices include an access network device corresponding to an access network device identifier included in the second handover time information. Optionally, the access network tunnel information allocated by the SMF to the terminal may be access network tunnel information at a session granularity, a UE-RAN granularity, or a RAN granularity. This is not limited in this specification.

For example, the access network tunnel information allocated by the SMF to the terminal is access network tunnel information at the session granularity. The SMF may allocate, based on the second handover time information shown in Table 1, access network tunnel information corresponding to the identifier of the access network device and an identifier of a session of the terminal, to obtain and store the seventh correspondence between data other than the data of the terminal identifier in Table 7, or obtain and store the second information shown in Table 9. It should be noted that the identifier of the session in the seventh correspondence and the second information that are stored in the SMF may be a PDU session ID or an SM context ID.

In a possible implementation, after the SMF allocates the corresponding access network tunnel information for the plurality of access network devices to serve the terminal, the SMF may separately send, to the corresponding access network devices through the AMF, the access network tunnel information allocated by the SMF for the access network devices to serve the terminal. Alternatively, the SMF may first send, to the first access network device, the corresponding access network tunnel information allocated for the plurality of access network devices to serve the terminal, and then the first access network device sends, to the corresponding access network devices through an inter-satellite link, the access network tunnel information allocated by the SMF for the access network devices to serve the terminal.

S1110: The first access network device determines, based on the first handover time information corresponding to the terminal, to hand over the terminal to the second access network device, and sends a handover request message corresponding to the terminal to the second access network device.

Correspondingly, the second access network device receives the handover request message.

S1111: The second access network device determines, based on the terminal identifier that has been allocated to the terminal, not to send a path switch message to the AMF.

S1112: The AMF determines, based on the second handover time information, to hand over the terminal to the second access network device.

For detailed descriptions of steps S1110 to S1112, refer to related descriptions of steps S807 to S809.

S1113: The SMF determines, based on the second handover time information, to update access network tunnel information corresponding to one or more sessions of the terminal.

For example, the access network tunnel information allocated by the SMF to the terminal is access network tunnel information at the session granularity. The SMF may determine, based on the second handover time information (referring to Table 1), that an identifier of a current target access network device of the terminal is the identifier of the second access network device; and determine, based on the locally stored seventh correspondence, first access network tunnel information corresponding to an identifier of a first session of the terminal and corresponding to the identifier of the second access network device. The SMF updates locally stored access network tunnel information corresponding to the first session to the first access network tunnel information. Alternatively, the SMF may update, based on the second information shown in Table 9, access network tunnel information corresponding to one or more sessions of the terminal.

S1114: The SMF sends a second message to the UPF.

For descriptions of the second message, refer to related descriptions in S406. Details are not described herein again.

S1115: The second access network device communicates with the UPF based on the core network tunnel information and the access network tunnel information of the terminal.

In some other possible implementations, the communication method provided in this application may alternatively include S1101 to S1113, S1116 and S1117, and S1115.

S1116: The SMF sends third information to the UPF, where the third information includes service time and access network tunnel information corresponding to the identifier of the session of the terminal.

Correspondingly, the UPF receives the third information.

For example, the third information may include data that is the same as the second information shown in Table 9. It should be noted that the identifier of the session in the third information sent by the SMF to the UPF may be a PDU session ID or an N4 session ID of the session.

S1117: The UPF updates access network tunnel information of the session of the terminal based on the third information.

Specifically, the UPF updates, based on the second information, access network tunnel information of a session whose service time corresponds to current time, and performs step S1115 after step S1117. For example, the UPF determines the service time corresponding to the current moment, and updates access network tunnel information of (one or more) sessions corresponding to the service time to access network tunnel information corresponding to the session and corresponding to the service time. For details, refer to related descriptions of updating, by the SMF, the access network tunnel information of the session of the terminal based on Table 9 in step S1013.

In a possible implementation, in step S1109, after allocating the corresponding access network tunnel information for the plurality of access network devices to serve the terminal, the SMF may alternatively not send, to the corresponding access network devices through the AMF, the access network tunnel information allocated by the SMF for the access network devices to serve the terminal. Instead, after step S1114 or step S1117, the UPF sends, to the corresponding access network devices, the access network tunnel information allocated by the SMF for the access network devices to serve the terminal.

In addition, this application further provides a communication apparatus, including units configured to perform any communication method in FIG. 4 to FIG. 11A to FIG. 11D.

This application further provides a communication apparatus, including a processor. The processor is configured to perform any communication method in FIG. 4 to FIG. 11A to FIG. 11D.

This application further provides a communication system, including an access and mobility management function network element, a first access network device, and a second access network device. The access and mobility management function network element is configured to perform steps performed by the access and mobility management function network element in any communication method in FIG. 4. The first access network device is configured to perform steps performed by the first access network device in any communication method in FIG. 4. The second access network device is configured to perform steps performed by the first access network device in any communication method in FIG. 4.

This application further provides a communication system, including an access and mobility management function network element, a first access network device, and a second access network device. The access and mobility management function network element is configured to perform steps performed by the access and mobility management function network element in any communication method in FIG. 6A and FIG. 6B. The first access network device is configured to perform steps performed by the first access network device in any communication method in FIG. 6A and FIG. 6B. The second access network device is configured to perform steps performed by the first access network device in any communication method in FIG. 6A and FIG. 6B.

This application further provides a communication system, including an access and mobility management function network element, a session management function network element, a first access network device, and a second access network device. The access and mobility management function network element is configured to perform steps performed by the access and mobility management function network element in any communication method in FIG. 7A to FIG. 7C. The session management function network element is configured to perform steps performed by the session management function network element in any communication method in FIG. 7A to FIG. 7C. The first access network device is configured to perform steps performed by the first access network device in any communication method in FIG. 7A to FIG. 7C. The second access network device is configured to perform steps performed by the first access network device in any communication method in FIG. 7A to FIG. 7C.

This application further provides a communication system, including an access and mobility management function network element, a session management function network element, a first access network device, and a second access network device. The access and mobility management function network element is configured to perform steps performed by the access and mobility management function network element in any communication method in FIG. 8A to FIG. 8C. The session management function network element is configured to perform steps performed by the session management function network element in any communication method in FIG. 8A to FIG. 8C. The first access network device is configured to perform steps performed by the first access network device in any communication method in FIG. 8A to FIG. 8C. The second access network device is configured to perform steps performed by the first access network device in any communication method in FIG. 8A to FIG. 8C.

This application further provides a communication system, including an access and mobility management function network element, a session management function network element, a first access network device, and a second access network device. The access and mobility management function network element is configured to perform steps performed by the access and mobility management function network element in any communication method in FIG. 9A to FIG. 9C. The session management function network element is configured to perform steps performed by the session management function network element in any communication method in FIG. 9A to FIG. 9C. The first access network device is configured to perform steps performed by the first access network device in any communication method in FIG. 9A to FIG. 9C. The second access network device is configured to perform steps performed by the first access network device in any communication method in FIG. 9A to FIG. 9C.

This application further provides a communication system, including an access and mobility management function network element, a session management function network element, a user plane function network element, a first access network device, and a second access network device. The access and mobility management function network element is configured to perform steps performed by the access and mobility management function network element in any communication method in FIG. 10A to FIG. 10D. The session management function network element is configured to perform steps performed by the session management function network element in any communication method in FIG. 10A to FIG. 10D. The user plane function network element is configured to perform steps performed by the user plane function network element in any communication method in FIG. 10A to FIG. 10D. The first access network device is configured to perform steps performed by the first access network device in any communication method in FIG. 10A to FIG. 10D. The second access network device is configured to perform steps performed by the first access network device in any communication method in FIG. 7A to FIG. 7C.

This application further provides a communication system, including an access and mobility management function network element, a session management function network element, a user plane function network element, a first access network device, and a second access network device. The access and mobility management function network element is configured to perform steps performed by the access and mobility management function network element in any communication method in FIG. 11A to FIG. 11D. The session management function network element is configured to perform steps performed by the session management function network element in any communication method in FIG. 11A to FIG. 11D. The user plane function network element is configured to perform steps performed by the user plane function network element in any communication method in FIG. 11A to FIG. 11D. The first access network device is configured to perform steps performed by the first access network device in any communication method in FIG. 11A to FIG. 11D. The second access network device is configured to perform steps performed by the first access network device in any communication method in FIG. 11A to FIG. 11D.

In the several embodiments provided in this application, it should be understood that the disclosed system, apparatus, and method may be implemented in other manners.

This application further provides a computer program. The computer program is used to implement operations and/or processing performed by the AMF shown in FIG. 4 to FIG. 11A to FIG. 11D in the communication method provided in this application.

This application further provides a computer program. The computer program is used to implement operations and/or processing performed by the SMF shown in FIG. 4 to FIG. 11A to FIG. 11D in the communication method provided in this application.

This application further provides a computer program. The computer program is used to implement operations and/or processing performed by the UPF shown in FIG. 4 to FIG. 11A to FIG. 11D in the communication method provided in this application.

This application further provides a computer program. The computer program is used to implement operations and/or processing performed by the first access network device or the second access network device shown in FIG. 4 to FIG. 11A to FIG. 11D in the communication method provided in this application.

This application further provides a computer-readable storage medium. The computer-readable storage medium stores computer code. When the computer code is run on a computer, the computer is enabled to perform operations and/or processing performed by the AMF shown in FIG. 4 to FIG. 11A to FIG. 11D in the communication method provided in this application.

This application further provides a computer-readable storage medium. The computer-readable storage medium stores computer code. When the computer code is run on a computer, the computer is enabled to perform operations and/or processing performed by the SMF shown in FIG. 4 to FIG. 11A to FIG. 11D in the communication method provided in this application.

This application further provides a computer-readable storage medium. The computer-readable storage medium stores computer code. When the computer code is run on a computer, the computer is enabled to perform operations and/or processing performed by the UPF shown in FIG. 4 to FIG. 11A to FIG. 11D in the communication method provided in this application.

This application further provides a computer-readable storage medium. The computer-readable storage medium stores computer code. When the computer code is run on a computer, the computer is enabled to perform operations and/or processing performed by the first access network device or the second access network device shown in FIG. 4 to FIG. 11A to FIG. 11D in the communication method provided in this application.

This application further provides a computer program product. The computer program product includes computer code or a computer program. When the computer code or the computer program is run on a computer, operations and/or processing performed by the AMF shown in FIG. 4 to FIG. 11A to FIG. 11D in the communication method provided in this application are/is performed.

This application further provides a computer program product. The computer program product includes computer code or a computer program. When the computer code or the computer program is run on a computer, operations and/or processing performed by the SMF shown in FIG. 4 to FIG. 11A to FIG. 11D in the communication method provided in this application are/is performed.

This application further provides a computer program product. The computer program product includes computer code or a computer program. When the computer code or the computer program is run on a computer, operations and/or processing performed by the UPF shown in FIG. 4 to FIG. 11A to FIG. 11D in the communication method provided in this application are/is performed.

This application further provides a computer program product. The computer program product includes computer code or a computer program. When the computer code or the computer program is run on a computer, operations and/or processing performed by the first access network device or the second access network device shown in FIG. 4 to FIG. 11A to FIG. 11D in the communication method provided in this application are/is performed.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a second access network device, wherein the method comprises:
receiving a handover request message from a first access network device, wherein the handover request message is used to request to hand over a terminal to the second access network device; and
communicating with a user plane function network element based on the handover request message and core network tunnel information that is of the terminal and that has been stored by the second access network device.

2. The method according to claim 1, wherein before the receiving the handover request message from the first access network device, the method further comprises:
receiving the core network tunnel information of the terminal, and storing the core network tunnel information.

3. The method according to claim 1, wherein before the receiving the handover request message from the first access network device, the method further comprises: receiving the core network tunnel information of the terminal, and storing the core network tunnel information.

4. The method according to claim 3, wherein the receiving the core network tunnel information of the terminal comprises:
receiving the core network tunnel information of the terminal from the first access network device, wherein the core network tunnel information of the terminal is core network tunnel information allocated to the terminal by the user plane function network element that is requested by the first access network device, the core network tunnel information is used to establish a tunnel between the second access network device and the user plane function network element, and the tunnel is used to carry data of the terminal; or
the receiving the core network tunnel information of the terminal comprises: receiving the core network tunnel information of the terminal from a session management function network element, wherein the core network tunnel information of the terminal is allocated by the user plane function network element for establishment of a tunnel for the terminal between the second access network device and the user plane function network element when the terminal previously accesses the second access network device.

5. The method according to claim 1 or 2, wherein after the receiving the handover request message from the first access network device, the method further comprises:
sending a path switch message to an access and mobility management function network element if the second access network device does not store the core network tunnel information of the terminal or the second access network device does not allocate access network tunnel information to the terminal, wherein the path switch message is used to switch a path corresponding to the terminal.

6. The method according to claim 1 or 2, wherein after the receiving the handover request message from the first access network device, the method further comprises:
skipping sending a path switch message to an access and mobility management function network element if the second access network device has stored the core network tunnel information of the terminal and the second access network device has allocated access network tunnel information to the terminal, wherein the path switch message is used to switch a path corresponding to the terminal.

7. The method according to any one of claims 1 to 6, wherein the method further comprises:
allocating the access network tunnel information to the terminal; and
sending the access network tunnel information to the access and mobility management function network element.

8. The method according to claim 1 or 2, wherein before the receiving the handover request message from the first access network device, the method further comprises:
receiving a first request, wherein the first request is used to request to allocate access network tunnel information to the terminal;
allocating the access network tunnel information to the terminal based on the first request; and
sending a first response, wherein the first response carries the access network tunnel information.

9. The method according to claim 8, wherein the first response further carries an identifier of the second access network device.

10. The method according to claim 8 or 9, wherein the first request comprises identification information of a first session of the terminal, and the first request is specifically used to request to allocate the access network tunnel information to the first session.

11. The method according to any one of claims 8 to 10, wherein the first request is from the first access network device, and the sending the first response comprises:
sending the first response to the first access network device, wherein the first response comprises the access network tunnel information and first indication information, and the first indication information indicates the first access network device to send the access network tunnel information to an access and mobility management function network element.

12. The method according to any one of claims 8 to 10, wherein the first request is from the access and mobility management function network element, and the sending the first response comprises: sending the first response to the access and mobility management function network element.

13. The method according to claim 10, wherein the core network tunnel information corresponds to the first session of the terminal.

14. The method according to claim 1 or 2, wherein before the receiving the handover request message from the first access network device, the method further comprises:
receiving a second request from the first access network device, wherein the second request is used to request the second access network device to allocate a terminal identifier to the terminal; and
allocating the terminal identifier to the terminal based on the second request, and sending a second response to the first access network device, wherein the second response carries the terminal identifier.

15. The method according to claim 14, wherein the second response further carries second indication information, and the second indication information indicates the first access network device to send the terminal identifier to the access and mobility management function network element.

16. The method according to any one of claims 1 to 15, wherein the terminal is a stationary terminal.

17. The method according to claim 1 or 2, wherein after the receiving the handover request message from the first access network device, the method further comprises:
receiving first access network tunnel information from a session management network element, wherein the first access network tunnel information is allocated by the session management network element for establishment of a tunnel for the terminal between the second access network device and the UPF.

18. A communication method, applied to a first access network device, wherein the method comprises:
determining, based on first handover time information of a terminal, to hand over the terminal to a second access network device, wherein the first handover time information comprises time for serving the terminal by at least one access network device, and the at least one access network device comprises the second access network device; and
sending a handover request message to the second access network device, wherein the handover request message is used to request to hand over the terminal to the second access network device.

19. The method according to claim 18, wherein the method further comprises:
determining the first handover time information based on access time for separately accessing the at least one access network device by the terminal in a satellite operation period; or
determining the first handover time information based on a location of the terminal and ephemeris information; or
receiving the first handover time information from an access and mobility management function network element.

20. The method according to claim 18 or 19, wherein
a satellite corresponding to the at least one access network device and a satellite corresponding to the first access network device belong to a same constellation; or
a satellite corresponding to the at least one access network device and a satellite corresponding to the first access network device have a direct inter-satellite link connection and/or an indirect inter-satellite link connection; or
a coverage area of each of the at least one access network device comprises the location of the terminal.

21. The method according to any one of claims 18 to 20, wherein before the sending the handover request message to the second access network device, the method further comprises:
requesting the second access network device to allocate access network tunnel information to the terminal;
receiving the access network tunnel information from the second access network device; and
sending the access network tunnel information to the access and mobility management function network element.

22. The method according to claim 21, wherein the requesting the second access network device to allocate the access network tunnel information to the terminal comprises:
requesting the second access network device to allocate the access network tunnel information to a first session of the terminal.

23. The method according to claim 21, wherein the requesting the second access network device to allocate the access network tunnel information to the first session of the terminal comprises:
in a process in which the terminal establishes the first session through the first access network device, requesting the second access network device to allocate the access network tunnel information to the first session.

24. The method according to any one of claims 18 to 20, wherein before the sending the handover request message to the second access network device, the method further comprises:
requesting another access network device to allocate a terminal identifier to the terminal, wherein the another access network device comprises one or more access network devices other than the first access network device in the at least one access network device; receiving the terminal identifier allocated by the another access network device to the terminal; and sending, to the access and mobility management function network element, the terminal identifier allocated by the another access network device to the terminal.

25. The method according to claim 24, wherein the requesting the at least one access network device to allocate the terminal identifier to the terminal comprises: in an establishment process in which the terminal establishes a first session through the first access network device, requesting the at least one access network device to allocate the terminal identifier to the terminal.

26. The method according to any one of claims 18 to 20, wherein before the sending the handover request message to the second access network device, the method further comprises:
requesting a user plane function network element to allocate core network tunnel information to the terminal;
receiving first core network tunnel information from the user plane function network element, wherein the first core network tunnel information corresponds to the second access network device; and
sending the first core network tunnel information to the second access network device.

27. The method according to any one of claims 18 to 26, wherein the terminal is a stationary terminal.

28. The method according to claim 19, wherein before the determining, based on the first handover time information of the terminal, to hand over the terminal to the second access network device, the method further comprises:
determining, by the first access network device, whether the terminal is a stationary terminal, and determining, based on the first handover time information of the terminal, to hand over the terminal to the second access network device.

29. The method according to claim 28, wherein the first access network device obtains (or determines) the first handover time information when determining that the terminal is a stationary terminal.

30. A communication method, wherein the method is applied to an access and mobility management function network element, and the method comprises:
determining, based on second handover time information of a terminal, to hand over the terminal from a first access network device to a second access network device, wherein the second handover time information comprises time for serving the terminal by at least one access network device, and the at least one access network device comprises the second access network device; and
sending a first message to a session management function network element, wherein the first message is used to update access network tunnel information of the terminal.

31. The method according to claim 30, wherein the first message comprises one or more of the following:
access network tunnel information allocated by the second access network device to the terminal;
an identifier of the second access network device; and
an identifier of a first session of the terminal.

32. The method according to claim 31, wherein when the first message comprises the identifier of the first session, the first message is specifically used to update access network tunnel information of the first session.

33. The method according to any one of claims 30 to 32, wherein the method further comprises:
determining, by the access and mobility management function network element, the second handover time information based on access time for separately accessing the at least one access network device by the terminal in a satellite operation period; or
determining, by the access and mobility management function network element, the second handover time information based on a location of the terminal and ephemeris information.

34. The method according to any one of claims 30 to 33, wherein the method further comprises:
receiving the access network tunnel information allocated by the second access network device to the terminal; and sending, to the session management function network element, the access network tunnel information allocated by the second access network device to the terminal.

35. The method according to claim 34, wherein the access network tunnel information comprises aggregation access network tunnel information.

36. The method according to any one of claims 30 to 35, wherein before the determining, based on the second handover time information of the terminal, to hand over the terminal from the first access network device to the second access network device, the method further comprises:
receiving the access network tunnel information allocated by the second access network device to the terminal.

37. The method according to any one of claims 30 to 36, wherein a coverage area of the at least one access network device comprises the location of the terminal.

38. The method according to any one of claims 30 to 37, wherein the terminal is a stationary terminal.

39. The method according to any one of claims 30 to 38, wherein the determining, based on the second handover time information of the terminal, to hand over the terminal to the second access network device specifically comprises:
when the terminal is a stationary terminal, determining, based on the second handover time information of the terminal, to hand over the terminal to the second access network device.

40. A communication method, applied to a session management function network element, wherein the method comprises:
receiving a first message from an access and mobility management function network element, wherein the first message is used to update access network tunnel information of a terminal, and the first message comprises an identifier of a second access network device;
allocating access network tunnel information to the terminal based on the identifier of the second access network device; and
sending the allocated access network tunnel information to a user plane function network element, wherein the allocated access network tunnel information is used by the user plane function network element to update the access network tunnel information of the terminal.

41. The method according to claim 40, wherein the method further comprises:
sending core network tunnel information of the terminal to the second access network device.

42. The method according to claim 40 or 41, wherein the method further comprises:
sending the allocated access network tunnel information to the second access network device.

43. A communication method, applied to a session management function network element, wherein the method comprises:
receiving access network tunnel information from an access and mobility management function network element that is allocated by a second access network device to a terminal;
receiving a first message from the access and mobility management function network element, wherein the first message is used to update access network tunnel information of the terminal, and the first message comprises an identifier of the second access network device; and
sending, to a user plane function network element based on the identifier of the second access network device, the access network tunnel information allocated by the second access network device to the terminal, wherein the access network tunnel information is used by the user plane function network element to update the access network tunnel information of the terminal.

44. The method according to claim 43, before the receiving the first message from the access and mobility management function network element, further comprising:
sending core network tunnel information of the terminal to the second access network device.

45. A communication system, wherein the system comprises a first access network device, a second access network device, and an access and mobility management function network element;
the second access network device is configured to perform the method according to any one of claims 1 to 17;
the first access network device is configured to perform the method according to any one of claims 18 to 29; and
the access and mobility management function network element is configured to perform the method according to any one of claims 30 to 39.

46. The system according to claim 45, wherein the system further comprises a session management function network element; and
the session management function network element is configured to perform the method according to any one of claims 40 to 42; or
the session management function network element is configured to perform the method according to claim 43 or 44.

47. A communication method, applied to a session management function network element, wherein the method comprises:
receiving second handover time information from an access and mobility management function network element, wherein the second handover time information comprises access time for at least one access network device corresponding to a terminal;
determining, based on the second handover time information, to hand over the terminal to a second access network device; and
requesting a user plane function network element to update access network tunnel information of the terminal to access network tunnel information for the second access network device to serve the terminal.

48. The method according to claim 47, wherein before the determining, based on the second handover time information, to hand over the terminal to the second access network device, the method further comprises:
receiving access network tunnel information from the access and mobility management function network element that is allocated by another access network device to the terminal, wherein the another access network device comprises one or more access network devices other than a first access network device in the at least one access network device.

49. The method according to claim 47 or 48, wherein the access network tunnel information for the second access network device to serve the terminal comprises aggregation access network tunnel information allocated by the second access network device to the terminal.

50. The method according to claim 47 or 48, wherein the access network tunnel information for the second access network device to serve the terminal comprises access network tunnel information allocated by the second access network device to a first session of the terminal.

51. The method according to any one of claims 47 to 50, wherein the access network tunnel information for the second access network device to serve the terminal is allocated by the session management function network element.

52. The method according to claim 47, wherein after the determining, based on the second handover time information, to hand over the terminal to the second access network device, the method further comprises:
sending the access network tunnel information to the second access network device and/or the access and mobility management function network element.

53. A communication method, wherein the method is applied to an access and mobility management function network element, and the method comprises:
determining second handover time information of a terminal, wherein the second handover time information comprises access time for at least one access network device corresponding to the terminal; and
sending the second handover time information to a session management function network element.

54. The method according to claim 53, wherein the method further comprises:
obtaining access network tunnel information allocated by another access network device to the terminal, wherein the another access network device comprises one or more access network devices other than the first access network device in the at least one access network device; and
sending, to the session management function network element, the access network tunnel information allocated by the another access network device to the terminal.

55. A communication system, wherein the system comprises an access and mobility management function network element and a session management function network element, the access and mobility management function network element is configured to perform the method according to claim 53 or 54, and the session management function network element is configured to perform the method according to any one of claims 47 to 52.

56. The system according to claim 55, wherein the system further comprises a first access network device and a second access network device, the first access network device is configured to perform the method according to any one of claims 18 to 29, and the second access network device is configured to perform the method according to any one of claims 1 to 17.

57. A communication method, applied to a session management function network element, wherein the method comprises:
receiving second information from an access and mobility management function network element, wherein the second information comprises access time corresponding to at least one access network device accessed by a terminal and access network tunnel information allocated by the at least one access network device to the terminal;
determining, based on the second information, to hand over the terminal to a second access network device; and
requesting a user plane function network element to update access network tunnel information of the terminal to access network tunnel information for the second access network device to serve the terminal.

58. The method according to claim 57, wherein the second information comprises second handover time information and access network tunnel information allocated by another access network device to the terminal, and the second handover time information comprises the access time for the at least one access network device corresponding to the terminal.

59. The method according to claim 57, wherein the second information comprises a correspondence between an identifier of a session of the terminal, access time for accessing a corresponding access network device by the terminal, and access network tunnel information.

60. A communication method, wherein the method is applied to an access and mobility management function network element, and the method comprises:
determining second handover time information of a terminal, and obtaining access network tunnel information allocated by another access network device to the terminal, wherein the another access network device comprises one or more access network devices other than a first access network device in the at least one access network device; and
sending second information to a session management function network element based on the second handover time information and the access network tunnel information allocated by the another access network device to the terminal, wherein the second information comprises access time corresponding to the at least one access network device accessed by the terminal and access network tunnel information allocated by the at least one access network device to the terminal.

61. The method according to claim 60, wherein the second information comprises the second handover time information and the access network tunnel information allocated by the another access network device to the terminal, and the second handover time information comprises the access time for the at least one access network device corresponding to the terminal.

62. The method according to claim 60, wherein the second information comprises a correspondence between an identifier of a session of the terminal, access time for accessing a corresponding access network device by the terminal, and access network tunnel information.

63. A communication apparatus, comprising a unit configured to perform the method according to any one of claims 1 to 44, claims 47 to 54, or claims 57 to 62.

64. A communication apparatus, comprising a processor, wherein the processor is configured to read and execute a computer program stored in a memory, to implement the method according to any one of claims 1 to 44, claims 47 to 54, or claims 57 to 62.

65. A computer-readable storage medium, wherein the computer-readable storage medium is configured to store a computer program, and when the computer program is executed, the method according to any one of claims 1 to 44, claims 47 to 54, or claims 57 to 62 is performed.

66. A computer program, wherein when the computer program is executed, the method according to any one of claims 1 to 44, claims 47 to 54, or claims 57 to 62 is performed.
